(19) Europäisches Patentamt

European Patent Office

Office européen des brevets

(11) **EP 1 070 981 A1**

(12) **EUROPEAN PATENT APPLICATION**
published in accordance with Art. 158(3) EPC

(43) Date of publication:
24.01.2001 Bulletin 2001/04

(51) Int. Cl.[7]: **G02F 1/133**, G02F 1/1337

(21) Application number: 99945695.7

(86) International application number:
PCT/JP99/01863

(22) Date of filing: 07.04.1999

(87) International publication number:
WO 99/53366 (21.10.1999 Gazette 1999/42)

(84) Designated Contracting States:
DE FR GB

(30) Priority: 08.04.1998 JP 9579198
08.04.1998 JP 9579298
09.06.1998 JP 16072698

(71) Applicant:
MATSUSHITA ELECTRIC INDUSTRIAL CO., LTD.
Kadoma-shi, Osaka 571-8501 (JP)

(72) Inventors:
• ISHIHARA, Shoichi
Katano-shi Osaka 576-0034 (JP)
• HATTORI, Katsuji
Takarazuka-shi Hyogo 665-0002 (JP)

(74) Representative:
Dempster, Benjamin John Naftel
Withers & Rogers,
Goldings House,
2 Hays Lane
London SE1 2HW (GB)

(54) **LIQUID CRYSTAL DISPLAY DEVICE AND SPLAY-BENT TRANSITION TIME EVALUATING METHOD**

(57)    An OCB mode liquid crystal display element the liquid crystal material of which is easily bend-aligned by the application of a voltage of around several volts, and has a high transition speed. The liquid crystal display element including two substrates (1, 8), a liquid crystal material interposed between the substrates and exhibiting parallel homogeneous alignment, and a negative phase compensating plate is characterized in that the liquid crystal material has a feature expressed by formulae: $K11 \leq 10pN$, $K11/\Delta\varepsilon 1.0pN$, $K11.K33 \leq 130pN$, or $K11/K33 \leq 1.0$. The liquid crystal material contains biphenyl liquid crystal, pyrimidine liquid crystal, or dioxane liquid crystal.

FIG. 1

**Description**

**TECHNICAL FIELD**

The present invention relates to a high-speed response liquid crystal display device having wide viewing angles. More particularly, the invention relates to an optically compensated bend mode (OCB mode, also referred to as optically self-compensated birefringence mode) cell, and relates to a liquid crystal display device in which a splay-to-bend transition easily occurs, and a method of producing the device. The invention further relates to a method and apparatus for evaluating an easiness of a transition from splay alignment to bend alignment.

**BACKGROUND ART**

In recent years, with the advancement of multimedia technology; image information has increasingly become important. Also, by the evolution of recent liquid crystal technology; liquid crystal displays having high contrast and wide viewing angles have been developed and put into practical use.

However, in the current state of the art, the liquid crystal display devices have drawbacks that when displaying moving pictures, the displayed pictures are blurred. In this regard, liquid crystal displays are inferior to CRTs

To date, many attempts have been made to increase the response speed of liquid crystal display devices. For example, dynamic behavior of liquid crystal molecules in TN liquid crystal display devices has been described in the literature, such as in E. Jakeman and E. P. Raynes, Phys. Lett., 39A, 69 (1972), D. W. Berreman, Appl., Phys. Lett., 25, 12, (1974), and C. Z. VanDoorn, J. Appl. Phys., 46, 3738 (1975). Regarding the response time, the following expressions are presented in F. Nakano, H. Kawakami, H. Morishita, and M. Sato, Jpn. J. Appl. Phys., 19, 659 (1980).

$$\tau_{rise} = 4\pi\eta d2/[\varepsilon o\Delta\varepsilon(V^2 - Vth^2)]$$

$$\tau_{decay} = (\eta d^2/\pi^2 K)\{(V/Vth) - 1\}^{3/10}$$

In the above expressions, $\eta$ is Miesowicz viscosity coefficient, d is a cell gap, and K = K11+(K33-2K22)/4.

Basically, it is possible to improve response speed by reducing the thickness of a liquid crystal layer and correspondingly increasing the intensity of the electric field. However, this requires the liquid crystal material to have a larger birefringence $\Delta n$, which causes undesirable side effects such as an increase in viscosity, a decrease in resistivity; an increase in wavelength variation $\Delta n$, and a decrease in reliability:

Although $\Delta n$ and $\Delta \varepsilon$ are determined by molecular structure, elastic coefficients are determined by the intermolecular forces and therefore dependent on molecular configuration as well as the molecular structure. It is known that K33/K11 is dependent on the ratio l/W, the ratio of the length l to the width W of a molecule (B. W. Van der Meer, F. Postma, A. J. Decker and W. H. de Jev, Mol. Phys., 45, 1227 (1982); F. Leenhouts, A. J. Decker and W. H. de Jev, Phys. Lett., 72A, 155 (1979)). Further, it is reported by Mokoo et al. that viscosity coefficients correlates with a glass transition temperature $T_g$ of a liquid crystal material (Akio Mukoo, Hidetoshi Abe, Teruo Kitamura, Norimasa Kamesawa, Mikio Satoh and Kazuhisa Toriyama, "TN ekisho no tennionndo to ekisho no sotennionndo [Response Speed of TN Liquid Crystal and Phase Transition Temperature of Liquid Crystal]" the 7th Japanese Liquid Crystal Conference, 4U20, pp. 84-85, 1981), and Schadt et al. proposes the following experimental expression (Hp. Schadt and H. R. Zeller, Phys. Rev. A26, 2940 (1982)):

$$\log\gamma_1 \propto 1/T - (T_g - 50)$$

Wu et al. gives a summary of fast response liquid crystal display systems (C. S. Wu and S. T. Wu, SPIE, 1665, 250 (1992)). Some of the techniques are listed below.

(1) Application of restoring force
Dual-frequency addressing: Using a Liquid crystal material such that the sign of a dielectric anisotropy $\Delta\varepsilon$ thereof is reversed according to a driving frequency a torque is applied to the liquid crystal material by an electric field at rising and falling. It is reported that this technique achieved a response time of 300 μsec. However, this technique is not applicable to active driving. (M. Schadt, "Low-Frequency Dielectric Relaxations in Nematics and Dual-Frequency Addressing of Field Effects", Mol. Cryst. Liq. Cryst., 1982, Vol. 89, pp. 77-92)

(2) Application of perpendicular electric fields: (A. Sugimura and T. Kawamura, Jpn. J. Appl. Phys., 24, 905 (1985)) An additional electric field perpendicular to the substrate surface is applied at a falling edge. With this method, the electric field is liable to be nonuniform, making the orientation control difficult.

(3) Driving in a state of a tilt of the director being large

Pi-cell (πcell), OCB (Japanese Unexamined Patent Publication No. 7-84254): A tilt of the directors is made large with respect to a substrate surface, and thereby a large elastic force acts on the liquid crystal, leading to a fast response.

(4) Application of bias voltage (P. D. Derezin, L. M. Blinov, I. N. Kompanets and V. V. Nikitin, Soy. J. Quantumn Electron, 3, 78 (1973); J. L. Fergason, Conf. Record, Biennial Display Research, 177 (1980)): A high driving voltage is required, and the response at the falling egde is not particularly fast.

Use of relaxation process: An applied voltage at the rising edge is made 0 V, and voltage is applied again when the transmission light intensity reaches a predetermined level. A fast response of 1 msec. or less is achieved. (S. T. Wu and C. S. Wu, J. Appl. Phys., 65, 527 (1988)). Further, it is proposed that, by providing a reset process in which high voltage pulses are constantly applied prior to the relaxation process, fast response is achieved (Sawayama, Kimura, Ishii, The 21st Liquid Crystal Conference Proceedings, 152 (1995)).

(5) Improving a driving method (H. Okumura et al., "A New Flicker-Reduction Drive Method for High Resolution LCTVs", DID '91 Digest, pp. 551-554 (1991); Naohiko Okumura, Hisao Fujiwara, "High Speed Response Driving Method for TFT Liquid Crystal Display", Toshiba Review 1993, Vol. 48, No. 8, PP. 595-598)): Using a frame memory, differences at alternative frames are obtained and a driving voltage is thereby compensated so that altered portions are emphasized.

(6) Use of ferroelectric liquid crystal display device or anti-ferroelectric liquid crystal display device: These types of display systems can theoretically achieve a fast response, but have a limited operating temperature range and problems associated with such as temperature dependence and impact resistance.

Each of the techniques above is reasonably effective. However, only a few of them can achieve response characteristics required for moving picture display. Specifically, in the NTSC system currently used, liquid crystal needs to respond within one frame period (18.7 msec.). Currently available liquid crystal displays have sufficiently fast response characteristics for binary black and white display, but, for multi-gray scale display, they only show at best a response time of 100 msec. or slower. In particular, the response between gray scale levels is extremely slow in a low driving voltage range.

Among the currently available liquid crystal displays, OCB-mode liquid crystal display devices, ferroelectric liquid crystal display devices and anti-ferroelectric liquid crystal display devices are considered promising as liquid crystal displays capable of achieving a fast response characteristic suitable for moving picture display.

However, both ferroelectric and antiferroelectric liquid crystal display devices have a layered structure, and have many problems in practical use, such as a low impact resistance, a narrow operating temperature range, and a strong dependence of characteristics on temperature. In practice, OCB-mode liquid crystal display devices employing nematic liquid crystal are considered the most promising as a liquid crystal display device suitable for moving picture display.

The OCB-mode liquid crystal display device is a display system whose high speed characteristic is disclosed by P. J. Bos in 1983. Later, it was suggested that by using a retardation film plate, the OCB mode liquid crystal display device can achieve both wide viewing angle and fast response, and since then, the research and development thereof have flourished.

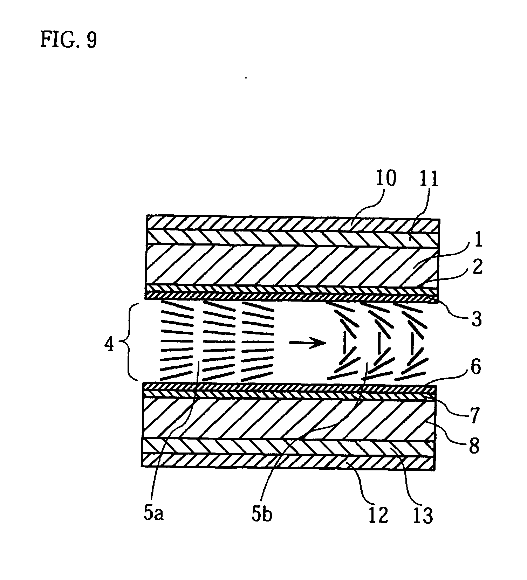

The OCB mode liquid crystal display device has, as shown in Fig. 9, a glass substrate 1 provided with a transparent electrode 2, a glass substrate 8 provided with a transparent electrode 7, and a liquid crystal layer 4 disposed between the substrates 1 and 8. Alignment layers 3 and 6 are provided over the electrodes 2 and 7, respectively and the alignment layers 3 and 6 have been subjected to an alignment treatment such that liquid crystal molecules are unidirectionally aligned in parallel directions. Outside the substrates 1 and 8, polarizing plates 10 and 12 are respectively provided in a crossed Nicols relation. Further, retardation plates 11 and 12 for imparting a negative retardance to a transmitted light are interposed between the polarizing plate 10 and the substrate 1 and between the polarizing plate 12 and the substrate 8, respectively. The liquid crystal cell of such a construction has such features that bend alignment or bend alignment including twist alignment is induced in the central region of the cell, and the retardation plates 11 and 12 are provided to attain low voltage driving and wider viewing angle. The liquid crystal cell can exhibit fast response even in a halftone display range, and has wide viewing angle characteristics.

In the OCB mode, as illustrated in Fig. 9, an initialization is performed in which the cell is switched from a splay alignment state 5a to a bend alignment state 5b by applying a voltage of about 30 V thereto. After the initialization, the cell is driven at a voltage of about several volts to perform display operation. Therefore, the initialization is indispensable for the OCB mode.

In the current state of the art, however, the OCB-mode liquid crystal display device requires a time in the order of minutes in the case where the initialization is performed with a voltage of several volts. This has been one of the problems associated with the OCB mode. Accordingly, there is a need for a liquid crystal display device with a fast transition speed, the device in which bend alignment can be easily formed by applying a voltage of about several volts.

Meanwhile, in the process of the research and development of the OCB-mode liquid crystal display device, it is necessary to measure the transition time in order to select liquid crystal materials. By the measurement of the transition time, ranking of candidate liquid crystal materials in the selection is made possible. Conventionally, the transition time has been defined as follows: a time required for the entire region of the electrode area to be transformed from splay alignment to bend alignment is obtained by visual observation, and the time thus obtained is defined as the transition time. More specifically, the transition time has been defined in the following manner. Polarizing plates are provided on opposite outer sides of a liquid crystal cell to be measured so that the axes of polarization are perpendicular to each other, and a voltage is applied to the liquid crystal cell. Color change (tone change in achromatic colors such as black and gray) in the liquid crystal cell is visually observed, and a time from the start of voltage application to a point at which it is confirmed that bend alignment has been reached is defined as the transition time.

However, since the evaluation method as described above is based on visual observation by a human, it is inevitable that measured transition times tend to differ depending on the individuals, thus causing a large variation. For this reason, the above-described method is poor in reproducibility and not suitable for automatic measurement. In particular, in the transition from splay alignment to bend alignment, most of the liquid crystal molecules in the liquid crystal cell are raised nearly perpendicular to the substrate, and therefore under crossed Nicols, the color change appears as a tone change of such achromatic colors as black and gray, which makes it difficult to establish the time point at which the entire region of the electrode area enters bend alignment. This makes the evaluation even more difficult.

It is noted for reference that, where the evaluation method based on visual observation is employed, the variation in the measurement can be reduced as a whole by performing the evaluation on a multiplicity of samples and variably setting various parameters such as tilt angle and temperature which influence the alignment transition. However, such an approach requires a greater number of samples and a greater number of measurement steps for the evaluation, thereby necessitating a much longer time for the evaluation.

## DISCLOSURE OF THE INVENTION

In view of the foregoing and other problems in prior art, it is an object of the present invention to provide a parallel alignment liquid crystal display device in which a fast transition from splay alignment to bend alignment is achieved at a low voltage, and to provide a method of producing the device.

It is another object of the present invention to provide a method and apparatus for evaluating a splay-to-bend transition time (the term "splay-to-bend transition time" is intended to mean a transition time required for liquid crystal to transform from splay alignment to bend alignment.) in which a highly reliable evaluation of a transition time from splay alignment to bend alignment can be performed in an easy manner.

These and other objects are accomplished by providing a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material has a splay elastic constant K11 of 10 pN or less.

By setting the splay elastic constant K11 of the liquid crystal material to be 10 pN or less, it is made possible to attain a liquid crystal display device with a fast transition in which bend alignment is easily formed at a low voltage.

The reason for restricting the splay elastic constant to be 10 pN or less is as follows. For a liquid crystal material, there are three elastic constants, namely, a splay elastic constant K11, a twist elastic constant K22, and a bend elastic constant K33. The liquid crystal deforms according to these elastic constants when a force is applied thereto.

Since the present invention pertains to a transition from splay alignment to bend alignment, the twist elastic constant K22 is not directly related and the splay elastic constant K11 and the bend elastic constant K33 are considered to be related. As for the splay elastic constant K11, when the constant K11 is small, a splay deformation can easily occur with a small force. Accordingly, such a liquid crystal can reach a state of a maximum splay alignment state from an initial splay alignment within a short period of time. Hence, a liquid crystal display device with a short transition time is achieved.

According to a second aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material has a ratio K11/K33 of 1.0 or less, where K11 is a splay elastic constant of the liquid crystal material and K33 is a bend elastic constant of the liquid crystal material.

In the above-described constitution of the invention, the ratio K11/K33, the ratio of the splay elastic constant K11 to the bend elastic constant K33 in the liquid crystal material, is restricted to be 1.0 or lower for the following reason. As has been described in the section of BACKGROUND ART, K11 and K33 cannot be independently determined in a liquid crystal material system, and they are dependent on each other. Therefore, if K11/K33 is made larger than 1.0, K11 also becomes a large value. As a result, a deformation to the state of maximum splay alignment does not sufficiently occur, and the transition from splay alignment to bend alignment thereby becomes rather slow.

According to a third aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material has a ratio K11/$\Delta\varepsilon$ of 1.0 pN or less, where K11 is a splay elastic constant of the liquid crystal material and $\Delta\varepsilon$ is a dielectric anisotropy of the liquid crystal material

In the above-described constitution, the ratio K11/$\Delta\varepsilon$ where K11 is a splay elastic constant of the liquid crystal material and $\Delta\varepsilon$ is a dielectric anisotropy of the liquid crystal material, is restricted to be 1.0 pN or less for the following reason. When K11 is small, a splay deformation easily occurs. In addition, when a dielectric anisotropy $\Delta\varepsilon$ is large, the motion of liquid crystal molecules is large, and therefore the transition is fast at a certain voltage. Accordingly, it is considered that when K11/$\Delta\varepsilon$ is larger than 1.0 pN, the transition speed becomes rather slow.

According to a fourth aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material has a value K11 • K33 of 130 pN$^2$ or less, where K11 • K33 is the product of a splay elastic constant of the liquid crystal material and a bend elastic constant of the liquid crystal material.

In the above-described constitution, K11 • K33, the product of the splay elastic constant K11 and the bend elastic constant K33, is made to be 130 pN$^2$ or less for the following reason. When K11 is a small value, a splay deformation easily occurs. In addition, when K33 is a small value, a bend deformation easily occurs. Thus, when K11 • K33 is a small value, a transition from splay alignment to bend alignment is made fast. Accordingly, it is considered that when K11 • K33 is larger than 130 pN$^2$, the transition speed is rendered slow.

According to a fifth aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material comprises at least one liquid crystal selected from the group consisting of pyrimidine liquid crystal, dioxane liquid crystal, and biphenyl liquid crystal.

In the above constitution, the liquid crystal material is restricted to specific materials as set forth above. The reason is that pyrimidine liquid crystal, dioxane liquid crystal, and biphenyl liquid crystal have relatively smaller K11 values than phenylcyclohexane liquid crystal, ethane liquid crystal, and the like.

According to a sixth aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material is at least one liquid crystal material selected from the group consisting of a liquid crystal material in which a splay elastic constant thereof is 10 pN or less, a liquid crystal material in which a ratio K11/K33 thereof is 1.0 or less, where K11 is a splay elastic constant of the liquid crystal material and K33 is a bend elastic constant of the liquid crystal material, a liquid crystal material in which a ratio $K11/\Delta\varepsilon$ is 1.0 pN or less, where K11 is a splay elastic constant of the liquid crystal material and $\Delta\varepsilon$ is a dielectric anisotropy of the liquid crystal material, a liquid crystal material in which $K11 \cdot K33$ is 130 pN$^2$ or lower, where $K11 \cdot K33$ is the product of a splay elastic constant of the liquid crystal material and a bend elastic constant of the liquid crystal material, and a liquid crystal material comprising at least one liquid crystal selected from the group consisting of pyrimidine liquid crystal, dioxane liquid crystal, and biphenyl liquid crystal.

This constitution also achieves a faster transition from splay alignment to bend alignment.

According to a seventh aspect of the invention, there is provided a parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material is such that a capacitance-voltage hysteresis S thereof is $1.0 \times 10^4$ V/m or less, the hysteresis S being observed by measuring a cell capacitance while an applied voltage is being increased and decreased, and defined by the following expression (1):

$$(1)$$

$$S = \frac{\int_a^b (C_{BS} - C_{SB})dv}{(C_{max} - C_{min}) \cdot L}$$

where a [V] is a lowermost voltage value at which the hysteresis is recognized, b [V] is an uppermost voltage value at which the hysteresis is recognized, $C_{BS}$ [pF] is a cell capacitance at which a transition from bend to splay occurs, $C_{SB}$ [pF] is a cell capacitance at which a transition from splay to bend occurs, $C_{max}$ [pF] is a maximum capacitance of the cell, $C_{min}$ [pF] is a minimum capacitance of the cell, and L [m] is a thickness of the liquid crystal layer.

In the above constitution, the capacitance-voltage hysteresis S is set to be $1.0 \times 10^4$ V/m. The reason is as follows. The capacitance-voltage hysteresis S corresponds to the difference between an energy of splay alignment and an energy of bend alignment, and thus corresponds to the easiness of the transition from splay alignment to bend alignment. Therefore, the smaller the hysteresis S is, the more easily the transition occurs.

According to an eighth aspect of the invention, there is provided a liquid crystal display device as described in the first aspect of the invention, wherein a pretilt angle of the liquid crystal material on a surface of at least one of the substrates is 2 degrees or more.

The pretilt angle is made to be 2 degrees or higher because when the pretilt angle is smaller than 2 degrees, a rise time of the liquid crystal molecules becomes longer, leading to a slow transition.

The present invention according to Embodiment 2 is based on the findings by the present inventors that it is important for the splay-to-bend transition that liquid crystal directors in the central region of the liquid crystal layer be perpendicular to the substrate and that the pretilt angle at the interface with one of the alignment layers be small.

In view of the above findings, the following liquid crystal display devices are provided according to the invention. First, a liquid crystal display device according to the invention comprises a region in which a rising direction of liquid crystal molecules is opposite to that of liquid crystal molecules in a surrounding region.

Second, a liquid crystal display device according to the invention is such that, a liquid crystal region having a splay alignment is divided into at least one pair of regions having splay alignment and an alignment treatment is performed so that the directions of the splay alignment differ by 180 degrees.

Third, a liquid crystal display device according to the invention is such that liquid crystal pretilt angles at the interfaces with the upper and lower alignment layers formed on the upper and lower substrates are different from each other.

Fourth, a liquid crystal display device according to the invention is such that, in at least one of the substrates, a protruding object or a recess-like shape having an inclined plane with respect to a substrate surface is provided on a surface to be in contact with the liquid crystal layer so that a rising direction of liquid crystal molecules is opposite to that of the surrounding region.

More specifically, the following constitutions are provided.

According to a ninth aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein one of the alignment layers comprises a reversed alignment region in which, when a voltage is applied, a rising direction of liquid crystal molecules is opposite to a rising direction of liquid crystal molecules in a region surrounding in the reversed alignment region.

According to the above-described constitution, the following effect is achieved in the parallel alignment liquid crystal display device comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other.

At least one of the alignment layers comprises, in each of the pixels, a reversed alignment region in which, when a voltage is applied, a rising direction of liquid crystal molecules is opposite to a rising direction of liquid crystal molecules in a region surrounding in the reversed alignment region.

According to a 10th aspect of the invention, there is provided a liquid crystal display device as described in the ninth aspect of the invention, wherein at least one of the reversed alignment region is provided in each pixel.

According to a 11th aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, in at least one of the alignment layers, a region to be treated is divided into two regions, and the one of the alignment layers is provided with a positive alignment treating region and a negative alignment treating region such that directions of splay alignment in the two divided regions differ by 180 degrees.

According to the above constitution, the following effect is achieved in an OCB mode liquid crystal display device comprising a liquid crystal region with splay alignment formed by alignment treating comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other.

In at least one of the alignment layers, a region to be treated is divided into two regions, and by varying the direction of alignment treating, for example by varying the direction of rubbing, the one of the alignment layers is provided with a positive alignment treating region and a negative alignment treating region such that directions of splay alignment in the two divided regions differ by 180 degrees.

According to a 12th aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein a pretilt angle at an interface with one of the alignment layers has a positive sign and a pretilt angle at an interface with the other alignment layer has a negative sign, and the pretilt angles have a different absolute value from each other.

According to the above-described constitution, the following effect is achieved in the parallel alignment liquid crystal display device comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other.

The alignment layers on the opposed substrates are alignment-treated so that, for example, by varying rubbing densities or the like, a pretilt angle at an interface with one of the alignment layers has a positive sign and a pretilt angle at an interface with the other alignment layer has a negative sign, and the pretilt angles have a different absolute value from each other, for example, the absolute value of the upper interface is large and that of the lower interface is small. Thereby, the most mobile liquid crystal molecules at the center of the liquid crystal layer are put into a tilted state, resulting in a fast transition to bend alignment when the initialization is performed.

According to a 13th aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

one of the alignment layer has a pretilt angle of 2 degrees or less; and
the other alignment layer has a pretilt angle having a different sign from that of the pretilt angle of the one of the alignment layer, and an absolute value thereof is 2 degrees or more.

By the above-described constitution of the invention, the following effect is achieved in a parallel alignment liquid crystal display devices as described in the 13th aspect of the invention.

The parallel alignment liquid crystal display device includes an alignment layer having a pretilt angle of 2 degrees or less, and an alignment layer having a pretilt angle having a different sign from that of the pretilt angle of the one of the alignment layer, and an absolute value thereof is 2 degrees or more. When the pretilt angle at one of the alignment layers is 2 degrees or more, the inclination of the liquid crystal at the center of the liquid crystal layer increases, and thereby the liquid crystal at the center of the liquid crystal layer more rapidly starts to move toward bend alignment.

According to a 14th aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, on at least a surface of one of the alignment layers being in contact with a liquid crystal layer, a protruding object or a recess-like shape is provided, the object having an inclined plane with respect to the surface of the alignment layer.

According to the above-described constitution, the following effect is achieved in the parallel alignment liquid crystal display device comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other.

The parallel alignment liquid crystal display device is such that on at least a surface of one of the alignment layers being in contact with a liquid crystal layer (a surface of one of the alignment layers is sufficient in many cases), a protruding object (including a circular conic shaped object) or a recess-like shape is provided, which enables a faster transition to bend alignment when the initialization is performed.

According to a 15th aspect of the invention, there is provided a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, on at least a surface of one of the alignment layers being in contact with a liquid crystal layer, a protruding object is provided such that, when a voltage is applied, a rising direction of liquid crystal molecules in a region where the object is provided is opposite to a rising direction of liquid crystal molecules surrounding the region.

By the above-described constitution, further faster transition to bend alignment in the initialization can be achieved.

According to a 16th aspect of the invention, there is provided a parallel alignment liquid crystal display device as described in the ninth aspect of the invention, further comprising at least one retardation plate composed of an optical medium having a negative birefringence, the optical medium in which a principal axis thereof is hybrid aligned.

The above-described constitution achieves the following effect.

The OCB mode liquid crystal display device has at least one retardation plate composed of an optical medium having a negative birefringence, the optical medium in which a principal axis thereof is hybrid aligned.

Thereby, the polarization state of the exiting light is improved, and a uniform black level can be obtained over wide viewing angles.

According to a 17th aspect of the invention, there is provided a parallel alignment liquid crystal display device as described in the ninth aspect of the invention, further comprising at least one positive retardation plate.

The OCB mode liquid crystal device has an additional positive retardation plate in addition to the normal OCB mode constitution.

Thereby, further wider viewing angle can be achieved.

According to a 18th aspect of the invention, there is provided a method of producing a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other, the method comprising:

on a surface of at least one of the alignment layers being in contact with liquid crystal, forming a protruding object or a recess-like shaped object having an inclined plane with respect to the surface of the alignment layer.

By the above-described constitution, the following effect can be achieved in a method of producing a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other.

The method of producing a parallel alignment liquid crystal display device comprises, on a surface of at least one of the alignment layers being in contact with liquid crystal, forming a protruding object or a recess-like shaped object having an inclined plane with respect to the surface of the alignment layer.

According to a 19th aspect of the invention, there is provided a method of producing a parallel alignment liquid crystal display device as described in the 18th aspect of the invention, further comprising at least one of the steps of:

providing on an outward surface of a substrate at least one retardation plate having a negative birefringence in which a principal axis thereof is hybrid aligned; and
providing on an outward surface of a substrate at least one positive retardation plate.

By the above-described constitution, the following effect can be achieved.

The method comprises at least one of providing on an outward surface of a substrate at least one retardation plate having a negative birefringence in which a principal axis thereof is hybrid aligned, and providing on an outward surface of a substrate at least one positive retardation plate.

According to a 20th aspect of the invention, there is provided a method of evaluating a splay-to-bend transition time comprising the steps of:

applying a constant voltage to a homogeneous liquid crystal cell showing a splay alignment, the voltage being within a range in which a transition from the splay alignment to a bend alignment is possible; and
monitoring a cell capacitance change alter the start of voltage application with respect to time;
wherein an easiness of alignment transition of the cell is evaluated by using an evaluation index for evaluating a transition time from splay alignment to bend alignment, the evaluation index being a time from the start of the voltage application to an inflexion point of the capacitance change or to a saturation point of the capacitance change.

When a voltage is applied to a homogeneous cell showing a splay alignment, a nucleus of bend alignment is formed in the splay alignment region after a certain time has elapsed. This nucleus gradually grows over time, and finally the entire region of the liquid crystal layer turns into a bend alignment. In other words, a transition from splay alignment to bend alignment means that each of the liquid crystal molecules rises one by one in a perpendicular direction. Therefore, a state of the transition can be represented by a capacitance change of the cell. Thus, considering the occurrence of the nucleus of bend alignment and the growth of the nucleus, a capacitance change curve is considered to form such a curve that a certain capacitance value is maintained for a certain period of time and thereafter the capacitance value increases until it reaches a saturation capacitance value. Accordingly, a time from the start of voltage application until the capacitance value reaches the flexion point of capacitance change (a point at which the capacitance value starts to increase), or a time from the start of voltage application until the capacitance value reaches a saturation point, can be employed as an index for evaluating the transition time. Thus, using such an evaluation index, the easiness of the transition from splay alignment to bend alignment in the cell can be evaluated. According to such an evaluation method, a highly reliable evaluation of a splay-to-bend transition time can be easily achieved.

According to a 21st aspect of the invention, there is provided an apparatus for evaluating a splay-to-bend transition time comprising:

means for applying a constant voltage to a homogeneous liquid crystal cell showing a splay alignment, the voltage being within a range in which a transition from the splay alignment to a bend alignment is possible;
means for monitoring a cell capacitance change after the start of voltage application with respect to time;
means for computing at least one of a time from the start of the voltage application to a flexion point of the capacitance change, and a time from the start of the voltage application to a saturation point of the capacitance change; and
means for displaying and/or printing the time computed by the means for computing.

By the above-described constitution, it is made possible to automatically measure a time from the start of voltage application until the capacitance value reaches the flexion point of capacitance change (a point at which the capacitance value starts to increase), or a time from the start of voltage application until the capacitance value reaches a saturation point, and then to display and/or print the measured results.

According to a 22nd aspect of the invention, there is provided a method for evaluating a splay-to-bend transition time comprising the steps of

applying voltage to a homogeneous liquid crystal cell showing a splay alignment while increasing the voltage at predetermined voltage values in a stepwise manner;
applying voltage to the liquid crystal cell showing a bend alignment while decreasing the voltage at the same predetermined voltage values as in increasing the voltage in a stepwise manner; and
monitoring a capacitance change of the cell with respect to time at each predetermined voltage value while the increasing the voltage and the decreasing the voltage;
wherein an easiness of alignment transition of the cell is evaluated by using an evaluation index for evaluating a transition time from splay alignment to bend alignment, the evaluation index being a size of hysteresis in a voltage-capacitance curve obtained from a result of the monitoring.

With regard to a transition from splay alignment to bend alignment and a voltage-cell capacitance curve relating to the transition form splay alignment to bend alignment, it has been generally considered that hysteresis does not exist therein. However, the present inventors unexpectedly found that hysteresis is present while performing the experiments to examine whether the transition time can be evaluated by the capacitance change paying particular attention to the capacitance change. In view of the findings, the present inventors found that using the hysteresis as an index for evaluating a transition time from splay alignment to bend alignment, the easiness of the alignment transition in a cell can be evaluated. Such an evaluation method using the hysteresis as an evaluation index also achieves the same effects as achieved by the 20th aspect of the invention.

The hysteresis can be used as an index for evaluating a transition time from splay alignment to bend alignment for the following reasons.

It is considered that a difference between the energy required for an alignment transition from splay alignment to bend alignment and the energy required for an alignment transition from bend alignment to splay alignment comes out as a hysteresis. This point will be discussed in detail in the section "BEST MODE FOR CARRYING OUT THE INVENTION" below. The easiness of the transition from splay alignment to bend alignment corresponds to the hysteresis, and therefore the hysteresis can be used as an index for evaluating a transition time.

According to a 23rd aspect of the invention, there is provided an apparatus for evaluating a splay-to-bend transition time comprising:

means for applying voltage to a homogeneous liquid crystal cell showing a splay alignment while increasing the voltage at predetermined voltage values in a stepwise manner;
means for applying voltage to the liquid crystal cell showing a bend alignment while decreasing the voltage at the same predetermined voltage values as in increasing the voltage in a stepwise manner;
means for monitoring a capacitance change of the cell with respect to time at each predetermined voltage value while the increasing the voltage and the decreasing the voltage;
means for computing a size of hysteresis in a voltage-capacitance curve obtained from a result of the monitoring, and
means for displaying and/or printing the size of hysteresis computed by the means for computing.

By the above-described constitution, it is made possible to automatically measure a size of hysteresis in the voltage-cell capacitance curve, as an index for evaluating, and to display and/or print the measured results.

According to a 24th aspect of the invention, there is provided a method for evaluating a splay-to-bend transition time comprising the steps of:

applying voltage to a homogeneous liquid crystal cell showing a splay alignment while increasing the voltage at predetermined voltage values in a stepwise manner; and
monitoring a capacitance change of the cell with respect to time at each predetermined voltage value while the increasing the voltage;
wherein, among the predetermined voltage values, a specific voltage value at which a capacitance value of the cell increases is obtained from a result of the monitoring, and an easiness of alignment transition of the cell is evaluated by using an evaluation index for evaluating a transition time from splay alignment to bend alignment, the evaluation index being a time from the start of applying the specific voltage to a point at which a cell capacitance value at the specific voltage value is saturated into a constant capacitance value.

According to the above-described constitution, a time until the cell capacitance is saturated into a certain value in a specific voltage value can be used as an index for evaluating a transition time from splay alignment to bend alignment. This is due to the following reason.

As described above, the cell capacitance changes correspondingly to the state of transition. As for the transition, the following fact is known. When a voltage is applied to a cell in a state of splay alignment, the transition does not occur directly to bend alignment from the initial splay alignment, but occurs in such a manner that the degree of splay alignment becomes larger until a maximum splay deformation state is reached, and then, from the maximum splay deformation state, the alignment state suddenly transforms to bend alignment. When the applied voltage is increased as described above, liquid crystal molecules are raised immediately after the switching to a predetermined voltage, and normally, a certain capacitance value is reached within 2 or 3 seconds. Such a capacitance change continues to occur until a specific predetermined voltage is reached. It is considered that during this period of from a minimum level voltage application until the specific predetermined voltage application, the maximum splay deformation state is spread over the entire electrode region. When the voltage reaches the specific predetermined voltage, the capacitance value increases sharply to a certain capacitance value within 2 or 3 seconds, and thereafter increases at a constant inclination angle, taking a long time until it reaches a saturation point. This is considered to be because of the occurrence of a relaxation from splay alignment to bend alignment, i.e., the occurrence of a sudden change phenomenon from the maximum splay deformation state to bend alignment. Therefore, it is considered that the shorter the time required for the relaxation of alignment, the more easily the transition from the splay alignment to bend alignment occurs. Hence, the time of the relaxation of alignment can be used as an index for evaluating the transition time.

According to a 25th aspect of the invention, there is provided An apparatus for evaluating a splay-to-bend transition time comprising:

means for applying voltage to a homogeneous liquid crystal cell showing a splay alignment while increasing the voltage at predetermined voltage values in a stepwise manner;
means for monitoring a capacitance change of the cell with respect to time at each predetermined voltage value while the increasing the voltage;
computing means in which, among the predetermined voltage values, a specific voltage value at which a capacitance value of the cell increases is obtained from a result of the monitoring by the means for monitoring, and a time from the start of applying the specific voltage to a point at which a cell capacitance value at the specific voltage value is saturated into a constant capacitance value is computed; and
means for displaying and/or printing the time computed by the computing means.

By the above-described constitution, it is made possible to automatically measure, as an index for evaluating, a time until the saturation while the predetermined voltage being increased, and to display and/or print the measured results.

According to a 26th aspect of the invention, there is provided a method for evaluating a splay-to-bend transition time comprising the steps of:

applying voltage to a liquid crystal cell showing bend alignment while decreasing the voltage at predetermined voltage values in a stepwise manner; and

monitoring a capacitance change of the cell with respect to time at each predetermined voltage value while the decreasing the voltage;

wherein, among the predetermined voltage values, a specific voltage value at which a capacitance value of the cell decreases is obtained from a result of the monitoring, and an easiness of alignment transition of the cell is evaluated by using an evaluation index for evaluating a transition time from splay alignment to bend alignment, the evaluation index being a time from the start of applying the specific voltage to a point at which a cell capacitance value at the specific voltage value is saturated into a constant capacitance value.

According to the above-described constitution, a time until the cell capacitance reaches a certain saturation value with respect to a specific voltage value can be employed as an index for evaluating a transition time from splay alignment to bend alignment. This is due to the following reason.

With regard to the specific voltage value, a certain time is required until the capacitance value decreases to a certain saturation value. This is considered to be caused by a relaxation of alignment from bend alignment to splay alignment, i.e., a sudden change phenomenon from bend alignment to a maximum deformation state of splay alignment, which is an opposite phenomenon to the case described above where the voltage being increased. Therefore, the shorter the time required for this relaxation of alignment is, the more easily the transition from bend alignment to splay alignment occurs. On the contrary, in the case of the transition from splay alignment to bend alignment, the long the relaxation time is, the more easily the transition occurs. Hence, the alignment relaxation time can be used as an index for evaluating the transition time.

According to a 27th aspect of the invention, there is provided an apparatus for evaluating a splay-to-bend transition time comprising:

means for applying voltage to a liquid crystal cell showing bend alignment while decreasing the voltage at predetermined voltage values in a stepwise manner,

means for monitoring a capacitance change of the cell with respect to time at each predetermined voltage value while the decreasing the voltage;

computing means in which, among the predetermined voltage values, a specific voltage value at which a capacitance value of the cell decreases is obtained from a result of the monitoring by the means for monitoring, and a time from the start of applying the specific voltage to a point at which a cell capacitance value at the specific voltage value is saturated into a constant capacitance value is computed; and

means for displaying and/or printing the time computed by the computing means.

By the above-described constitution, it is made possible to automatically measure, as an index for evaluating, a time until the saturation while the predetermined voltage being decreased, and to display and/or print the measured results.

According to a 28th aspect of the invention, there is provided a method for evaluating a splay-to-bend transition time comprising the steps of:

applying voltage to a homogeneous liquid crystal cell showing a splay alignment while increasing the voltage at predetermined voltage values in a stepwise manner;

monitoring a capacitance change of the cell with respect to time at each predetermined voltage value while the increasing the voltage;

wherein, among the predetermined voltage values, a specific voltage value at which a capacitance value of the cell increases is obtained from a result of the monitoring, and an easiness of alignment transition of the cell is evaluated by using an evaluation index for evaluating a transition time from splay alignment to bend alignment, the evaluation index being a cell capacitance change rate at the specific voltage value.

As described previously, an alignment relaxation time can be used as an index for evaluating. However, where the alignment relaxation time is used as an index, the time required for the measurement becomes very long. Therefore, in the above-described constitution, the evaluation is performed by using a capacitance change within a certain period of time, i.e., by using a capacitance change rate.

According to a 29th aspect of the invention, there is provided an apparatus for evaluating a splay-to-bend transition time comprising:

means for applying voltage to a homogeneous liquid crystal cell showing a splay alignment while increasing the voltage at predetermined voltage values in a stepwise manner;

means for monitoring a capacitance change of the cell with respect to time at each predetermined voltage value while the increasing the voltage;

computing means in which among the predetermined voltage values, a specific voltage value at which a capacitance value of the cell increases is obtained from a result of the monitoring, and a cell capacitance change rate at the specific voltage value is computed;

means for displaying and/or printing the cell capacitance change rate computed by the computing means.

By the above-described constitution, it is made possible to automatically measure, as an index for evaluating, a cell capacitance change rate while the predetermined voltage being increased, and to display and/or print the measured results.

According to a 30th aspect of the invention, there is provided a method for evaluating a splay-to-bend transition time comprising the steps of:

applying voltage to a homogeneous liquid crystal cell showing a splay alignment while decreasing the voltage at predetermined voltage values in a stepwise manner; and

monitoring a capacitance change of the cell with respect to time at each predetermined voltage value while the decreasing the voltage;

wherein, among the predetermined voltage values, a specific voltage value at which a capacitance value of the cell decreases is obtained from a result of the monitoring, and an easiness of alignment transition of the cell is evaluated by using an evaluation index for evaluating a transition time from splay alignment to bend alignment, the evaluation index being a cell capacitance change rate at the specific voltage value.

The capacitance change rate can be used in place of an alignment relaxation time also in the case where the voltage being decreased.

According to a 31st aspect of the invention, there is provided an apparatus for evaluating a splay-to-bend transition time comprising:

means for applying voltage to a homogeneous liquid crystal cell showing a splay alignment while decreasing the voltage at predetermined voltage values in a stepwise manner;

means for monitoring a capacitance change of the cell with respect to time at each predetermined voltage value while the decreasing the voltage;

computing means in which, among the predetermined voltage values, a specific voltage value at which a capacitance value of the cell decreases is obtained from a result of the monitoring, and a cell capacitance change rate at the specific voltage is computed;

means for displaying and/or printing the cell capacitance change rate computed by the computing means.

By the above-described constitution, it is made possible to automatically measure, as an index for evaluating, a cell capacitance change rate while the predetermined voltage being decreased, and to display and/or print the measured results.

According to a 32nd aspect of the invention, there is provided a method for evaluating a splay-to-bend transition time comprising the steps of:

applying voltage to a homogeneous liquid crystal cell showing a splay alignment so as to form a bend alignment; and

forming a splay alignment by reducing the voltage applied to the liquid crystal cell showing the bend alignment;

wherein an easiness of alignment transition of the cell is evaluated by using an evaluation index for evaluating a transition time from splay alignment to bend alignment, the evaluation index being a time required for a transition from the bend alignment to the splay alignment, the time measured by confirming the transition from the bend alignment to the splay alignment by visual observation.

In the above-described constitution, a time required for the transition from bend alignment to splay alignment is measured by visual observation, and the measured time is used as an index for evaluating a transition time from splay alignment to bend alignment. By using such an evaluation index, the transition time can be easily evaluated with high precision for the following reason. When the transition from splay alignment to bend alignment is visually observed, the change under crossed Nicols appears as a tone change of such achromatic colors as black and white, and therefore it is difficult to identify an exact point of transition. However, in the case of the transition from bend alignment to splay alignment, the change under crossed Nicols accompanies color change of chromatic colors, and therefore it is easy to identify the point of transition, leading to an improvement in precision of the measurement.

According to a 33rd aspect of the invention, there is provided an apparatus for evaluating a splay-to-bend transition time comprising:

means for applying voltage to a homogeneous liquid crystal cell showing a splay alignment so as to form a bend alignment;

means for forming a splay alignment by reducing the voltage applied to the liquid crystal cell showing the bend alignment;

a microscope for observing an alignment state of the liquid crystal cell;

image analyzing means for determining, by analyzing an image obtained by the microscope, whether a color change is spread over an entire region of the liquid crystal cell; and

means for displaying and/or printing a time required for a transition from bend alignment to splay alignment in response to a signal from the image analyzing means.

By the above-described constitution, it is made possible to automatically measure, as an index for evaluating, a time required for the transition from bend alignment to splay alignment, and to display and/or print the measured results.

## BRIEF DESCRIPTION OF THE DRAWINGS

Fig. 1 shows a construction of a test cell used for evaluating a splay-to-bend transition time of a liquid crystal display device according to Embodiment 1.

Fig. 2 is a schematic view showing the rubbing directions for the substrates in a test cell used for evaluating a splay-to-bend transition time of a liquid crystal display device according to Embodiment 1.

Fig. 3 is a schematic view illustrating a process of alignment transition from splay alignment to bend alignment.

Fig. 4 is a graph for illustrating the difference in distributions of directors when a voltage is applied, depending on the difference in the splay elastic constants K11.

Fig. 5 is a timing chart showing a change of a voltage applied to test cells of Example 1-5.

Fig. 6 is a graph showing capacitance changes of the test cell F5 used in Example 1-5 when a voltage is applied with the timing shown in Fig. 5, each capacitance change being after the voltage being switched to each predetermined voltage value.

Fig. 7 is a graph showing capacitance changes of the test cell F5 used in Example 1-5 when a voltage is decreased with a similar timing shown in Fig. 5, each capacitance change being after the voltage being switched to each predetermined voltage value.

Fig. 8 is a graph showing a capacitance-voltage (C-V) hysteresis characteristic of the test cell F5 used in Example 1-5.

Fig. 9 illustrates a panel construction and alignments of liquid crystal directors in an optically compensated birefringence (OCB) mode cell.

Fig. 10 is a cross-sectional view schematically showing a structure of a test cell used in Examples 2-1 to 2-3 of liquid crystal display devices according to Embodiment 2.

Figs. 11 to 11 shows rubbing directions and states in alignment treatments performed for the alignment layers on the substrates of a liquid crystal display device according to Example 2-1.

Fig. 12 shows rubbing directions performed for the alignment layers on the substrates of the liquid crystal display devices according to Examples 2-3, 2-4 and Comparative Example in Example 2-1.

Fig. 13 is an enlarged view showing a boundary region S in the liquid crystal layer of a liquid crystal display device according to Example 2-1.

Fig. 14 a schematic diagram showing a state of alignments near the boundary region S.

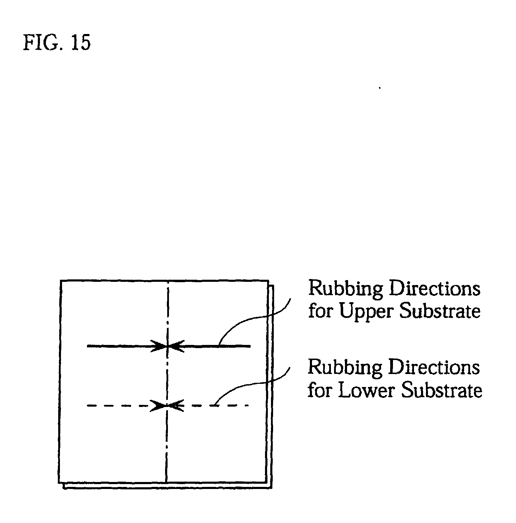

Fig. 15 schematically shows the directions and states of rubbing in the alignment layer on the substrates of a liquid crystal display device according to Example 2-2.

Fig. 16 illustrates a state of rubbing in a liquid crystal display device according to another example of Example 2-2 (a variation of Example 2-2).

Fig. 17 schematically shows the states of alignments of Fig. 16.

Fig. 18 is a cross-sectional view schematically showing a construction and alignment of liquid crystal in Example 2-4.

Fig. 19 illustrates a process of producing a protruding object formed on an alignment layer on a substrate in Example 2-4.

Fig. 20 also illustrates a process of producing the protruding object subsequent to Fig. 19.

Fig. 21 also illustrates a process of producing the protruding object subsequent to Fig. 20

Fig. 22 schematically illustrates a construction of a test cell used in Example 2-5.

Fig. 23 illustrates an arrangement of optical elements in a test cell in Example 2-5.

Fig. 24 is a graph showing a voltage-transmissivity characteristic of a test cell used in Example 2-5.

Fig. 25 is a graph showing a viewing angle characteristic of a test cell used in Example 2-5.

Figs. 26(a) to 26(g) schematically illustrate the movement of liquid crystal directors from splay alignment to bend alignment in an OCB mode type liquid crystal display device.

Fig. 27 schematically illustrates a state of the alignment of liquid crystal directors in Example 2-2.

Fig. 28 schematically illustrates a state of the alignment of liquid crystal directors in Example 2-4.

Fig. 29 schematically illustrates a state of the hybrid alignment in a negative biaxial film

Fig. 30 shows a construction of the test cells used in Examples 3-1 to 3-4 of an evaluation method of a splay-to-bend transition time according to Embodiment 3.

Fig. 31 shows the directions of rubbing performed on the substrates of the test cells of Fig. 30.

Fig. 32 is a graph showing a capacitance change of the test cells A and B used in Example 3-1 with respect to time, when a voltage of 10 V is applied.

Figs. 33(a) to 33(c) illustrate a process of the transition form splay alignment to bend alignment.

Fig. 34 is a block diagram showing a construction of an evaluation apparatus 230 according to Example 3-1.

Fig. 35 schematically illustrates a storage region of the table 240.

Fig. 36 is a flow chart showing a processing of decisions by input modes in the evaluation apparatus 230.

Fig. 37 is a flow chart showing a processing of mode 1 in the evaluation apparatus 230.

Fig. 38 is a slow chart showing a processing of mode 1 in the evaluation apparatus 230.

Fig. 39 is a timing chart showing a change of a voltage with respect to time, the voltage being applied to the test cell of Example 3-2.

Fig. 40 shows the capacitance changes of the test cell C used in Example 3-2 when a voltage is applied with the timing shown in Fig. 39, each capacitance change being after the voltage being switched to each predetermined voltage value.

Fig. 41 shows the capacitance changes of the test cell C used in Example 3-2 when a voltage is decreased with a similar timing shown in Fig. 39, each capacitance change being after the voltage being switched to each predetermined voltage value.

Fig. 42 is a graph showing a capacitance-voltage (C-V) hysteresis characteristic of the test cell C used in Example 3-2.

Fig. 43 is a graph showing a capacitance-voltage (C-V) hysteresis characteristic of the test cell D used in Example 3-2.

Fig. 44 is a flow chart showing a processing of mode 2 in the evaluation apparatus 230.

Fig. 45 is a flow chart showing a processing of mode 3 in the evaluation apparatus 230.

Fig. 46 is a flow chart showing a processing of mode 4 in the evaluation apparatus 230.

Fig. 47 is a flow chart showing a processing of mode 5 in the evaluation apparatus 230.

Fig. 48 is a flow chart showing a processing of mode 6 in the evaluation apparatus 230.

Fig. 49 is a block diagram showing a construction of an evaluation apparatus 250 according to Example 3-4.

Fig. 50 is a flow chart showing a processing in the evaluation apparatus 250.

## BEST MODE FOR CARRYING OUT THE INVENTION

## EMBODIMENT 1

### Summary of Embodiment 1

First, the summary of Embodiment 1 is given below.

Japanese Unexamined Patent Publication No. 8-87013 discloses a bend alignment type liquid crystal display device comprising a liquid crystal material having a fast transition speed. This prior art display utilizes a liquid crystal material in which a ratio $K_{33}/K_{11}$ is between 0.1 and 0.9 (with a ratio $K_{11}/K_{33}$, the range of the ratio can be shown as $10 \geqq K_{11}/K_{33} \geqq 10/9$ ), where $K_{33}$ is a bend elastic constant of the liquid crystal material and $K_{11}$ is a splay elastic constant thereof. It is considered that this technique is intended to improve the transition speed by setting $K_{33}$ to be small so as to facilitate the transition to bend alignment.

However, according to the experiments by the present inventors, it was found that when a ratio $K_{11}/K_{33}$ was set to be such a large value as set forth above, the transition speed became slower, which was contrary to the expectation. The reason is considered to be as follows. In a liquid crystal material, K11 and K33 are not determined independently, and once the value of K11 is selected, the value of K33 is interrelatedily determined in a material system. Therefore, it is inappropriate to select a liquid crystal material in such a manner that K33 is set to be small while K11 is set to be large, on the basis that that K33 and K11 are independent of each other.

Regarding the transition from splay alignment to bend alignment, it is known that the transition does not occur gradually from splay alignment to bend alignment, but occurs in the following manner: from a splay alignment where no voltage is applied, the degree of splay becomes larger as the voltage being applied, reaching a maximum splay alignment state, and then from the maximum splay alignment state, the alignment state transforms into a bend alignment state. Accordingly, it is necessary as a prerequisite condition for the transition from splay alignment to bend alignment that the maximum splay alignment state be attained. In view of this, paying particular attention to K11, the present inventors have reached a conclusion that it is necessary to make K11 small so that the maximum splay alignment state can be easily obtained within a short time. In other words, the present inventors have reached an idea that when selecting a liquid crystal material, it is necessary that the selection of the constant K11 be regarded as the most important. Based on this idea, the present inventors have made intensive studies on an appropriate range of K11, and appropriate ranges of the combinations of K11 and other variables (for example, a ratio K11/K33, which is a ratio of K11 to K33, K11/$\Delta\varepsilon$, which is a ratio of K11 to a dielectric anisotropy $\Delta\varepsilon$, and so forth). Thus, the present invention has been accomplished.

Now, details of the invention according to Embodiment 1 will be discussed below on the basis of examples thereof. In Embodiment 1, a liquid crystal display device having a short splay-to-bend transition time is proposed, and the device basically comprises a retardation plate. Nevertheless, no retardation plate is mentioned in the examples below, but this is merely for the sake of convenience in the experiments herein and not to be construed as limiting the scope of the present invention.

**Example 1-1**

A liquid crystal display device produced according to Example 1-1 comprises, with particular attention being paid to a splay elastic constant K11, a liquid crystal material in which the constant K11 is 10 pN or less. The reason why K11 is preferred to be 10 pN or less is detailed hereinafter with reference to the results of experiments performed by the present inventors: A liquid crystal display device of Example 1-1 is an OCB mode type liquid crystal display device having a construction shown in Fig. 9. The liquid crystal display devices of Examples 1-2 to 1-7 are also OCB mode type liquid crystal display devices having like constructions.

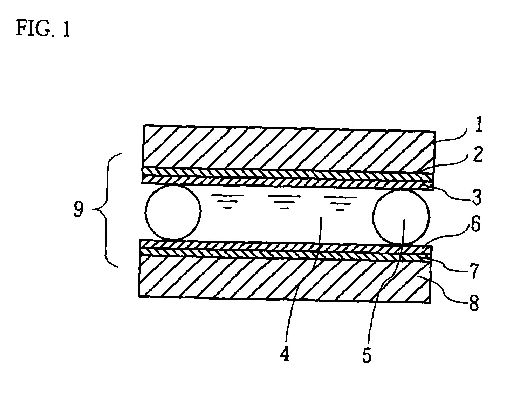

Fig. 1 shows a construction of the liquid crystal cell used in a test for studying the liquid crystal display device of Example 1-1. This liquid crystal cell is a homogeneous cell that shows splay alignment when no voltage is applied thereto, and is referred to as a bend alignment mode liquid crystal cell in that the splay alignment is transformed into bend alignment by applying voltage. Liquid crystal cells having the above-described construction were prepared in the following manner.

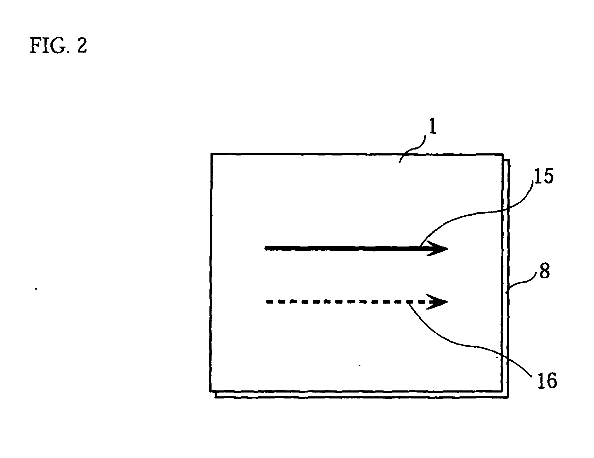

Firstly, an alignment layer agent, SE-7492 available from Nissan Chemical Industries Co. Ltd. was coated by spin coating onto a pair of glass substrates 1 and 8 each having a transparent electrode 2 and 7 respectively, and the agent was cured in a temperature bath at 180 °C for one hour to form alignment layers 3 and 6. Thereafter, on the surfaces of the alignment layers 3 and 6, a rubbing treatment was performed in the directions shown in Fig. 2 with the use of a rubbing cloth made of rayon. In Fig. 2, an arrow 15 indicates a direction of rubbing for the substrate 1, and an arrow 16 a direction of rubbing for the substrate 8.

Then, the substrates 1 and 8 were put together with spacers 5 (available from SEKISUI Fine Chemical Co. Ltd.) placed therebetween, and sealed with STRUCTBOND 352A (sealing resin available from MITSUI TOATSU Chemical, INC.) so that the gap between the substrates became 5.3 $\mu$m. Five empty cells 9 were thus prepared.

Subsequently, liquid crystal materials LC1 to LC5 as shown in the Table 1 were respectively filled into the thus-prepared empty cells 9 by a vacuum filling method so as to form a liquid crystal layer 4, and thus test cells A1 to A5 were prepared.

## TABLE 1

| Test Cell | Liquid Crystal Material | Dielectric Anisotropy $\Delta\varepsilon$ | Dielectric Constant in Perpendicular Direction $\varepsilon$ | Dielectric Constant in Parallel Direction $\varepsilon$ | Splay Elastic Constant K11 (pN) | Twist Elastic Constant K22 (pN) | Bend Elastic Constant K33 (pN) | K11/K33 | K11·K33 (pN²) | Transition Time (sec.) |
|---|---|---|---|---|---|---|---|---|---|---|
| A1 | LC1 | 12.4 | 4.1 | 16.5 | 5.8 | 6.2 | 14.1 | 0.411 | 81.84 | 1 |
| A2 | LC2 | 10.3 | 3.8 | 14.1 | 7.7 | 7.0 | 15.8 | 0.487 | 121.66 | 2 |
| A3 | LC3 | 9.4 | 3.5 | 11.6 | 9.9 | 6.9 | 15.2 | 0.651 | 150.49 | 5 |
| A4 | LC4 | 8.8 | 4.4 | 12.7 | 10.3 | 5.0 | 12.0 | 0.858 | 123.60 | 25 |
| A5 | LC5 | 9.8 | 4.2 | 14.0 | 12.4 | 5.9 | 15.5 | 0.800 | 192.20 | 86 |

Next, two polarizing plates were attached to each of the test cells A1 to A5 so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 1 above. Table 1 also shows the values of K11, K33, and so forth.

From Table 1 above, it is recognized that a liquid crystal cell comprising a liquid crystal material having a splay elastic constant K11 of 10 pN or less achieves fast splay-to-bend transition. This is considered to be because in the case of K11 being smaller, liquid crystal directors in the vicinity of the center of the liquid crystal layer are transformed to a vertical alignment in a shorter time. In this regard, further discussion will be given below.

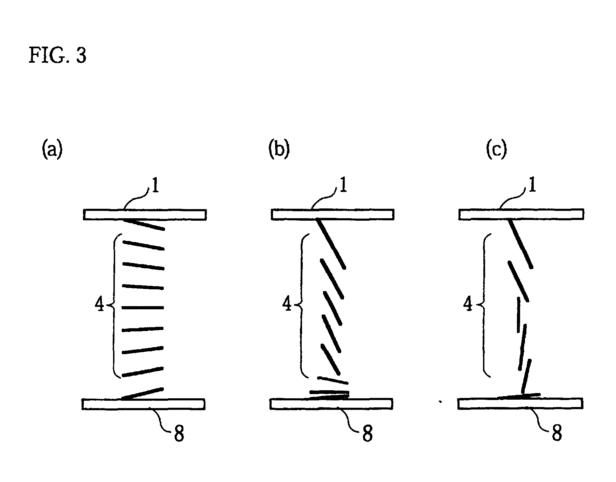

Regarding the transition from splay alignment to bend alignment, it is known that the transition does not occur gradually from splay alignment to bend alignment, but occurs in the following manner: from a splay alignment where no voltage is applied (Fig 3(a)), the degree of splay becomes larger as the voltage being applied, reaching a maximum splay alignment state as shown in Fig. 3(b), and then from the maximum splay alignment state, the alignment state transforms into a bend alignment state as shown in Fig. 3(c). Accordingly, it is necessary as a prerequisite condition for the transition from splay alignment to bend alignment that the maximum splay alignment state be attained. In view of this, paying particular attention to K11, the present inventors have reached a conclusion that it is necessary to make K11 small so that the maximum splay alignment state can be easily obtained within a short time. It is noted that the values of such as K11/K33, K11 • K33, and K11/$\Delta\varepsilon$ set forth in the following examples are also based on the same idea that in order to achieve a faster transition from splay alignment to bend alignment, K11 should be made small, as a prerequisite condition for the transition from splay alignment to bend alignment.

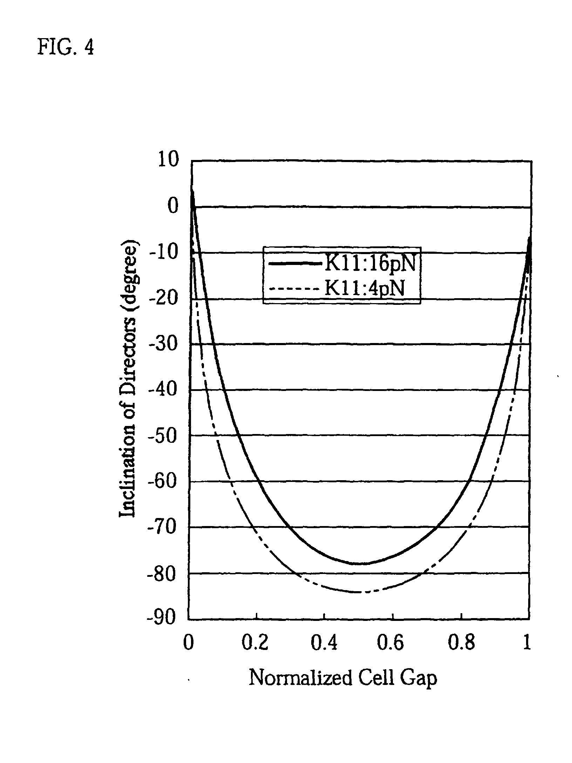

Fig. 4 is a graph showing inclination angles of liquid crystal directors calculated with regard to two liquid crystal materials when a voltage of 3 V is applied thereto, one liquid crystal material having the splay, twist, and bend elastic constants of K11 = 4.0 pN, K22 = 7.0 pN, and K33 = 15.8 pN, respectively, and the other having K11 = 16.0 pN, K22 = 7.0 pN, and K33 = 15.8 pN. In Fig. 4, the vertical axis shows inclination angles of liquid crystal directors and the horizontal axis shows normalized values of cell thicknesses where the actual cell gap is assumed to be 1. From Fig. 4, it is understood that, for example, in the case of the liquid crystal material having K11 = 16.0, the area in which the inclinations of liquid crystal directors is larger than —50% is approximately 50%, whereas in the case of the material having K11 = 4.0, the area is approximately 70 %. This indicates that when the constant K11 is smaller, the liquid crystal molecules are more vertically raised, or aligned. Hence, the conclusion led from Fig. 4 well supports the above-described hypothesis. It is noted that in the calculation, a parallel dielectric constant $\varepsilon//$, which is a dielectric constant along the direction of the longer molecular axis, is set to be 14.1, a perpendicular dielectric constant $\varepsilon$, which is a dielectric constant along the direction of the shorter molecular axis, to be 3.8, and the thickness of the liquid crystal material to be 6 $\mu$m. The pretilt angle of the liquid crystal on the surface of the substrate is set to be 5 degrees.

As apparent from the above discussion, according to Embodiment 1 of the present invention, it is made possible to provide a liquid crystal display device with a short splay-to-bend transition time, and therefore the present invention is remarkably useful in its practical value. Although a 1 kHz rectangular wave voltage of 7 V was used as the applied voltage in the present example, this is for illustrative purposes only and naturally other voltage values and waveforms can be employed.

**Example 1-2**

A liquid crystal display device produced according to Example 1-2 comprises, with particular attention being paid to a ratio K11/K33, a ratio of a splay elastic constant K11 to a bend elastic constant K33, a liquid crystal material in which the ratio K11/K33 is 1.0 or less. The reason for the restriction of K11/K33 $\leqq$ 1.0 is now detailed based on the results of the experiments by the present inventors.

Five empty cells 9 each having the same configuration as those in Example 1-1 above were prepared in the same manner as in Example 1-1 above, except that the gap between the substrates was made to be 5.7 $\mu$m. Then, liquid crystal materials LC6 to LC10, and LC0 as shown in Table 2 below were filled into the empty cells 9 by a vacuum filling method to prepare test cells B1 to B5, and B0, respectively.

## TABLE 2

| Test Cell | Liquid Crystal Material | Dielectric Anisotropy Δε | Dielectric Constant in Perpendicular Direction ε | Dielectric Constant in Parallel Direction ε | Splay Elastic Constant K11 (pN) | Twist Elastic Constant K22 (pN) | Bend Elastic Constant K33 (pN) | K11/K33 | K11·K33 (pN²) | Transition Time (sec.) |
|---|---|---|---|---|---|---|---|---|---|---|
| B 1 | LC 6 | 11.8 | 4.2 | 16.0 | 6.0 | 6.2 | 14.6 | 0.411 | 87.60 | 2 |
| B 2 | LC 7 | 10.7 | 3.8 | 14.5 | 8.2 | 7.0 | 15.2 | 0.539 | 124.64 | 4 |
| B 3 | LC 8 | 9.8 | 3.8 | 13.6 | 9.7 | 6.7 | 14.6 | 0.664 | 141.62 | 5 |
| B 4 | LC 9 | 9.0 | 4.5 | 13.5 | 10.0 | 5.4 | 12.8 | 0.781 | 128.00 | 5 |
| B 5 | LC 10 | 10.3 | 4.2 | 14.5 | 13.3 | 5.9 | 15.5 | 0.858 | 206.15 | 31 |
| B 0 | LC 0 | 8.6 | 4.2 | 12.8 | 13.2 | 6.1 | 13.0 | 1.015 | 171.60 | 120 |

Next, two polarizing plates were attached to each of the test cells B1 to B5 and B0 so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 2 above. Table 2 also shows the values of K11, K33, and so forth.

From Table 2 above, it is recognized that a liquid crystal display device comprising a liquid crystal material in which a ratio of splay elastic constant K11 to bend elastic constant K33, K11/K33, is 1.0 or lower, can achieve high speed splay-to-bend transition. The reason is considered to be as follows.

In the sense that the transition in bend alignment is easier than the transition in splay alignment, a ratio K11/K33 needs to be larger, since the transition to bend alignment is more facilitated when K33 is smaller. However, by experiments, the present inventors found that when the ratio K11/K33 was made to be a large value, the transition speed became unexpectedly slower.

In a liquid crystal material, K11 and K33 are not determined independently, and once the value of K11 is selected, the value of K33 is interrelatedly determined as a material system. Therefore, it is inappropriate to select a liquid crystal material in such a manner that K33 is set to be small while K11 is set to be large, on the ground that K33 and K11 are independent of each other.

In actual selecting of liquid crystal materials, when K11/K33 is made large, K11 correspondingly becomes large. Thus, splay deformation does not occur sufficiently, and as a result the splay-to-bend transition speed becomes slow. Hence, there is a limit on increasing K11/K33 while suppressing K11, and it is therefore considered that there should be an appropriate range of K11/K33. Based on the reason as above, the present inventors performed experiments and thus obtained the results shown in Table 2.

From Table 2 above, it is recognized that a high-speed splay-to-bend transition can be achieved by a liquid crystal display device comprising a liquid crystal material in which K11/K33 is 1.0 or lower.

**Example 1-3**

A liquid crystal display device, produced according to Example 1-3 comprises, with particular attention being paid to the product of a splay elastic constant K11 and a bend elastic constant K33, K11 • K33, a liquid crystal material in which K11 • K33 is relatively small. The reason for this is now detailed based on the results of experiments by the present inventors.

Five empty cells 9 each having the same configuration as those in Example 1-1 above were prepared in the same manner as in Example 1-1 above, except that the gap between the substrates was made to be 5.5 μm. Then, liquid crystal materials LC11 to LC15 as shown in Table 3 below were filled into the empty cells 9 by a vacuum filing method to prepare test cells C1 to C5, respectively.

TABLE 3

| Test Cell | Liquid Crystal Material | Dielectric Anisotropy $\Delta\varepsilon$ | Dielectric Constant in Perpendicular Direction $\varepsilon$ | Dielectric Constant in Parallel Direction $\varepsilon$ | Splay Elastic Constant K11 (pN) | Twist Elastic Constant K22 (pN) | Bend Elastic Constant K33 (pN) | K11/K33 | K11·K33 (pN²) | Transition Time (sec.) |
|---|---|---|---|---|---|---|---|---|---|---|
| C 1 | LC 11 | 11.6 | 3.9 | 15.5 | 6.4 | 5.8 | 14.2 | 0.451 | 90.89 | 2 |
| C 2 | LC 12 | 10.5 | 4.2 | 14.7 | 7.8 | 6.3 | 14.6 | 0.534 | 113.88 | 4 |
| C 3 | LC 13 | 11.0 | 4.0 | 15.0 | 8.4 | 7.2 | 15.4 | 0.545 | 129.36 | 8 |
| C 4 | LC 14 | 6.9 | 4.1 | 13.0 | 9.8 | 6.7 | 14.2 | 0.690 | 139.16 | 7 |
| C 5 | LC 15 | 10.7 | 3.9 | 14.6 | 13.2 | 6.1 | 15.2 | 0.868 | 200.64 | 43 |

Two polarizing plates were attached to each of the test cells C1 to C5 so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 3 above. Table 3 also shows the values of K11, K33, and so forth.

From Table 3 in addition to Tables 1 and 2 above, it is recognized that a liquid crystal display device comprising a liquid crystal material having a small K11 • K33 value can achieve high speed splay-to-bend transition. From the viewpoint of splay deformation, when K11 is smaller, the transition to bend alignment is more easily performed, and when K33 is smaller, bend deformation is more easily performed. Hence, when the product of K11 and K33, K11 • K33, is smaller, the transition to bend alignment is more easily performed.

**Example 1-4**

A liquid crystal display device produced according to Example 1-4 comprises, with particular attention being paid to a ratio K11/$\Delta\varepsilon$, a ratio of splay elastic constant K11 to dielectric anisotropy $\Delta\varepsilon$, a liquid crystal material in which K11/$\Delta\varepsilon$ is 1.0 pN or less. The reason for the restriction of K11/$\Delta\varepsilon \leqq 1.0$ pN is now detailed based on the experiments performed by the present inventors.

Five empty cells 9 each having the same configuration as those in Example 1-1 above were prepared in the same manner as in Example 1-1 above, except that the gap between the substrates was made to be 6.0 $\mu$m. Then, liquid crystal materials LC16 to LC20 as shown in Table 4 below were filled into the empty cells 9 by a vacuum filling method to prepare test cells D1 to D5, respectively.

Subsequently, two polarizing plates were attached to each of the test cells D1 to D5 so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 4.

TABLE 4

| Test Cell | Liquid Crystal Material | Dielectric Anisotropy Δε | Dielectric Constant in Perpendicular Direction ε | Dielectric Constant in Parallel Direction ε | Splay Elastic Constant K11 (pN) | Twist Elastic Constant K22 (pN) | Bend Elastic Constant K33 (pN) | K11/Δε (pN) | Transition Time (sec.) |
|---|---|---|---|---|---|---|---|---|---|
| D 1 | LC 16 | 12.1 | 4.1 | 16.2 | 6.2 | 5.9 | 15.5 | 0.512 | 3 |
| D 2 | LC 17 | 10.1 | 4.1 | 14.2 | 7.7 | 6.3 | 14.4 | 0.762 | 3 |
| D 3 | LC 18 | 8.6 | 3.8 | 12.4 | 8.8 | 7.4 | 14.8 | 1.023 | 8 |
| D 4 | LC 19 | 9.0 | 4.2 | 13.2 | 11.3 | 7.1 | 14.4 | 1.256 | 38 |
| D 5 | LC 20 | 11.7 | 4.0 | 15.7 | 13.8 | 7.7 | 15.6 | 1.179 | 29 |

From Table 4 above, it is recognized that a liquid crystal material having a ratio $K11/\Delta\varepsilon$ of 1.0 pN or less can achieve high speed splay-to-bend transition. A larger dielectric anisotropy $\Delta\varepsilon$ causes a larger displacement of the liquid crystal molecules, and a smaller K11 leads to an improved splay-to-bend transition. Therefore, it is preferable that a

ratio K11/$\Delta\epsilon$ is smaller.

In addition to the experiment described above, the present inventors performed the following experiment.

Five liquid crystal cells 9 each having the same configuration as those in Example 1-1 above were prepared in the same manner as in Example 1-1 above, except that the gap between the substrates was made to be 6.5 $\mu$m. Then, liquid crystal materials LC21 to LC25 as shown in Table 5 below were filled into the empty cells 9 by a vacuum filling method to prepare test cells E1 to E5, respectively.

## TABLE 5

| Test Cell | Liquid Crystal Material | Dielectric Anisotropy $\Delta\varepsilon$ | Dielectric Constant in Perpendicular Direction $\varepsilon$ | Dielectric Constant in Parallel Direction $\varepsilon$ | Splay Elastic Constant K11 (pN) | Twist Elastic Constant K22 (pN) | Bend Elastic Constant K33 (pN) | Transition Time (sec.) |
|---|---|---|---|---|---|---|---|---|
| E 1 | LC 21 | 13.3 | 4.3 | 17.6 | 6.5 | 6.2 | 14.7 | 127 |
| E 2 | LC 22 | 12.2 | 4.1 | 16.3 | 7.6 | 7.2 | 15.3 | 84 |
| E 3 | LC 23 | 10.3 | 4.0 | 14.3 | 9.2 | 6.9 | 15.0 | 45 |
| E 4 | LC 24 | 10.2 | 4.3 | 14.5 | 12.2 | 7.2 | 14.6 | 33 |
| E 5 | LC 25 | 11.1 | 3.9 | 15.0 | 13.5 | 7.5 | 15.7 | 25 |

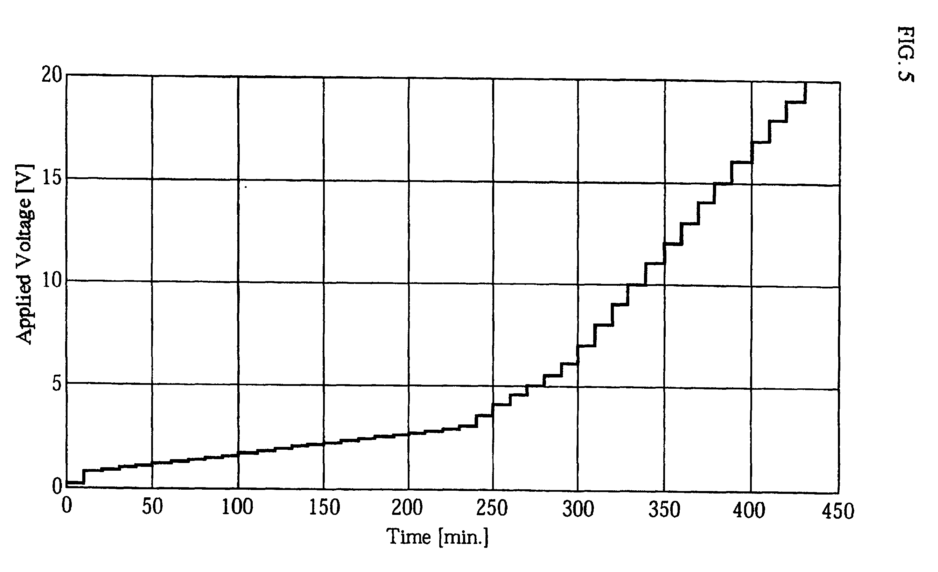

To each of the test cells, a rectangular wave voltage of 20 V was applied for 2 minutes so that the entire electrode region to be transformed into bend alignment, and thereafter the voltage was reduced to 20 mV, in order to obtain a time required for the entire electrode region to be transformed into splay alignment. The results were, as reported in Fig. 5, 127 seconds, 84 seconds, 45 seconds, 33 seconds, and 25 seconds, respectively. Meanwhile, another measurement was carried out to measure a time required for the transition from splay alignment to bend alignment by applying a voltage of 7 V to each of the test cells E1 to E5. The results were 1 seconds, 2 seconds, 5 seconds, 18 seconds, and 33 seconds, respectively.

In a system in which the transition from splay alignment to bend alignment is easy (high speed), since an energy difference therebetween is small, a time required for the transition from bend alignment to splay alignment becomes conversely longer.

As apparent from the present example, a liquid crystal material in which a time required the transition from bend alignment to splay alignment is 45 seconds or longer can achieve high speed splay-to-bend transition.

**Example 1-5**

A liquid crystal display device produced according to Example 1-5 comprises, with particular attention being paid to a hysteresis S of capacitance-voltage (C-V) characteristic, a liquid crystal material in which the hysteresis S is $1.0 \times 10^4$ V/m or lower. To date, it has been generally considered that hysteresis does not exist in bend alignment mode liquid crystal display devices. However, during an experiment for developing a bend alignment mode liquid crystal display device, the present inventors found that hysteresis exists in bend alignment mode liquid crystal display devices. Paying particular attention to the size of hysteresis S, the present inventors carried out intensive studies and as the result achieved a liquid crystal display device capable of a fast transition to bend alignment. Now, the reason for the restriction of hysteresis $S \leqq 1.0 \times 10^4$ is detailed below based on the results of the experiments by the present inventors.

Five empty cells 9 each having the same configuration as those in Example 1-1 above were prepared in the same manner as in Example 1-1 above, except that the gap between the substrates was made to be 9.5 µm. Then, liquid crystal materials LC26 to LC30 as shown in Table 6 below were filled into the empty cells 9 by a vacuum filling method to prepare test cells F1 to F5, respectively.

## TABLE 6

| Test Cell | Liquid Crystal Material | Dielectric Anisotropy $\Delta\varepsilon$ | Dielectric Constant in Perpendicular Direction $\varepsilon$ | Dielectric Constant in Parallel Direction $\varepsilon$ | Splay Elastic Constant K11 (pN) | Twist Elastic Constant K22 (pN) | Bend Elastic Constant K33 (pN) | $S \cdot 10^{-4}$ (V/m) | Time (sec.) |
|---|---|---|---|---|---|---|---|---|---|
| F1 | LC26 | 12.7 | 4.1 | 16.8 | 8.7 | 5.6 | 14.1 | 0.347 | 2 |
| F2 | LC27 | 10.3 | 4.0 | 14.6 | 7.6 | 6.9 | 15.6 | 0.662 | 3 |
| F3 | LC28 | 8.9 | 3.8 | 13.7 | 9.4 | 7.1 | 15.1 | 1.010 | 7 |
| F4 | LC29 | 9.2 | 4.1 | 13.3 | 10.3 | 5.4 | 12.2 | 1.107 | 34 |
| F5 | LC30 | 9.7 | 4.4 | 14.1 | 13.3 | 7.6 | 14.7 | 1.243 | 53 |

Then, using each of the test cells F1 to F5, changes of cell capacitances at each predetermined voltage with respect to time were measured by applying a voltage to each cell in such a manner that the applied voltage was increased in a stepwise manner as shown in Fig. 5. The measurement of the cell capacitances was performed with the use of a precision LCR meter (HP-4284A available from Hewlett Packard), and the applied voltage was a 1 kHz sine wave voltage.

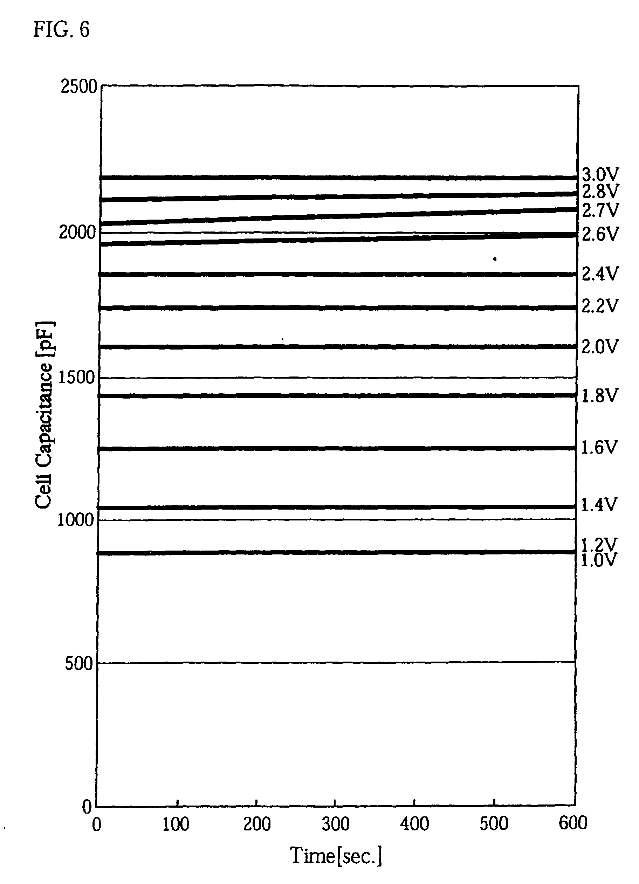

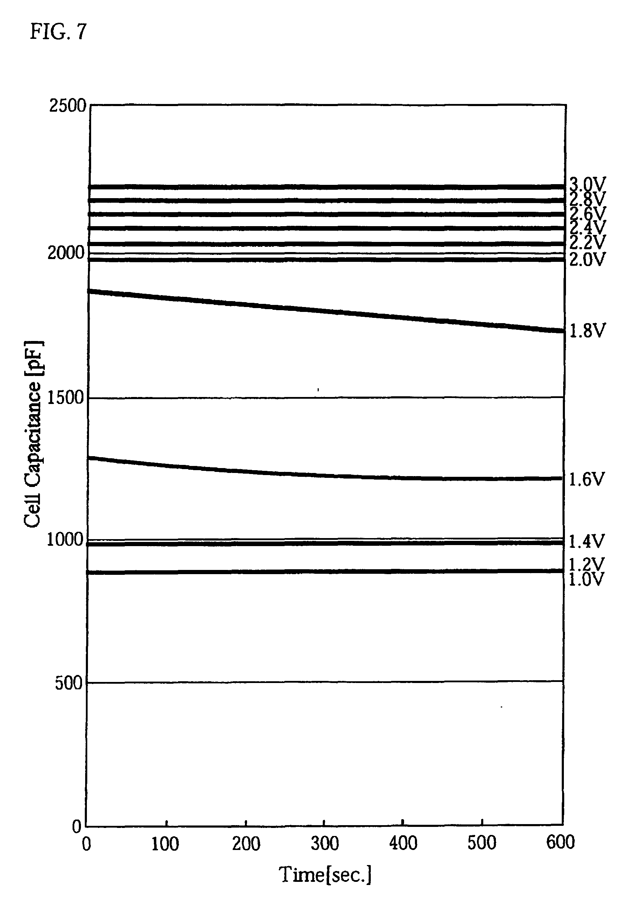

In addition, while decreasing voltage, changes of a cell capacitance were measured with respect to time. In the measurement in the case of decreasing voltage, a voltage of 30 V (a voltage value at which voltage the transition to bend alignment is ensured) was initially applied and the resulting transition to bend alignment was confirmed by visual observation, and thereafter the voltage was decreased in a stepwise manner at the rate shown in Fig. 5. In the measurement with decreasing voltage, a voltage of 30 V was initially applied and the resulting transition to bend alignment was confirmed by visual observation, and thereafter the voltage was decreased in a stepwise manner at the rate shown in Fig. 5. Figs. 6 and 7 show the capacitance change of the test cell F5 at each predetermined voltage with respect to time.

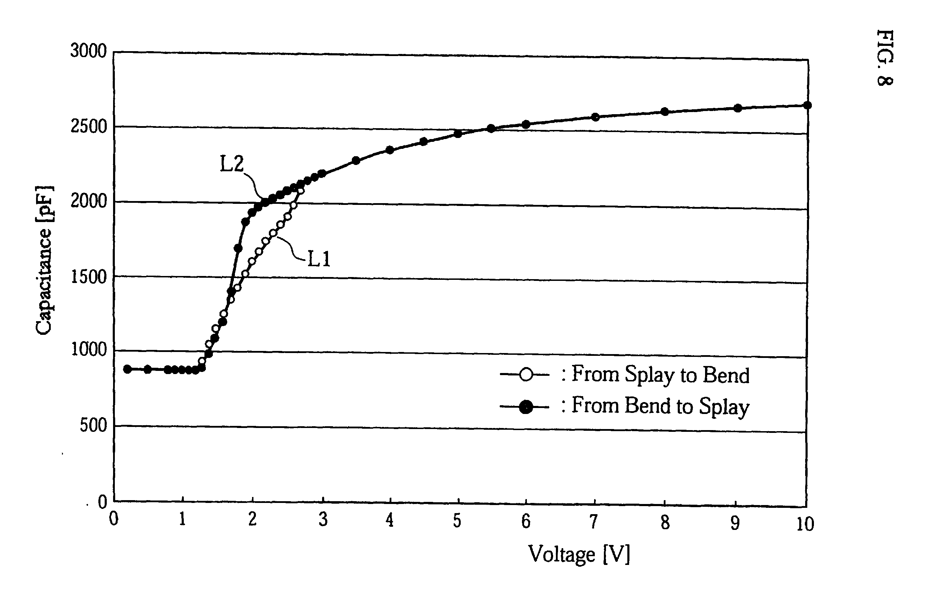

Next, a capacitance at each predetermined voltage value was defined by an average capacitance between 595 seconds and 600 seconds from the start of voltage application, and a capacitance-voltage (C-V) characteristic was obtained. A graphical representation of the capacitance-voltage (C-V) characteristic thus obtained is shown in Fig. 8. The reason why the duration between 595 seconds and 600 seconds was selected is that, in the duration between 595 seconds and 600 seconds, capacitance change of the cell was completed and the capacitance was stabilized, except at specific predetermined voltage values (2.6 V and 2.7 V in Fig. 6). At these specific predetermined voltage values, the capacitance showed an increase because of a sudden change from the maximum splay alignment to bend alignment, i.e., a relaxation of alignment. As shown in Fig. 7, likewise, the duration of from 595 seconds to 600 seconds was selected also in the case of the voltage being decreased for the same reason as in the case of the voltage being increased. As seen in Fig. 7, the capacitance showed a decrease at specific predetermined voltage values (1.8 V and 1.6 V in Fig. 7) because a sudden change from bend alignment to the maximum splay alignment, i.e., a relaxation of alignment occurred. Those specific predetermined voltage values approximately correspond to the uppermost voltage value of the hysteresis shown in Fig. 8 in the case of increasing the voltage, and the lowermost voltage value of the hysteresis in the case of decreasing the voltage. This indicates that there is an energy difference between splay alignment and bend alignment.

It is to be noted here that in Fig. 8, an area size of the region surrounded by the C-V hysteresis curves corresponds to the energy difference between splay alignment and bend alignment, and to the easiness of the splay-to-bend transition. In the case of the transition from bend alignment to splay alignment, the transition should occur automatically when the applied voltage is made to be 0 V. Taking into account the sizes of their free energies, it is considered that the transition from bend alignment to splay alignment occurs abruptly when the voltage is made 0 V. and accordingly, the line L2 in Fig. 8 shows a sudden drop towards 0 V. Therefore, it is ideal that the transitions between splay alignment and bend alignment are represented by the line L2. That is, the tine L1 that represents the transition from splay alignment to bend alignment should essentially be identical to the line L2. However, since there is an energy difference between the energy required for the transition from splay alignment to bend alignment and the energy required for the transition from bend alignment to splay alignment, the line L1 shows a rise with a gentler curve. For this reason, it can be concluded that when the line L1 becomes closer to the line L2, the transition from splay alignment to bend alignment occurs more easily.

Now, the area size S of the region surrounded by the C-V curves was defined by the following expression (1):

$$\text{Expression (1)}$$

$$S = \frac{\int_a^b (C_{BS} - C_{SB})dv}{(C_{max} - C_{min}) \bullet L}$$

and the area S were calculated.

In Expression (1) above, "a" [V] denotes a lowermost voltage at which the hysteresis is recognized "b" [V] denotes an uppermost voltage at which the hysteresis is recognized; "$C_{BS}$" [pF] is a cell capacitance at which the transition from bend alignment to splay alignment occurs; "$C_{SB}$" [pF] is a cell capacitance at which the transition from splay alignment to bend alignment occurs; "$C_{max}$" and "$C_{min}$" are a maximum cell capacitance [pF] and a minimum cell capacitance [pF] respectively; and "L" [m] is a thickness of the liquid crystal layer.

With regard to the other test cells, S values were calculated based on C-V characteristics measured. The results thus obtained are shown in the Table 6 above.

In addition, for each of these cells, a time required for the transition from splay alignment to bend alignment was obtained by visually monitoring the transition from splay alignment to bend alignment while applying a rectangular wave voltage of 7 V to each cell. The results are also reported in Table 6 above.

As apparent from Table 6 above, those liquid crystal materials in which $S \leqq 1.0 \times 10^4$ V/m can achieve high-speed splay-to-bend transition.

It is noted that S values in Example 1-5 are a function of (anchoring energy A of alignment layer / elastic constant K), and they can vary according to a pretilt angle of the liquid crystal material. In particular, when a pretilt angle is made larger, an S value becomes smaller, resulting in a faster splay-to-bend transition.

**Example 1-6**

A liquid crystal display device produced according to Example 1-6 comprises at least one liquid crystal system selected from biphenyl liquid crystal, pyrimidine liquid crystal, and dioxane liquid crystal. The reason for specifying the materials as above is detailed below based on the results of the experiments by the present inventors.

Three empty cells 9 each having the same configuration as those in Example 1-1 above were prepared in the same manner as in Example 1-1 above, except that the gap between the substrates was made to be 5.5 μm. Then, liquid crystal materials LC31 to LC33 as shown in Table 7 below were filled into the empty cells 9 by a vacuum filling method to prepare test cells G1 to G3, respectively. Additionally, a liquid crystal material LC40 shown in Table 7 below was filled into another empty cell 9, and thus a test cell J was prepared.

## TABLE 7

| Test Cell | Liquid Crystal Material | Liquid Crystal Structure | Dielectric Anisotropy Δε | Dielectric Constant in Perpendicular Direction ε | Dielectric Constant in Parallel Direction ε | Splay Elastic Constant K11 (pN) | Twist Elastic Constant K22 (pN) | Bend Elastic Constant K33 (pN) | Time (sec.) |
|---|---|---|---|---|---|---|---|---|---|
| G 1 | LC 31 | Dioxane Liquid Crystal | 13.2 | 9.8 | 23.0 | 5.1 | 3.7 | 7.9 | 3 |
| G 2 | LC 32 | Biphenyl Liquid Crystal | 10.6 | 5.8 | 16.4 | 7.0 | 5.7 | 10.2 | 5 |
| G 3 | LC 33 | Pyrimidine Liquid Crystal | 10.8 | 6.8 | 17.6 | 5.0 | 5.1 | 6.3 | 4 |
| J | LC 40 | Phenylcyclohexane Liquid Crystal |  |  |  | 10.2 | 10.8 | 23.8 | 13 |

It is noted that, in order to evaluate the easiness of splay-to-bend transition depending on liquid crystal structures, the liquid crystal compositions used in Example 1-6 is constituted by homologous series liquid crystal materials having common liquid crystal skeletons.

Next, two polarizing plates were attached to each of the test cells G1 to G3, and J so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 7 above.

As seen from Table 7 above, it is recognized that biphenyl liquid crystal, pyrimidine liquid crystal, and dioxane liquid crystal can exhibit high-speed transition. The reason is considered to be that these liquid crystal materials have a splay elastic constant K11 relatively smaller than that of phenylcyclohexane liquid crystal. The same can be said for other liquid crystals including ethane liquid crystal.

Usually, a liquid crystal composition is composed of a mixture of from several to 20 types of liquid crystal compounds, in order to adjust the operating temperature of liquid crystal, birefringence, and dielectric anisotropy thereof. From the results of the experiment in this example, it is clear that a liquid crystal composition comprising biphenyl liquid crystal, pyrimidine liquid crystal, or dioxane liquid crystal exhibits high-speed splay-to-bend transition.

Generally, the elastic constants of a liquid crystal composition in which plural types of liquid crystal molecules having different skeletons are mixed are smaller than the values obtained by calculating the elastic constants of each type of the liquid crystal molecules by additivity. Therefore, the addition of pyrimidine liquid crystal, biphenyl liquid crystal, or dioxane liquid crystal is very effective.

**Example 1-7**

A liquid crystal display device produced according to Example 1-7 is, with particular attention being paid to a pretilt angle, characterized in that a pretilt angle on a surface of at least one substrate is two degrees or more. The reason for restricting a pretilt angle to be two degrees or more is detailed below on the basis of the results of experiments by the present inventors.

First, a test cell as shown in Fig. 1 was prepared in the following manner. An alignment layer agent, JALS-246 available from JSR was applied by spin coating onto a pair of glass substrates 1 and 8 having transparent electrodes 2 and 7 thereon respectively, and the agent was cured in a temperature bath for one hour at 150 °C to form alignment layers 3 and 6. Thereafter, a rubbing treatment was performed in the directions shown in Fig. 2 with the use of a rubbing cloth made of rayon. Then, the substrates 1 and 8 were attached together with spacers 5 (available from SEKISUI Fine Chemical Co. Ltd.) interposed therebetween, and sealed with STRUCTBOND 352A (trademark, a sealing resin available from MITSUI TOATSU Chemical, INC.) so that the gap between the substrates was 5.8 μm. Five empty cells 9 were thus prepared.

In the rubbing treatment described above, a rubbing strength was varied so that each cell has a different liquid crystal pretilt angle.

Subsequently, a liquid crystal material LC34 as shown in the Table 8 was filled into each of the empty cells 9 by a vacuum filling method to prepare test cells H1 to H5.

## TABLE 8

| Test Cell | Liquid Crystal Material | Dielectric Anisotropy $\Delta\varepsilon$ | Dielectric Constant in Perpendicular Direction $\varepsilon$ | Dielectric Constant in Parallel Direction $\varepsilon$ | Splay Elastic Constant K11 (pN) | Twist Elastic Constant K22 (pN) | Bend Elastic Constant K33 (pN) |
|---|---|---|---|---|---|---|---|
| H1 to H5 | LC 34 | 8.3 | 4.4 | 12.7 | 10.2 | 5.0 | 12.0 |

Next, two polarizing plates were attached to each of the test cells H1 to H5 so that the axes of polarization are perpendicular to each other. For each cell, a time required for the entire electrode region to be transformed from splay alignment to bend alignment was obtained by visually monitoring the transition from splay alignment to bend alignment while applying a rectangular wave voltage of 7 V to each cell. The results are reported in Table 9 below. Table 9 also shows liquid crystal pretilt angles in the test cells, which were measured separately.

TABLE 9

| Test cell | Pretilt angle (degree) | Time (sec.) |
|---|---|---|
| H1 | 1.2 | 25 |
| H2 | 2.1 | 10 |
| H3 | 3.5 | 8 |
| H4 | 5.2 | 6 |
| H5 | 6.6 | 6 |

As seen from Table 9, in order to achieve high-speed splay alignment, it is preferable that a pretilt angle be two degrees or larger. This is because a large pretilt angle results in a large displacement of splay alignment when a voltage being applied, and thereby splay-to-bend transition easily occurs. Moreover, making a pretilt angle to be large, a driving voltage can be reduced and in addition, an initialization voltage can be reduced also.

It is to be noted here that when a pretilt angle is too large, adverse effects might be caused on stability of the pretilt angle and stability of voltage-transmissivity characteristic. Therefore, it is necessary that an appropriate pretilt angle be designated. For this reason, stability of a pretilt angle being considered, it is preferable that a pretilt angle be in the range of 2 degrees to 6 degrees.

**Miscellaneous**

The present invention is not limited to Examples 1-1 to 1-7 above, and the constructions in each of the Examples 1-1 to 1-7 may be used in combination.

In liquid crystal display devices according to Embodiment 1, either a positive retardation plate or a negative retardation plate may be employed. In order to obtain desirable display characteristics, however, a negative retardation plate is more preferable.

Further, the retardation plate may be placed either at both the outsides of a pair of substrates, or at only an outside of one of the pair of substrates.

**EMBODIMENT 2**

Now, with reference to the figures, Embodiment 2 according to the present invention is detailed.

As already described in Embodiment 1 above, in an OCB mode type liquid crystal display device, a director distribution of the liquid crystal changes from splay alignment to bend alignment through a certain process when applying an initializing voltage.

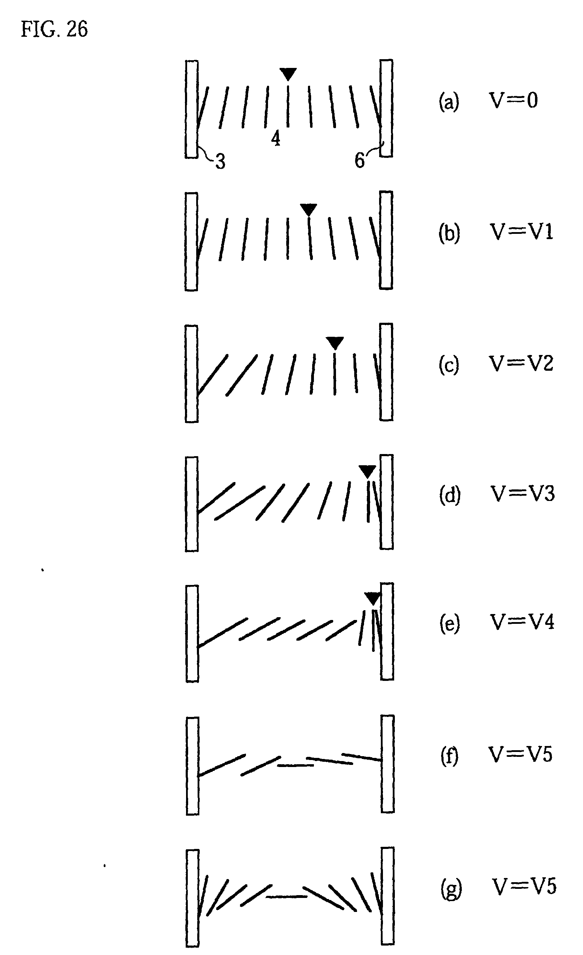

Figs. 26(a) to (g) schematically illustrate the change of liquid crystal directors in the liquid crystal layer in a typical OCB mode liquid crystal display device, when an applying voltage is sequentially increased from 0 to V1 to V2 to V3 to V4 to V5 (wherein 0 < V1 < V2 < V3 < V4 < V5).

In this case, initial values of liquid crystal pretilt angles (liquid crystal pretilt angles when no voltage is applied) at both the interface with the alignment layer described on the right hand of the figure and the interface with the alignment layer described on the left hand side of the figure are made the same value.

The detail of the change of alignment will be described below with reference to Fig. 26.

Fig. 26(a) represents an alignment state of liquid crystal when no voltage is applied (splay alignment). In this case, naturally, the liquid crystal directors in the center of the cell are parallel to the substrates.

In Figs. 26(a) to 26(g), a triangular mark (▼) denotes a position in which the liquid crystal director is parallel to the alignment layers (the substrates) with respect to a thickness direction of the liquid crystal layer.

Consider the case where a voltage V1, being larger than a threshold voltage, is applied to a liquid crystal display device in the state of Fig. 26(a). Liquid crystal molecules at the center of the cell incline first, as shown in Fig. 26(b), since the liquid crystal molecules at the center are the most distant from the alignment layers, which restrict the movement of liquid crystal molecules. This results in an increase of the liquid crystal pretilt angle at the interface with one of the alignment layers (the one on the left of the figure), and results in a decrease of the liquid crystal pretilt angle at the interface with the other alignment layer (the one on the right of the figure). Correspondingly, the position at which the liquid crystal director is parallel to the substrates shifts towards the interface with one of the alignment layers having a smaller pretilt angle.

Figs. 26(c) and 26(d) show the cases where the applied voltage is further increased. The pretilt angle at the interface with the alignment layer 3 having a larger pretilt angle, which is on the left in the figure, is further increased, whereas the pretilt angle at the interface with the alignment layer 4 having a smaller pretilt angle, which is on the right of the figure, is further decreased. In Fig. 26(d) showing a state where the voltage is still further increased, the liquid crystal molecules having a director orientation parallel to the substrates are almost in the vicinity of the interface with the alignment layer having a lower pretilt angle.

Fig. 26(e) shows an alignment state immediately before entering the bend alignment, the alignment state being obtained by applying a voltage V4, and Fig. 26(f) shows an alignment state when bend alignment is entered by applying a voltage V5. The liquid crystal molecules having a director orientation parallel to the alignment layers exists in Fig. 26(e) as well, but does not exist in Fig. 26(f).

Once an alignment state of Fig. 26(f) is entered, the liquid crystal display device can perform a fast transition to the alignment state shown in Fig. 26(g) (a normal state).

From the transition mechanism described above, it is understood that, in order to achieve a fast splay-to-bend transition, it is important that a liquid crystal director orientation at or around the center of the liquid crystal layer be perpendicular to the alignment layers (the substrates) and a pretilt angle at one of the interfaces with the alignment layers be small. In other words, by employing such settings, a faster splay-to-bend transition can be achieved.

Accordingly, in the present embodiment of the invention, various means are taken to optimize the liquid crystal director orientation at or around the center of the liquid crystal layer, and pretilt angles at the interfaces with the alignment layers, so that a fast splay-to-bend transition can be achieved.

Now, Embodiment 2 of the invention is detailed below based on Examples thereof.

**Example 2-1**

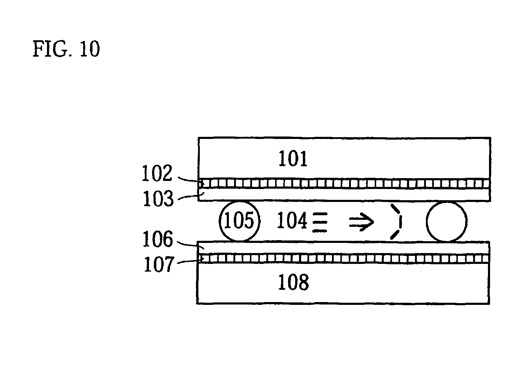

Fig. 10 schematically illustrates a cross sectional view of the construction of a liquid crystal display device produced according to Example 2-1, which is a test cell used for an experiment regarding splay-to-bend transition time.

Firstly, fabrication of the liquid crystal display device according to Example 2-1 is described. On two glass substrates 101 and 108 each having transparent electrodes 102 and 107 thereon respectively, an alignment layer agent SE-7492 available from Nissan Chemical Industries Co. Ltd. was applied by spin coating, and the agent was cured in a temperature bath for one hour at 180°C, thereby forming alignment layers 103 and 106.

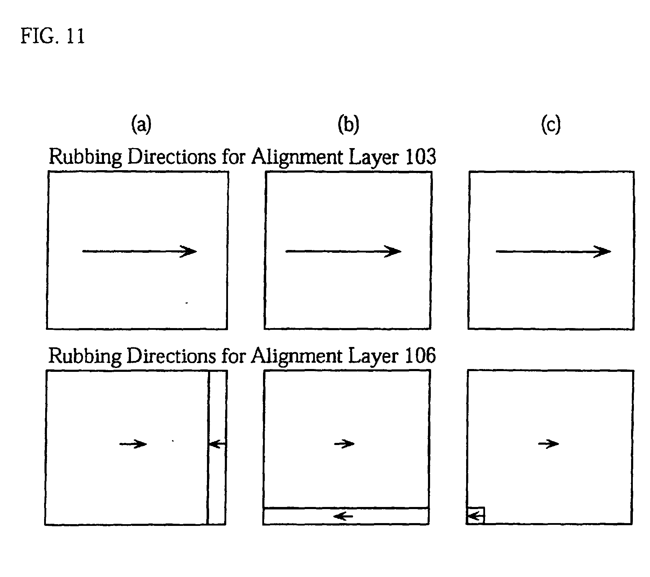

Thereafter, a rubbing treatment was performed in directions shown in Fig. 11(a) with the use of a rubbing cloth made of rayon. Then, the substrates were attached together with spacers 5 available from SEKISUI Fine Chemical Co. Ltd. interposed therebetween, and sealed with STRUCTBOND 352A (trademark, a sealing resin available from MITSUI TOATSU Chemical, INC.) so that the gap between the substrates was 6.5 μm. A liquid crystal cell according to Example 2-1 was thus prepared. (This liquid crystal cell is hereinafter referred to as a 'liquid crystal cell A'.)

The above-described rubbing treatment was performed as follows. For the alignment layer 103, which is shown in Fig. 10 as the upper alignment layer, rubbing was unidirectionally performed throughout the entire surface, as shown in the upper figure of Fig. 11(a). On the other hand, for the lower alignment layer 106, rubbing was first performed in the same direction as that for the upper alignment layer 103, and thereafter using a technique of mask rubbing, rubbing was performed in the opposite direction for only a partial region, which is on the right of the lower figure of Fig. 11(a).

In a like manner, as variations of Example 2-1, two liquid crystal cells were prepared. In each of these liquid crystal cells, a region treated by the reverse direction rubbing was provided, and as shown in the lower figures of Figs. 11(b) and 11(c), the shapes and dispositions of the reverse-direction-rubbing regions were made different from those of the liquid crystal cell A. These liquid crystal cells thus prepared are hereafter referred to as a liquid crystal cell B, and a liquid crystal cell C, respectively.

Next, a liquid crystal MJ96435 was filled into each of the liquid crystal cells A, B, and C by a vacuum filling method to form test cells A, B, and C, respectively. Fig. 10 also shows a liquid crystal layer 105 and spacers 104.

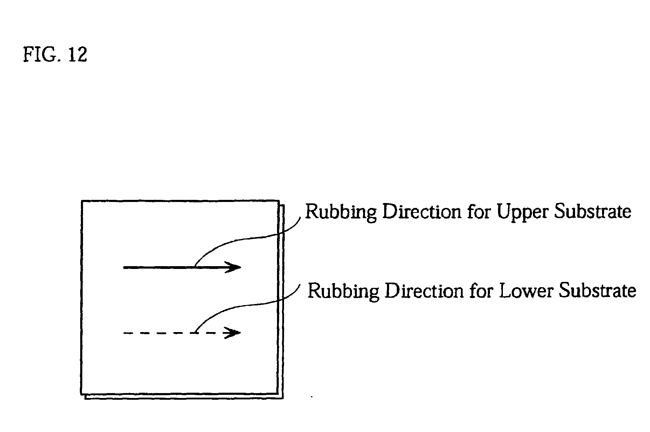

Finally, a pair of polarizing plates were attached to each of the test cells A, B, and C so that each of the axes of polarization made an angle of 45 degrees with the rubbing directions of the alignment layers, and the axes were also perpendicular to each other. (This step is not shown in Figs. 10 and 12 for the sake of clarity and convenience in the drawings, and the technique is well-known and disclosed, for example, in Figure 1.2 on page 15 in "Jisedai Ekisho Disupurei Gijyutsu".) Then, the test cells were subjected to a visual monitoring to observe the transition from splay alignment to bend alignment while voltages being applied.

**Comparative Example**

As a Comparative Example, a test cell R was prepared in the same manner as in Example 2-1 except that the reverse-direction-rubbing region was not provided in either the upper alignment layer or the lower alignment layer shown in Fig. 12. In other words, a prior art splay alignment liquid crystal cell was prepared. The liquid crystal MJ96435 was filled into the cell to complete a test cell R.

A rectangular wave voltage of 7 V was applied to the test cell R, and a time required for the entire electrode region to be transformed from splay alignment to bend alignment was observed.

For each of the test cells of Example 2-1 and the Comparative Example, a time required for the entire electrode region to be transformed from splay alignment to bend alignment was obtained by visually monitoring the transition from splay alignment to bend alignment while applying a rectangular wave voltage of 7 V to each cell. The results are reported in Table 10 below.

TABLE 10

| Liquid Crystal Cell | Transition Time (Second) |
|---|---|
| A | 5 |
| B | 4 |
| C | 7 |
| R (Comparative Example) | 42 |

As is apparent from Table 10, while the Comparative Example showed a transition time of 42 seconds, the test cells A, B, and C according to Example 2-1 and the variations exhibited faster transition times, 5, 4, and 7 seconds respectively.

The reason is that in any cases of (a), (b), and (c) in Fig 2, a portion in which a liquid crystal director is parallel to the substrate plane, or to the alignment layer plane, exists in the boundary region of two differently rubbed regions in the lower alignment layer, and therefore, an interface with an alignment layer having a small pretilt angle as shown in Figs. 26(e) and (f) has been formed at the initial stage.

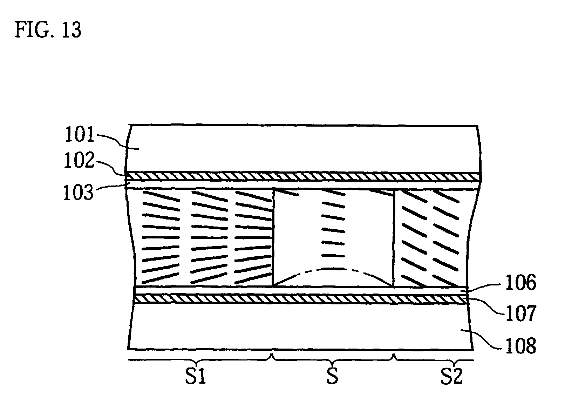

Now, referring to Fig. 13, further detailed explanation is given below. Fig. 13 shows an enlarged view of the boundary region between two regions each treated by a rubbing in a different direction, which regions shown in Fig. 11(a). In Fig. 13, the boundary region is represented by the reference character S.

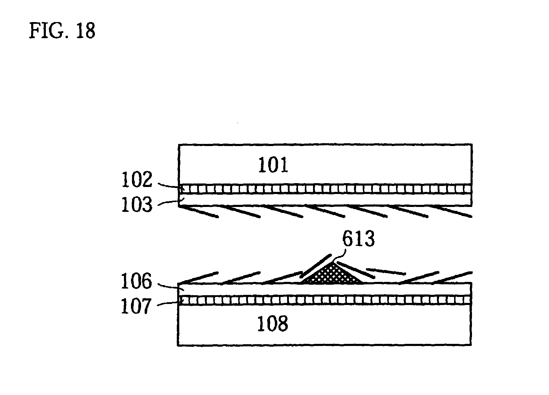

The alignment states in the liquid crystal regions on both right and left sides of the boundary region S are that: the region on the left of the boundary region S shows splay alignment since the alignment layers 103 and 106 are rubbed in the same direction, whereas the region on the right of the boundary region S shows homogeneous alignment since the alignment layers 103 and 106 are rubbed in opposite rubbing directions. Thus, the boundary region S is sandwiched between a splay alignment region S1 and a homogeneous alignment region S2. In the boundary region S, it is considered that there exists a portion in which a liquid crystal director is parallel to the substrate in the vicinity of the interface with the alignment layer 106. Taking into consideration that liquid crystal is a continuous matter, in the boundary region S sandwiched by a region where the pretilt angle is positive and a region where the pretilt angle is negative, there must exist a portion in which a liquid crystal director is parallel to the substrates. Since the portion in which a liquid crystal director is parallel to the substrates exists in the vicinity of the interface with the alignment layer, the pretilt angle at the interface with the alignment layer 106 is small in the boundary region S. Accordingly, the alignment layer interface having a small pretilt angle as shown in Figs. 18(e) and (f) is thus formed at the initial stage. Therefore, nuclei for the splay-to-bend transition can easily develop in the boundary region S, and as a result, the transition from splay alignment to bend alignment can be easily performed.

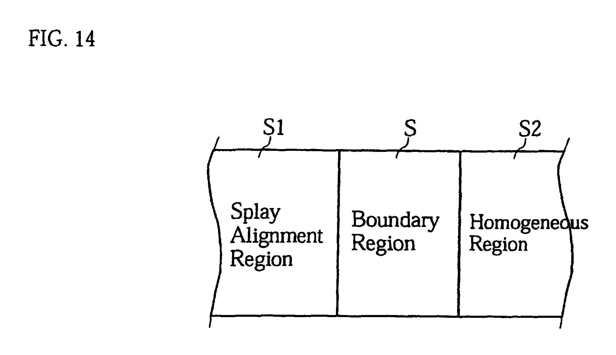

It is to be noted that the alignment state of the liquid crystal of the present Example is such that as shown in Fig. 14, the boundary region S is sandwiched between the splay alignment region S1 and the homogeneous region S2. Accordingly, it is considered that if the alignment state shown in Fig. 5 can be obtained, the transition from splay alignment to bend alignment can be easily performed. In view of this, in order to produce a liquid crystal layer having such an alignment state, the present example employs a rubbing treatment in which the rubbing direction for the alignment layer 106 is the opposite direction to that for the alignment layer 103.

Thus, in the present example, the displacement of the liquid crystal directors proceeds in a remarkably smooth manner, resulting in a fast splay-to-bend transition. (Note that what is important here is not that the liquid crystal director is parallel to the alignment layer plane, but that a slightly tilted liquid crystal director exists adjacent thereto.)

It is to be noted here that bend alignment cannot be rapidly formed in the region in which the liquid crystal director on the alignment layer surface is perfectly parallel to the alignment layer plane. Therefore, it is preferable that the region in which the liquid crystal director on the alignment layer surface is perfectly parallel to the alignment layer plane be disposed at an edge region of or outside the display region, for example in a black matrix region.

In the present example, liquid crystal pretilt angles are identical in both upper and lower alignment layers (upper and lower substrates). However, as will be described in the following Examples, the liquid crystal pretilt angles may be different between the upper alignment layer plane and the lower alignment layer plane.

**Example 2-2**

In Example 2-2, a test cell used in an experiment for measuring splay-to-bend transition time has a similar structure and construction to the test cells in the foregoing example shown in Fig. 10.

The preparation of the test cell is now described below. On two glass substrates 101 and 108 each having transparent electrodes 102 and 107 thereon respectively, an alignment layer agent AL-0656 available from JSR Co. Ltd. was applied by spin coating, and then the agent was cured in a temperature bath for one hour at 180°C to form alignment layers 103 and 106.

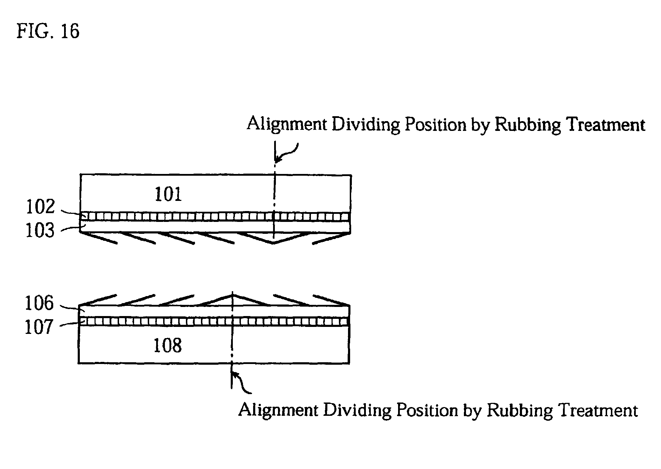

Thereafter, as shown in Fig. 16, the surface area of the substrate was divided into two portions (regions) and each of the portions were subjected to a rubbing treatment with the use of a rubbing cloth made of rayon in such a manner that the rubbing directions for the two portions were opposite to each other.

Then, the substrates were attached together with spacers 5 available from SEKISUI Fine Chemical Co. Ltd. interposed therebetween, and sealed with STRUCTBOND 352A (trademark, a sealing resin available from MITSUI TOATSU Chemical, INC.) so that the gap between the substrates was 8.5 μm. A liquid crystal cell of Example 2-2 was thus prepared. (This liquid crystal cell is hereinafter referred to as a "liquid crystal cell D".)

It is noted that in both alignment layers on the upper and lower substrates, the two regions in which the rubbing directions differed by 180 degrees were separated exactly at the center of the liquid crystal display device, as shown in the figure.

Thereafter, a liquid crystal MJ96435 was filled into the liquid crystal cell D by a vacuum filling method, to complete a test cell D.

A time required for the entire electrode region to transform from splay alignment to bend alignment was 5 seconds when a rectangular wave voltage of 7 V being applied, which confirms a remarkably fast splay-to-bend transition.

According the present example, in the test cell D, the portion in which the liquid crystal director is parallel to the substrate plane of the test cell exists in the vicinity of the boundary region between the two different alignment regions, and therefore, an interface with an alignment layer having a small pretilt angle as shown in Figs. 26(e) and (f) is formed at the initial stage. Accordingly, the displacement of liquid crystal directors proceeds in a remarkably smooth manner, and a fast splay-to-bend transition is thereby achieved.

Needless to say, in the rubbing treatment, the dividing positions at which two different alignment regions meet can be varied between the two opposed alignment layers on the substrates. In this case, two splay alignment regions and a homogeneous (parallel) alignment region sandwiched by the two splay alignment regions, are formed in the device. A distribution of liquid crystal directors in such a device is shown in Fig. 16.

In the device, the liquid crystal directors were parallel to the substrate plane in a region adjacent to the alignment dividing position in the vicinity the surface of one of the alignment layers and in a region adjacent to the alignment dividing position in the vicinity of the surface of the other alignment layer, and a fast splay-to-bend transition time of 5 seconds was confirmed.

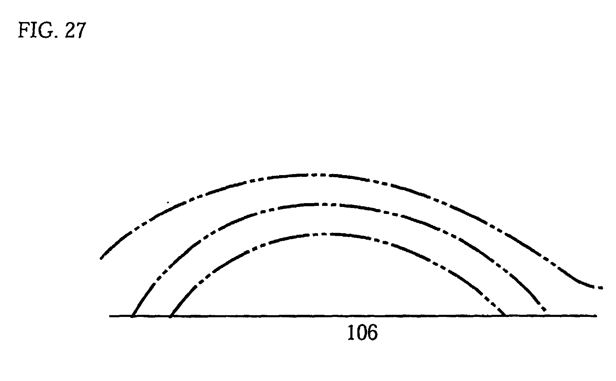

The state in which the liquid crystal directors are parallel to the substrate plane is schematically illustrated in Fig. 27.

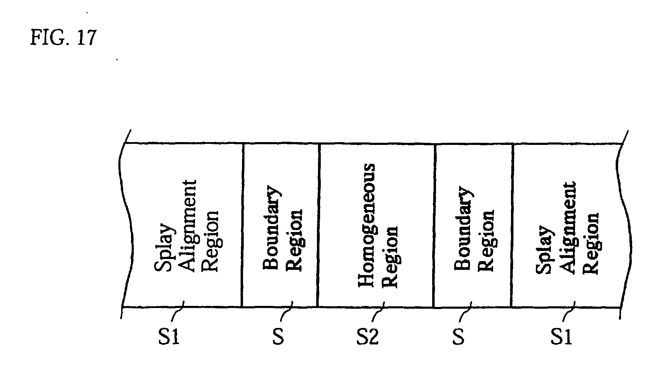

More specifically, with reference to Fig. 17, two of the alignment state in which the boundary region S exists between a splay alignment region S1 and a homogeneous alignment region S2 are formed in a parallel direction to the substrates. In other words, two of the construction of Fig. 14 are provided. Hence, in each boundary region S, a nucleus for the splay-to-bend transition is formed, and thereby it is made possible to achieve a liquid crystal display device capable of faster transition than that in Example 2-1.

**Example 2-3**

In Example 2-2, a test cell used in an experiment for measuring splay-to-bend transition time has a similar structure and construction to the test cells in the foregoing Example shown in Fig. 10.

The preparation of the test cell is now described below. On two glass substrates 101 and 108 each having transparent electrodes 102 and 107 thereon respectively, an alignment layer agent SE-7492 available from NISSAN Chemical Industries Co. Ltd. was applied by spin coating, and then the agent was cured in a temperature bath for one hour at 180 °C to form alignment layers. Then, with the use of a rubbing cloth made of rayon, rubbing treatment was performed on the entire surfaces of both upper and lower alignment layers in the same direction, as shown in Fig. 12.

In the rubbing treatment for the upper alignment layer 103, a rubbing density was relatively reduced so that a liquid crystal pretilt angle of 8 degrees was obtained, while in the rubbing treatment for the lower alignment layer 106, a rubbing density was relatively increased so that a liquid crystal pretilt angle of 2 degrees was obtained.

Needless to say, with regard to the relationship between the densities of rubbing treatment and pretilt angles, optimum conditions including pressures, speeds, diameters of the roller, procedures, rubbing materials and so forth should be employed depending on types of alignment layers and specific liquid crystal materials, procedures for forming alignment layers, heat treatments and so forth.

It is not particularly difficult to obtain such optimum conditions depending on each procedure, and in addition, the quantification of parameters, rubbing densities, and strengths is known technique described in for example the sections 8, 10.11, 10.12, and elsewhere in "Ekisho Disupurei no Saisentan" and so forth. Therefore, the description thereof will not be further elaborated upon herein.

Then, the substrates were attached together with spacers 5 available from SEKISUI Fine Chemical Co. Ltd. interposed therebetween, and sealed with STRUCTBOND 352A (trademark, a sealing resin available from MITSUI TOATSU Chemical, INC.) so that the gap between the substrates was 8.5 $\mu$m to produce a liquid crystal cell. This liquid crystal cell is hereinafter referred to as a "liquid crystal cell E".

Thereafter, a liquid crystal MJ96435 was filled into the liquid crystal cell E by a vacuum filling method to complete a test cell E.

Subsequently, a pair of polarizing plates were attached to the test cell E so that the axes of polarization made an angle of 45 degrees with the rubbing direction of the alignment layers, and the axes of polarization were also perpendicular to each other. Then, using the test cell E, the transition from splay alignment to bend alignment was observed while applying a voltage.

When a rectangular wave of 7 V was applied to the test cell E, a time required for the entire electrode region to transform from splay alignment to bend alignment was 3 seconds, which was remarkably fast.

In the splay alignment of a liquid crystal display device in this example, the pretilt angles of the upper substrate and the lower substrate are asymmetrical, and the liquid crystal director orientation at the center of the liquid crystal layer, at which liquid crystal molecules are most mobile, are therefore aligned in a tilted manner with respect to the alignment layer planes. Consequently, the direction in which the liquid crystal directors are displaced by applying a voltage is already determined before the voltage being applied, and accordingly, it is considered that as soon as the voltage is applied, the displacement from splay alignment to bend alignment is promptly performed.

In addition, a pretilt angle at the interface with one of the alignment layers is smaller than a pretilt angle at the interface with the other alignment layer, and the liquid crystal directors at the interface tend to be easily aligned parallel to the substrate plane. This is considered as another factor that accelerates the transition to bend alignment.

When the difference between the pretilt angle at the interface with the alignment layer having a smaller pretilt angle and the pretilt angle at the interface with the alignment layer having a larger pretilt angle was 3 degrees or more, the advantageous effects were particularly recognizable. In addition, it was confirmed by visual observation that the pretilt angle at the interface with the alignment layer having a smaller pretilt angle is preferable to be 3 degrees or less, or more preferable to be 2 degrees or less.

**Example 2-4**

Fig. 18 schematically shows a cross section of the construction of a liquid crystal display device produced according to Example 2-4.

In the figure, the reference numeral 613 denotes a protruding object 613 protrudingly formed on a lower alignment layer.

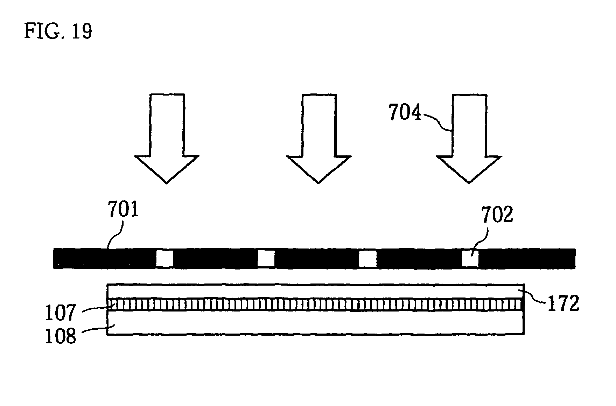

With reference to Figs 19 to 21, a process for producing the protruding object is now detailed below.

First, on a glass substrate having a transparent electrode, a PC type resist material available from JSR Co. Ltd. was applied so as to form a thin film resist having a thickness of 1 $\mu$m.

Thereafter, the thin film resist was exposed to collimated ultraviolet radiation through a photomask having apertures with a rectangular shaped pattern. This state is shown in Fig. 19. In the figure, there are shown a photomask 701, an photomask aperture 702, collimated ultraviolet light 704, and a thin film resist 72.

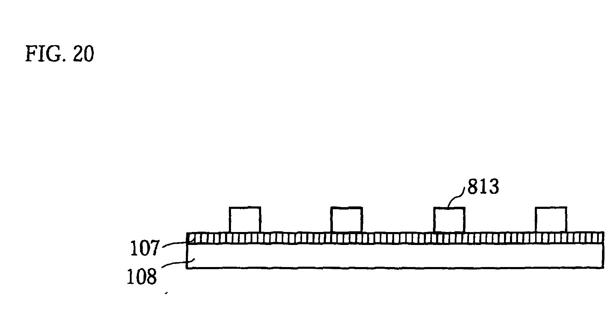

Then, the thin film resist was developed and rinsed, and then prebaked at 90°C to form a protruding object having the cross section being a square-like shape. This state is shown in Fig. 20. In the figure, there are shown protruding objects 813 provided on the alignment layer, which are disposed parallel to each other at regular intervals therebetween.

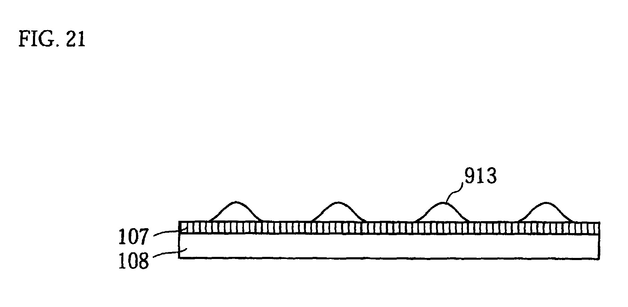

Subsequently, the thin film resist was post-baked at 150°C, which is higher than a glass transition temperature of the thin film resist material, to make the shoulders of the protruding objects 913 to be sloped gently down, so that the cross section thereof was made to be a generally curved or inverted-U-like shape, as shown in Fig. 21.

Thereafter, on the glass substrate having the protruding objects formed thereon and another glass substrates having a transparent electrode thereon, an alignment layer agent SE-7492 available from NISSAN Chemical Industries Co. Ltd. was applied by spin coating, and then the agent was cured in a temperature bath for one hour at 180

°C to form alignment layers 3 and 6 (not shown in Figs. 19 to 21).

The alignment layer on the protruding objects was formed in consideration of alignment performance of liquid crystal.

Thereafter, using a rubbing cloth made of rayon, a rubbing treatment was performed in the directions shown in Fig. 3. Then, the substrates were put together with spacers available from SEKISUI Fine Chemical Co. Ltd. interposed therebetween, and sealed with STRUCTBOND 352A (trademark, a sealing resin available from MITSUI TOATSU Chemical, INC.) so that the gap between the substrates was 6.5 μm to produce a liquid crystal cell. The liquid crystal cell thus produced is hereafter referred to as a "liquid crystal cell F". A rubbing treatment was carried out at a rubbing density such that a pretilt angle at the interface with the alignment layer resulted in approximately 5 degrees.

Next, a liquid crystal MJ96435 (birefringence Δn = 0.138) was filled into the liquid crystal cell F by a vacuum filling method to complete a test cell F.

Thereafter, a pair of polarizing plates were attached to the test cell F so that the axes of polarization made an angle of 45 degrees with the rubbing directions of the alignment layers, and the axes of polarization were also perpendicular to each other. Using the test cell F, the transition from splay alignment to bend alignment was visually observed while applying a rectangular wave voltage of 7 V. The entire electrode region was transformed from splay alignment to bend alignment in approximately 7 seconds.

The reason is considered to be as follows. On a region over the protruding object 812, there is a region in which a rubbing treatment is carried out upwardly and a region in which a rubbing treatment is carried out downwardly. As a result, two regions each having a different sign of the pretilt angle are formed. Therefore, it is considered that in the vicinity of the protruding object, the liquid crystal directors are parallel to the substrate plane, and therefore, it is considered that, for the reasons as already discussed in Examples 2-1 to 2-4 above, the fast splay-to-bend transition was achieved.

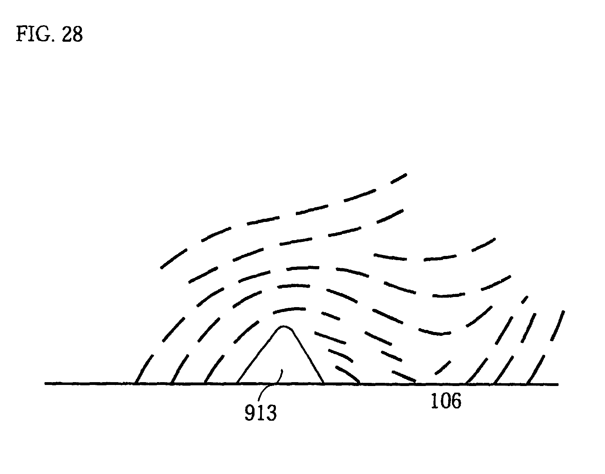

The state in which the liquid crystal directors are parallel to the substrate plane is schematically shown in Fig. 28.

It is noted that the cross-sectional shape of the protruding object is not limited to a trapezoid-like shape as described in the present example. Needless to say, it may be other shapes including a triangular shape and a semicircular shape.

Naturally, similar advantageous effects can be obtained by providing recesses having a like cross-sectional shape on a surface of the alignment layer.

**Example 2-5**

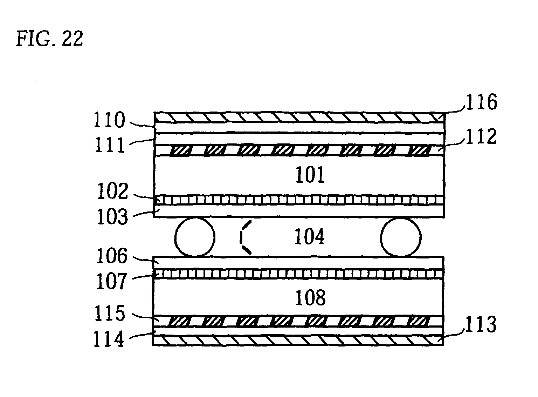

Fig. 22 schematically shows the construction of a liquid crystal display device produced according to Example 2-5 of the present invention.

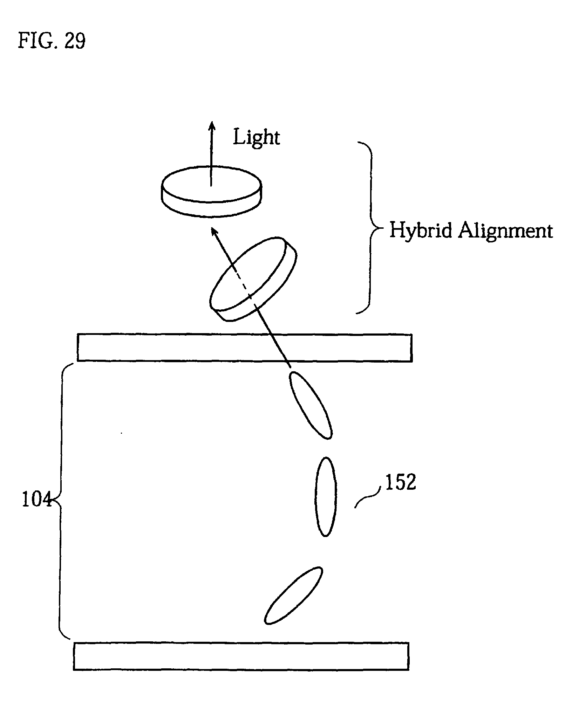

In the figure, the reference numeral 110 denotes a positive uniaxial film ($n_x > n_y = n_z$), the reference numerals 111 and 114 denote negative biaxial films 111 and 114 ($n_x$ to $n_y > n_z$), and the reference numerals 112 and 115 denote hybrid aligned retardation plates composed of an optical medium having a negative birefringence ("hybrid aligned" means that $n_z$ axes are present in a direction of a light ray and a direction perpendicular to the direction of a light ray, as schematically shown in Fig. 29).

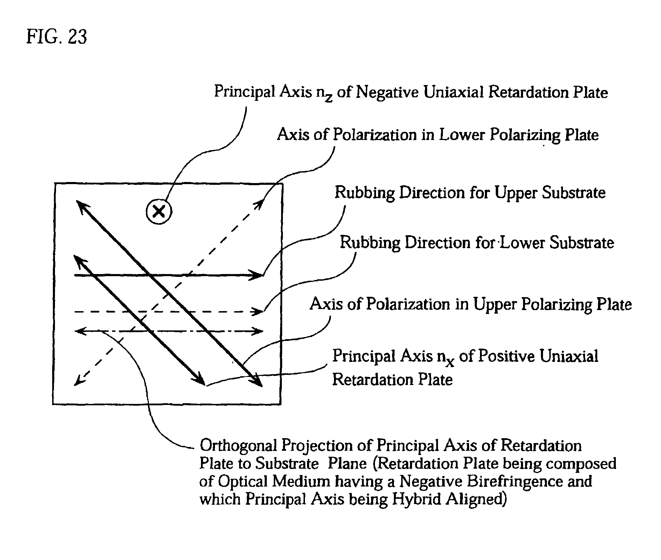

Using the test cell F produced according to Example 2-4 above, the retardation plates 112 and 115, the negative biaxial retardation plates 111 and 114, the positive uniaxial retardation plate 110, polarizing plates 113 and 116 were attached to the test cell F in the arrangement shown in Fig. 23, and a liquid crystal display device F was thus produced. (In the figure, the principal axis $n_z$ is perpendicular to the substrates.)

The retardation values (a retardation value is the product of the thickness and the difference between the parallel refractive index and the perpendicular refractive index) of the retardation plates 112, 115, 111, 114, and 110 were 26 nm, 26 nm, 350 nm, 350 nm, and 150 nm, respectively, which were measured by a light having a wavelength of 550 nm (green with a good visual characteristic).

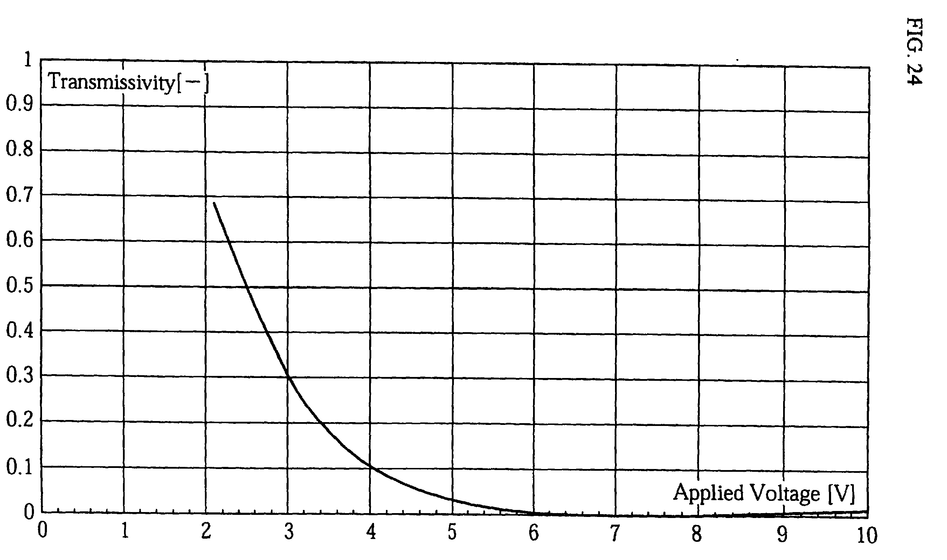

Fig. 24 shows a voltage-transmissivity characteristic of the liquid crystal display device F in front at a temperature of 25 °C.

The voltage-transmissivity characteristic was measured in such a manner that firstly a rectangular wave voltage of 10 V was applied for 10 seconds until bend alignment was confirmed, and thereafter the voltage was gradually decreased.

In this liquid crystal display device, the transition from bend alignment to splay alignment takes place at 2.1 V, and therefore, in effect, the display operation must be performed at a voltage of 2.2 V or higher.

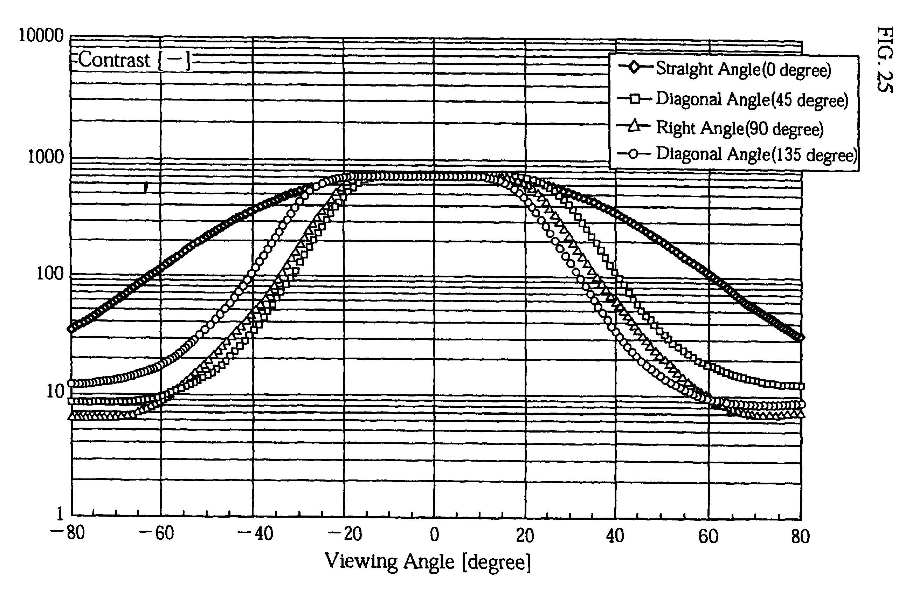

Fig. 25 illustrates viewing angle dependence of a contrast value, the contrast value in which a luminance of the device when a voltage of 2.2 V being applied is divided by a luminance when a voltage of 7.2V being applied (a ratio of light transmissivities of white and black). As seen in Fig. 25, a contrast value of 10 is achieved in the range of ± 60 degrees vertically, and in the range of ± 80 degrees horizontally. Thus, it is confirmed that even when a region in which the liquid crystal director is different from that of the surrounding region is partially provided on the alignment layer, a sufficiently wide viewing angle can be attained.

In addition, a response time between 3 V and 5 V was measured. The rise time was 5 milliseconds and the decay time was 6 milliseconds.

As has been described above, a liquid crystal display device according to the present invention achieves a fast splay-to-bend alignment transition without sacrificing advantageous characteristics of conventional OCB mode devices such as wide viewing angles and fast responses, and hence the practical usefulness of the invention is highly remarkable.

Although Embodiment 2 of the present invention has been described based on the examples thereof, it is to be understood that Embodiment 2 is not limited thereto. For example, the following variations may be further employed.

(1) The alignment treatment may be other than the mask rubbing treatment mentioned above. Specifically, the examples of the alignment treatment include such an alignment treatment that liquid crystal is aligned by light or heat, for example, such a treatment in which anisotropy is caused in the molecule chains in an alignment layer by irradiating the alignment layer with polarized ultraviolet rays, and the like. Further, when a new technique is developed in the future, such a new technique may be employed.

(2) In Example 2-1, the region in which the direction of rubbing treatment is different by 180° may be provided outside the display region of the pixels, for example in a region corresponding to a black matrix region provided on the substrate located at the viewer side, so that further uniform display quality in each pixel can be achieved. In addition, the rubbing directions need not be perfectly antiparallel, but may have an angle of up to 5°.

(3) In Example 2-2, the homogeneous region may be provided outside the display region.

(4) In Example 2-3, the alignment treatments may be differed for each of the upper and lower alignment layers. For example, the alignment treatment may be such that the upper layer is treated by a rubbing with a rayon cloth or the like while the lower layer is treated with the use of light or the like. Further, only one alignment layer may be subjected to the rubbing treatment.

(5) In Example 2-4, the protruding objects may be provided not on the substrate surface but on an outward surface of the alignment layer thereon. In addition, the objects may be formed by other techniques such as a deposition technique or the like.

(6) The protruding objects may be disposed not in a parallel line-like state but in a state such as dots forming a lattice. Further, the objects may be subjected to a treatment for improving aligning performance.

## EMBODIMENT 3

### Example 3-1

A method for evaluating a splay-to-bend transition time according to Example 1 involves the following steps (1) to (4). (1) Apply voltage to a homogeneous cell showing a splay alignment. (2) Monitor a change of capacitance of the cell with respect to time while the voltage being applied. (3) From the results of the monitoring, obtain a time T1 being a time from a point of the voltage application to a point at which the capacitance change of the cell is flexed, or obtain a time T2 being a time from a point of the voltage application to a saturation point of the capacitance change of the cell. (4) Using the time T1 or the time T2 as an index for evaluation, evaluate a splay-to-bend transition time.

By such an evaluation method according to Example 3-1, a splay-to-bend transition time can be easily evaluated in a highly reliable manner. Now, the reasons will be described, together with details of the evaluation method, based on the results of the experiments by the present inventors.

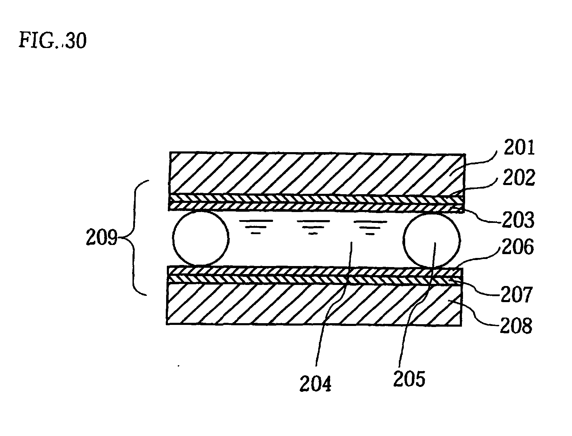

Fig. 30 shows a construction of a liquid crystal cell used for the experiments for a splay-to-bend transition time evaluation method according to Example 3-1. The liquid crystal cell is a homogeneous cell, showing splay alignment when no voltage is applied, and a bend alignment mode liquid crystal cell in which the alignment is changed to bend alignment by applying a voltage. This liquid crystal cell was produced in the following manner.

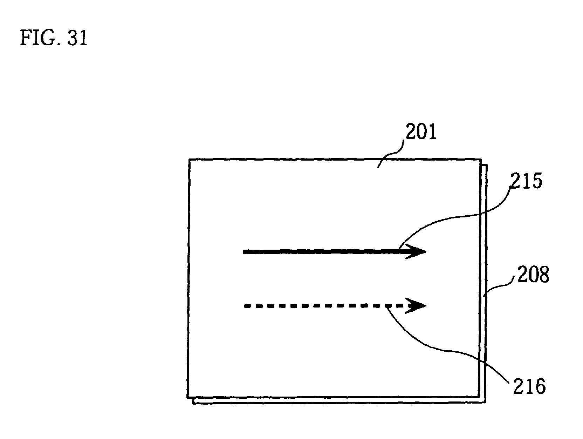

First, an alignment layer agent, SE-7492 available from Nissan Chemical Industries Co. Ltd. was applied by spin coating onto a pair of glass substrates 201 and 208 each having a transparent electrode 201 and 208 thereon respectively. Then, the agent was cured in a temperature bath for one hour at 180°C to form alignment layers 203 and 206. Thereafter, a rubbing treatment in the direction shown in Fig. 31 was performed on the surfaces of the alignment layers 203 and 2066 with the use of a rubbing cloth made of rayon. In Fig. 31, an arrow 215 indicates the direction of rubbing for the substrate 1, and an arrow 216 indicates the direction of rubbing for the substrate 208.

Then, the substrates 201 and 208 were attached together with spacers 205 (available from SEKISUI Fine Chemical Co. Ltd.) interposed therebetween, and sealed with STRUCTBOND 352A (sealing resin available from MITSUI TOATSU Chemical, INC.) so that the gap between the substrates was 5.3 μm. Two empty cells 9 were thus prepared. Subsequently, liquid crystal materials LC2 and LC4 having the properties shown in Table 11 below were filled into each of the empty cells 209 by a vacuum filling method so that a liquid crystal layer 204 was formed. Thus, test cells A and B were prepared.

TABLE 11

| Liquid Crystal Material | Nematic Isotropic Transition Temperature TNI (°C) | Birefringence Δn (-) | Dielectric Anisotropy Δε (-) | Splay Elastic Constant K11 (pN) | Twist Elastic Constant K22 (pN) | Bend Elastic Constant K33 (pN) |
|---|---|---|---|---|---|---|
| LC1 | 85.9 | 0.125 | 12.8 | 6.6 | 5.7 | 14.1 |
| LC2 | 90.4 | 0.131 | 11.3 | 8.7 | 7.0 | 13.8 |
| LC3 | 67.8 | 0.139 | 9.7 | 6.2 | 5.3 | 12.5 |
| LC4 | 93.5 | 0.120 | 9.4 | 12.2 | 6.0 | 13.9 |
| LC5 | 85.1 | 0.159 | 8.8 | 10.2 | 5.0 | 12.5 |
| LC6 | 81.8 | 0.165 | 9.8 | 12.4 | 5.9 | 15.0 |

Next, the test cells A and B were subjected to an evaluating method according to Example 3-1.

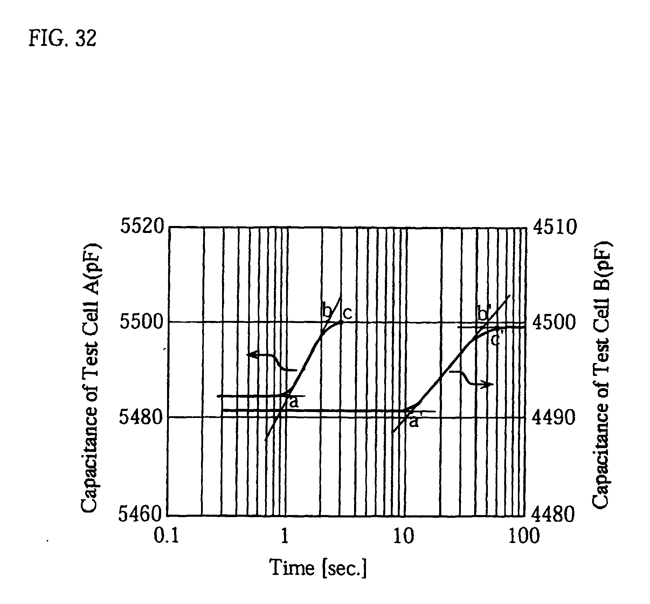

While applying a voltage of 10 V to the test cells A and B, cell capacitance changes versus time were measured. The results are shown in Fig. 32. For the measurement of cell capacitances, a precision LCR meter (Hewlett Packard HP-4284A) was used, and the waveform of the applied voltage was a 1 kHz sine wave.

In Fig. 32, the plots a and a' indicate the points at which a nucleus of bend alignment starts to be generated, and the inclinations of the line segment ab and the line segment a'b' correspond to the growth speed of the nucleus. The plots c and c' indicate the points at which bend alignment was formed over the entire cell region. As seen from Fig. 32, it is apparent that both the time T1, which is a time from the start of voltage application to the flex point of capacitance change, and the time T2, which is a time form the start of voltage application to the saturation point of capacitance change, are shorter in the cell A than in the cell B. Accordingly, it can be concluded that the cell A achieves a faster transition than the cell B.

By using a time T1 and a time T2 in such a manner, splay-to-bend transition time can be evaluated. The reason is detailed below.

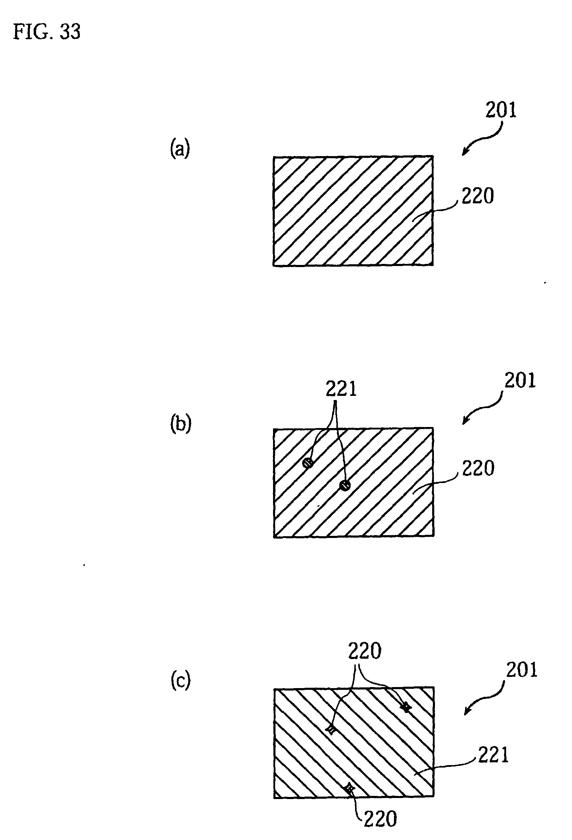

When a voltage is applied to a liquid crystal cell showing a splay alignment 220 as shown in Fig. 33(a), a nucleus 221 of bend alignment is formed in a part of the entire region of the splay alignment 220 after a certain time has elapsed, as shown in Fig. 33(b). The nucleus 21 of bend alignment then grows over the entire region of the cell (Fig. 33(c)), forming bend alignment, as is known. Therefore, it is considered that fast formation of the bend nucleus and fast growth of the nucleus indicate a fast alignment transition.

Meanwhile, the change of alignment as described above can be correspondingly represented by a capacitance change of a cell. The point of time at which a nucleus of bend alignment is formed corresponds to the flexion point on the capacitance change curve. Also, the point of time at which an entire region of the cell enters a bend alignment state corresponds to a saturation point on the capacitance change curve at which the capacitance change is stabilized at a certain value after the capacitance has started to change and increased. Hence, the time T1, which is a time from the start of voltage application to the flexion point, and the time T2, which is a time from the voltage application to the saturation point, can be employed as indices for evaluating a splay-to-bend transition time.

In accordance with Example 3-1, as apparent from Fig. 32, each of a time required for the formation of the nucleus, a speed of the growth of the nucleus, and a time required for the transition to bend alignment can be measured separately. Therefore, the method according to the invention has a remarkable practical usefulness.

Needless to say, although the applied voltage is described as a 1 kHz sine wave voltage of 10 V in the example described above, other voltage values and waveforms may be employed. In addition, the present inventors have confirmed that the results of the measurement according to Example 3-1 are in agreement with the results of visual observation.

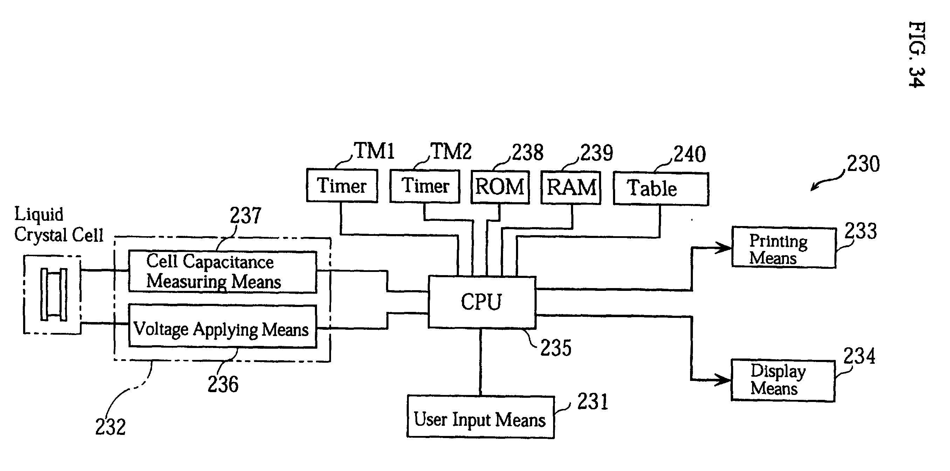

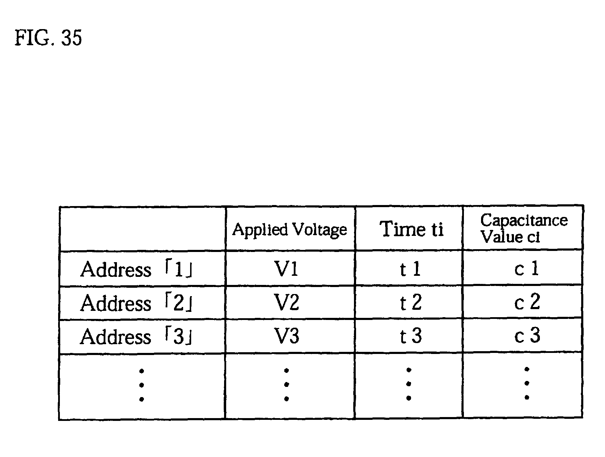

Next, described below is an evaluation apparatus 30 that automatically measures the evaluation indices according to the present example. Fig. 34 shows a block diagram illustrating the configuration of an evaluation apparatus according to Example 3-1. The evaluation apparatus 230 according to Example 3-1 comprises a user input means 231 such as a keyboard or a mouse, a capacitance measuring unit 232 for measuring a capacitance of a liquid crystal cell, a printing means 233 such as a printer or a plotter, a display means 234 such as a CRT or a liquid crystal display device, and a CPU (Central Processing Unit) 235. The capacitance measuring unit 232 may be for example a precision LCR meter (HP-4284A available from Hewlett Packard), and may comprise a voltage applying means 236 for applying a predetermined voltage to the liquid crystal cell, and a cell capacitance measuring means 237 for measuring a capacitance change of the liquid crystal cell. The CPU 235 is connected to a ROM (Read Only Memory) 238, a RAM (Random Access Memory) 239, a table 240, a timer TM1, and a tinier TM2. In the ROM 238, a system program, an operational program and the like are pre-stored, and in the table 240, a measured time ti from the voltage application and a cell capacitance ci are associated and stored,, as shown in Fig. 35. The timer TM1 provides a signal indicating a cell-capacitance-reading-out period to the CPU 25 at each period W1, to indicate a cell capacitance sampling. The timer TM2 indicates a time from a start of voltage application to a current time.

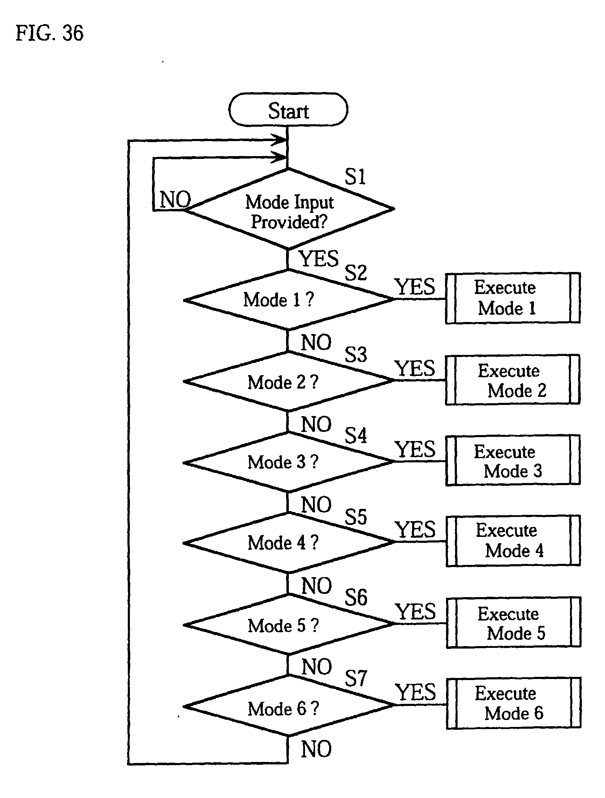

Figs. 36 to 38 are flowcharts illustrating an operation of the evaluation apparatus. Referring to these Figs. 36 to 38, evaluation operation of the evaluation device is now detailed. First, at step S1, whether or not an input for selecting one of mode 1 to mode 6 is provided is determined. Mode 1 corresponds to Example 3-1, mode 2 corresponds to Example 3-2 described below, mode 3 corresponds to an alignment relaxation period T3 in Example 3-3 described below, mode 4 corresponds to an alignment relaxation period T4, also described in Example 3-3 below, mode 5 corresponds to a capacitance change rate E while increasing a voltage, also described in Example 3 below, and mode 6 corresponds to a cell capacitance change rate E while decreasing a voltage, also described in Example 3-3 below.

Mode setting can be performed by inputting a predetermined code signal by operating the user input means 231.

In the case where a mode input is provided, processing proceeds to step S2. At step S2, it is determined whether the input is mode 1 or not. If the answer is "yes", a processing of mode 1 is executed. If the answer is "no", the processing proceeds to step S3, and at step S3, it is determined whether the input is mode 2 or not. If the answer is "yes", a processing of mode 2 is executed. Likewise, a similar processing is performed at each of the steps so that each processing corresponding to an input mode is executed.

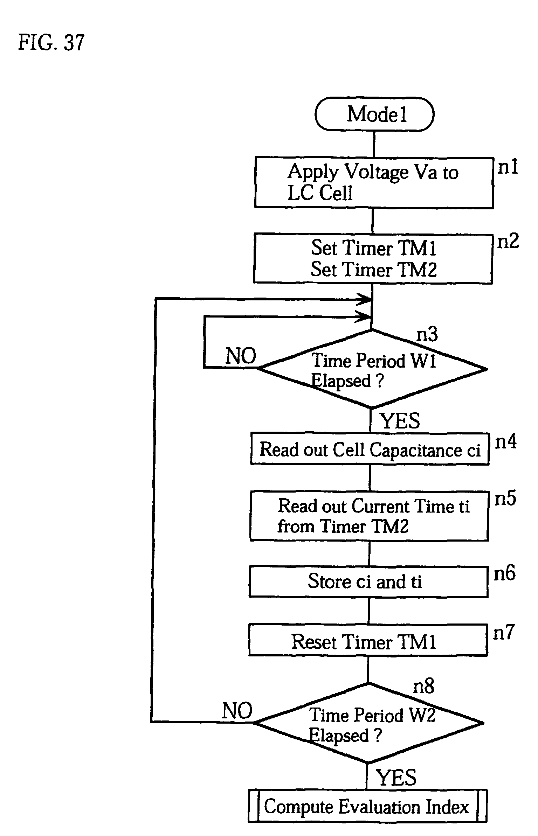

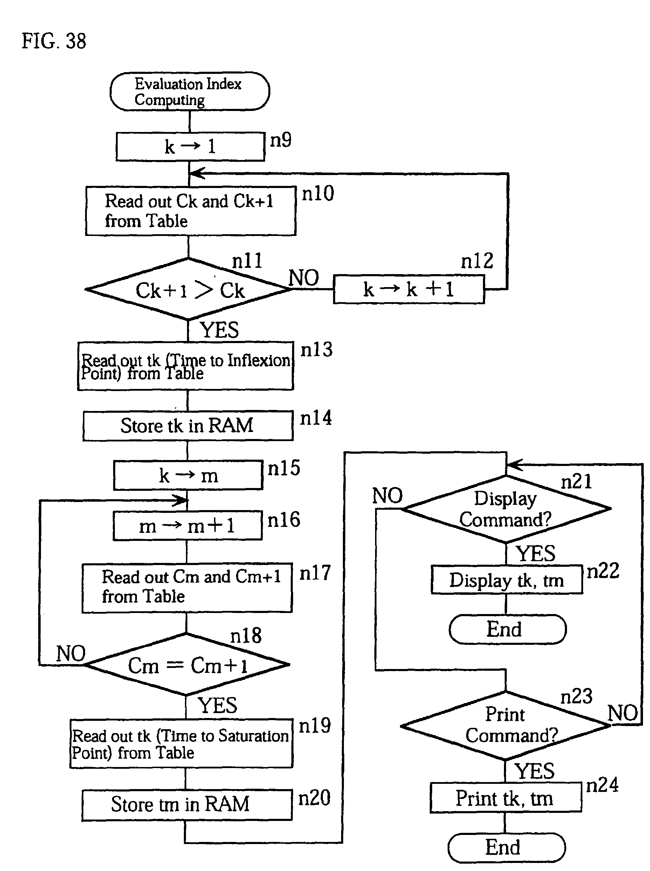

Next, described below is a processing of mode 1 corresponding to Example 3-1. The processing operation of mode 1 is specifically shown in Figs. 37 and 38. First, at step n1, a constant voltage Va is applied to a liquid crystal cell. Specifically, the CPU 235 provides a command signal to the voltage applying means 236, the command signal indicating the constant voltage Va. Then, the voltage applying means 236 applies the constant voltage Va to the liquid crystal cell. Simultaneously, the cell capacitance measuring means 237 starts to measure a capacitance change of the liquid crystal cell. Prior to the measurement, a capacitance value of the cell when no voltage being applied has been measured by the cell capacitance measuring means 237, and the capacitance value has been read out by the CPU 235 and stored in the table 240. It is noted that the constant voltage Va is such a voltage value within the range in which the transition from splay alignment to bend alignment in a liquid crystal cell is generally possible. That is, if, for example, a small voltage of approximately 1 V is applied to a liquid crystal cell over a long period, the transition from splay alignment to bend alignment does not occur. For this reason, it is necessary that the applied voltage have a relatively large voltage value. In this Example 3-1, the voltage Va is set at 10 V. The waveform of the applied voltage is a 1 kHz sine wave.

Subsequently, the processing proceeds to step n2, and the timer TM1 and the timer TM2 are set, and then at step n3, a decision is made if a certain period of time W1 has elapsed or not. The period W1 is a period of time for sampling an analog capacitance value measured by the cell capacitance measuring means 237. Then, when a certain period of time W1 has elapsed, at step n4, a cell capacitance value c1 is read out from the cell capacitance measuring means 237. At step n5, a current time t1 (which corresponds to a duration from the start of voltage application to a first sampling) is read out from the timer TM2. At step n6, the cell capacitance value c1 and the time t1 are written in an address "1" in the table 40. Then, the timer TM1 is reset. At step n8, it is determined whether a certain period of time W2 has elapsed or not. The period W2 is set to be a time such that generally a transition from splay alignment to bend alignment in a liquid crystal cell can sufficiently occur when a voltage Va is applied to the cell.

When a certain period W2 has not elapsed at the step 8, the processing loops back to step n3. Thus, the processing of the steps n3 - n4 - n5 - n6 - n7 - n8 - n3 are repeated until the period W2 elapses, and a capacitance change from the start of voltage application to the time until the period W2 has elapsed is monitored. As the monitored results, a capacitance value ci and a measurement time ti are written in the table 40.

When the period W2 has elapsed, the processing proceeds from step 8 to an evaluation index computing routine as shown in Fig. 38.

In the evaluation index computing routine, at first, a variable k is set to be 1 at step n9. Thereafter, at step n10, addresses "k" and "k + 1" in the table 4 are addressed in order to read out ck and ck + 1 from the table 40, and then at step 11, it is determined whether ck + 1 > ck or not. If, k = 1, for example, c1 and c2 are read out, and it is determined whether c2 is larger than c1 or not. Here, if ck + 1 > ck , it means that there has been a capacitance increase.

At step n11, if ck + 1 > ck is not true, the processing loops back to step n10. By this closed loop processing of the steps n10 - n11 - n12 - n10, a capacitance value at the flexion point at which the capacitance starts to increase can be obtained.

If ck + 1 > ck  is true, the processing proceeds to step n13 at which the address "k + 1" in the table 240 is addressed and a measurement time tk + 1, which corresponds to ck + 1, is read out, and at step n14, the measurement time tk + 1 is stored in the RAM 239. The measurement time tk + 1 corresponds to the time T1 from the start of voltage application to the flexion point of capacitance change.

Next, at step n15, the variable k is set to be m, and at step n16, m is incremented by 1. Then, at step n17, addresses m and m + 1 in the table 40 are addressed to read out cm and cm + 1, and at step 18, it is determined whether cm = cm +1  or not. Note here that the capacitance value increases for a certain period after the flexion point. Therefore, at step 18, it is determined that the answer is "No". Then the capacitance value reaches a saturation point after a certain period of time. When the capacitance value reaches the saturation point, cm becomes equal to cm + 1, and thus a capacitance value at which the capacitance value is saturated can be obtained. Then, the processing proceeds to step n19, and the address m + 1 at this point is addressed to read out from the table 240 a measurement time tm + 1 corresponding to the address m + 1. Then, at step 20, the measurement time tm + 1 is stored in the RAM 239. The measurement time tm + 1 corresponds to the time T2 from the start of voltage application to the saturation point. Thus, the time T1, which is a time from the start of voltage application to the flexion point of capacitance change, and the time T2, which is a time from the voltage application to the saturation point, are automatically computed and stored in the RAM 239.

Next, the time T1 and the time T2 are displayed in response to a display input operation (steps n21 and n22), and/or printed in response to a print input operation (steps n23 and n24).

Thus, it is made possible to automatically measure the evaluation indices according to Example 3-1.

**Example 3-2**

A method for evaluating a splay-to-bend transition according to Example 3-2 involves the following steps (1) through (6). (1) Apply a predetermined voltage to a homogeneous liquid crystal cell showing a splay alignment while the predetermined voltage being increased in a stepwise manner. (2) Monitor a change of capacitance of the cell with respect to time at each predetermined voltage value while the voltage being increased. (3) Apply voltage to the liquid crystal cell showing a bend alignment in such a manner that the predetermined voltage is decreased in a stepwise manner at the same predetermined values as those in the case of the predetermined voltage being increased. (4) Monitor a change of cell capacitance with respect to time at each predetermined voltage value while the voltage being decreased. (5) From the results of the monitoring in steps (2) and (4) above, a size of hysteresis S in voltage-cell capacitance curves is obtained. (6) Using the hysteresis S as an index for evaluation, evaluate a splay-to-bend transition time. It is noted here that the hysteresis S is represented by an area of the region surrounded by C-V hysteresis curves, as will be discussed later.

By such an evaluation method according to Example 3-2, a splay-to-bend transition time can be easily evaluated in a highly reliable manner. Now, details of the evaluation method will be discussed below based on the results of the experiments by the present inventors.

First, two liquid crystal cells having the same construction as in Example 3-1 except that the gap between the substrates was 5.2 μm were prepared, and liquid crystal materials LC5 and LC6 having the properties as shown in Table 1 above were filled into each of the cells by a vacuum filling method to produce test cells C and D, respectively.

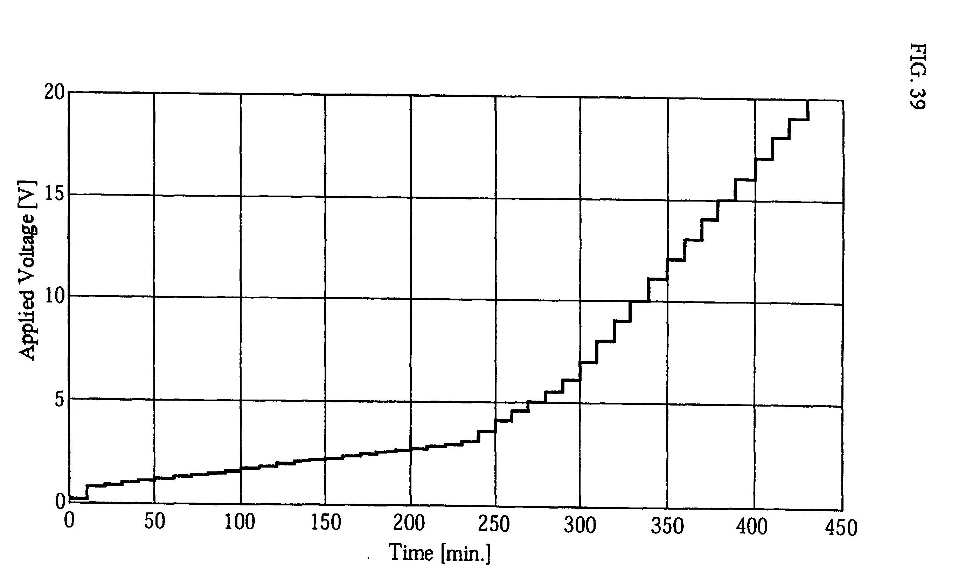

Thereafter, a voltage was applied to each of the test cells C and D in such a manner that the voltage was increased in a stepwise manner as shown in Fig. 39, a the change of cell capacitance was measured with respect to time at each predetermined voltage.

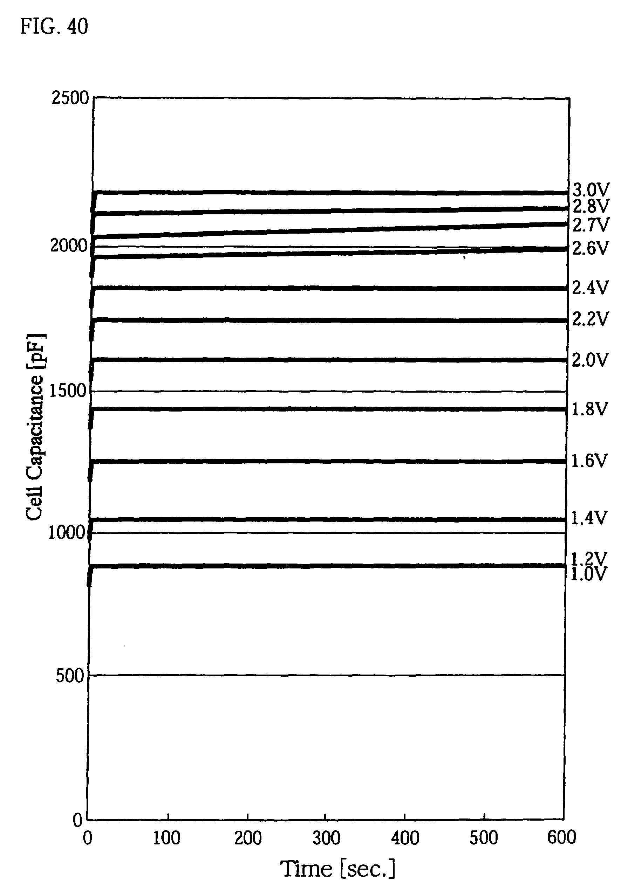

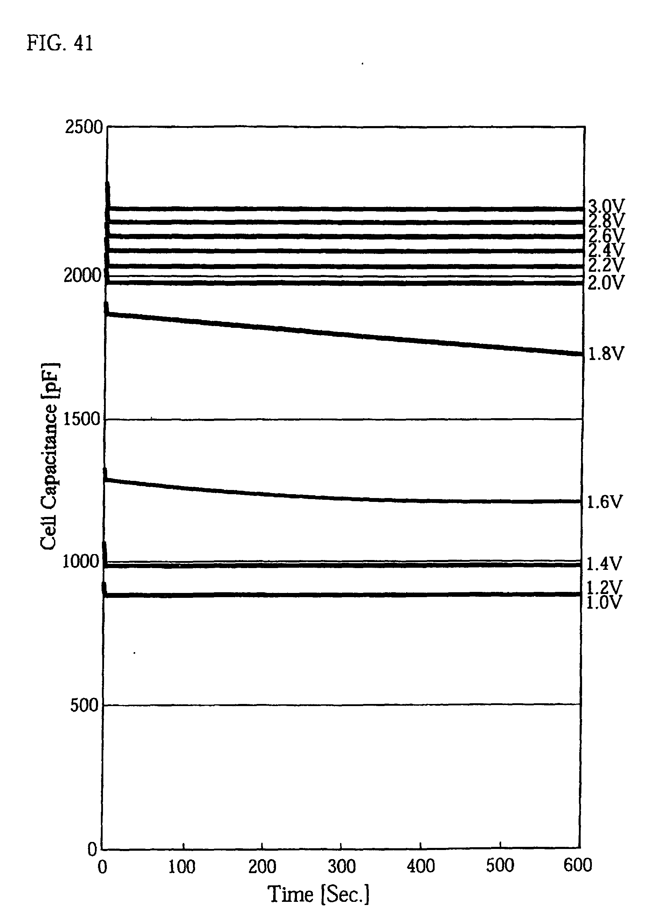

In addition, a capacitance change of each cell in the case of the voltage being decreased was also measured while decreasing the voltage in the following manner. First, a voltage of 30 V (a voltage value at which the transition to bend alignment is ensured) was applied and the resulting bend alignment was confirmed by visual observation. Thereafter, the voltage was decreased in a stepwise manner at the rate shown in Fig. 39. The capacitance change of the cell C at each predetermined voltage with respect to time is shown in Figs.40 and 41. Fig. 40 shows the capacitance change in the case of the predetermined voltage being increased, and Fig. 41 shows that in the case of the predetermined voltage being decreased.

Next, a capacitance at each predetermined voltage value was defined by an average capacitance between 595 seconds and 600 seconds from the start of voltage application, and a capacitance -voltage (C-V) characteristic was obtained. A graphical representation of the capacitance-voltage (C-V) characteristic thus obtained is shown in Fig. 40. The reason why the duration between 595 seconds and 600 seconds was selected is that, in the duration between 595 seconds and 600 seconds, capacitance change of the cell was completed and the capacitance was stabilized, except at specific predetermined voltage values (2.6 V and 2.7 V in Fig. 40). At these specific predetermined voltage values, the capacitance showed an increase because of a sudden change from the maximum splay alignment to bend alignment. i.e., the relaxation of alignment. As shown in Fig. 41, likewise, the duration of from 595 seconds to 600 seconds was selected also in the case of the voltage being decreased for the same reason as in the case of the voltage being increased. As seen in Fig. 41, the capacitance showed a decrease at specific predetermined voltage values (1.8 V and 1.6 V in Fig. 41) because a sudden change from bend alignment to the maximum splay alignment, i.e., a relaxation of alignment occurred.

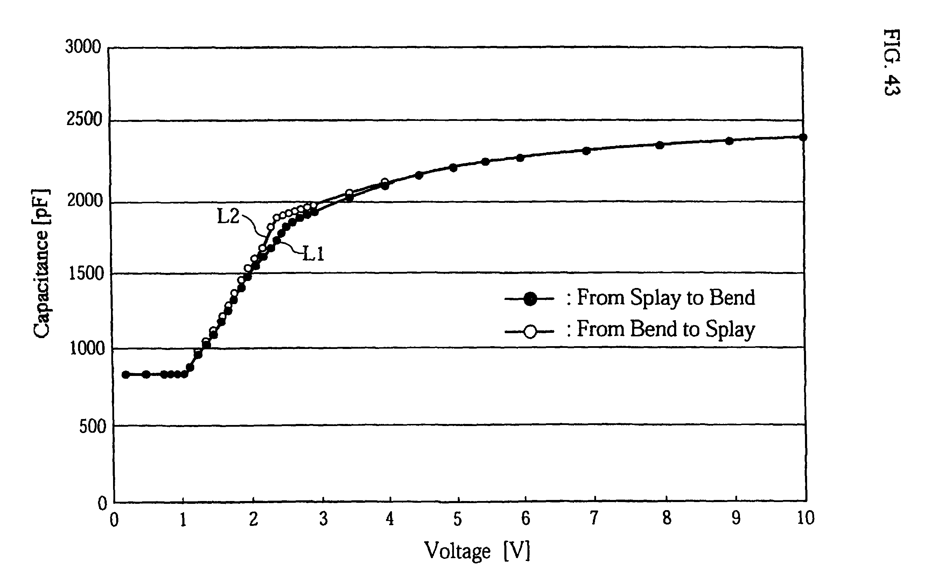

Subsequently, with regard to the cell D, a C-V characteristic was obtained in the same manner as in the case of the cell C. A graphical representation of the C-V characteristic of the cell D is shown in Fig. 43. Although the graphs corresponding to Figs. 40 and 41, in which illustrate the capacitance changes of the cell C with respect to time, are omitted for the sake of brevity, it is noted that the capacitance change of the cell D with respect to time was also obtained prior to obtaining the C-V characteristic of the cell D.

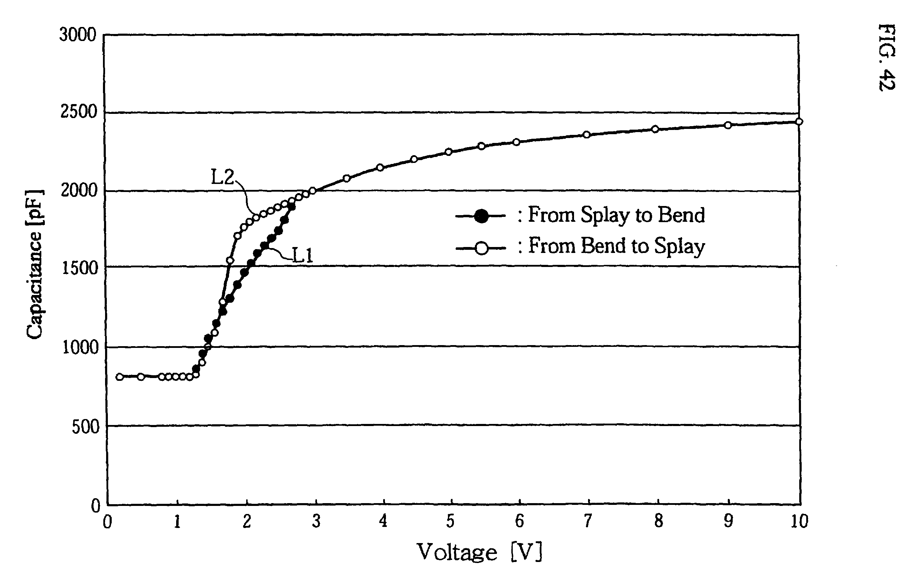

Those specific predetermined voltage values approximately correspond to the uppermost voltage value of the hysteresis shown in Figs. 42 and 43 in the case of the voltage being increased, and the lowermost voltage value of the hysteresis shown in Figs. 42 and 43 in the case of the voltage being decreased. This indicates that there is an energy difference between splay alignment and bend alignment.

As apparent from Figs. 42 and 43, hysteresis is observed. With this regard, it has been generally considered that hysteresis does not exist in bend alignment mode liquid crystal display devices. However, during the experiment discussed in Example 3-1 above, the experiment in which the present inventors paid particular attention to cell capacitance changes, the present inventors unexpectedly found that hysteresis exists in bend alignment mode liquid crystal display devices. Consequently, paying particular attention to the hysteresis, the present inventors have obtained an evaluation method according to Example 3-2.

It is to be noted here that in Figs. 42 and 43, an area size of the region surrounded by the C-V hysteresis curves corresponds to the energy difference between splay alignment and bend alignment, and to the easiness of the splay-to-bend transition. In the case of the transition from bend alignment to splay alignment, the transition should occur automatically when the applied voltage is made to be 0 V. Taking into account the sizes of their free energies, it is considered that the transition from bend alignment to splay alignment occurs abruptly when the voltage is made 0 V, and accordingly, the line L2 in Fig. 42 shows a sudden drop towards 0 V. Therefore, it is ideal that the transitions between splay alignment and bend alignment are represented by the line L2. That is, the line L1 that represents the transition from splay alignment to bend alignment should essentially be identical to the line L2. However, since there is an energy difference between the energy required for the transition from splay alignment to bend alignment and the energy required for the transition from bend alignment to splay alignment, the line L1 shows a rise with a gentler curve. For this reason, it can be concluded that when the line L1 becomes closer to the line L2, the transition from splay alignment to bend alignment occurs more easily.

Based on this assumption, each area of the hysteresis regions in the cell C and the cell D was compared. From the result, it is understood that the ratio was 15:8, which shows that the liquid crystal material LC6 shows a faster bend transition than the liquid crystal material LC5.

In another measurement, a time required for the entire electrode region to be transformed from splay alignment to bend alignment was obtained by visually monitoring the transition from splay alignment to bend alignment while applying a voltage of 10 V to each of the cells C and D. The results were 150 seconds and 85 seconds, respectively, which proves the validity of the above-described assumption, and thereby the validity of the present invention.

The area size of the C-V hysteresis region in the evaluation method according to this Example 3-2 is a function of (anchoring energy A of the alignment layer / elastic constant K). Therefore, it is necessary that the measurement of anchoring energy be simultaneously performed in the case where the cells having different alignment layers are to be compared, or in the case where the cells comprising different types of liquid crystal materials are to be compared, for example, in the case of comparison between a cyano type and a fluorine type.

Now, described below is an evaluation apparatus that automatically measures the evaluation indices according to Example 3-2. The evaluation apparatus according to Example 3-2 has a construction such that, with the use of the evaluation apparatus 230 of Example 3-1 above, when mode 2 is selected therein, evaluation indices are automatically measured.

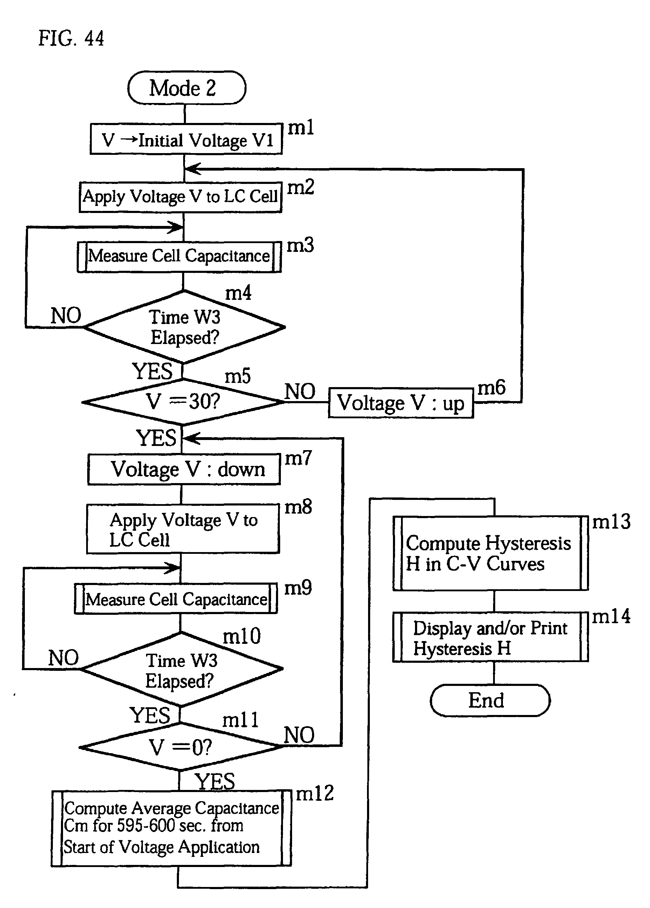

Fig. 44 shows a flow chart illustrating a processing operation in the case where mode 2 is selected. With reference to Fig. 44, the operation of automatically measuring the size of hysteresis S is described below.

First, at step m1, an initial voltage V1 is determined. At step m2, the voltage V1 is applied to the liquid crystal cell. At step m3, a cell capacitance measuring process is performed. The cell capacitance measuring processing in the step m3 is basically the same processing as the processing in steps n1 to n9 described above. At step m4, it is determined whether a certain period W3 has elapsed or not. If not, the process loops back to the step m3. Here, the period W3 denotes a cell capacitance measurement time during which a cell capacitance is measured at each predetermined voltage. Then, at step m4, it is determined whether or not a predetermined applied voltage V is a maximum predetermined voltage of 30 V, and if not, at step m6, the predetermined applied voltage is increased by a predetermined value and the processing loops back to the step m2. Thus, by the closed loop processing of steps m2 to m6, the cell capacitances at a plurality of predetermined voltage values from the initial predetermined voltage V1 to the maximum predetermined voltage 30 V are measured, and measurement times $t_i$ at the plurality of predetermined voltage values and capacitance values ci at the corresponding measurement times are stored in the table 240 as capacitance changes. Thus, cell capacitance changes at a plurality of predetermined voltage values in the case of the voltage being increased is monitored and stored in the table 240.

Subsequently, by a closed loop processing of steps m7 to m11, cell capacitance changes at a plurality of predetermined voltage values from the maximum predetermined voltage 30 V to 0 V are measured, and measurement times and capacitance values at the corresponding measurement times are stored in the table 240. More specifically, at step m7, the voltage is decreased by a predetermined value. The voltage must be decreased at the same rate as in the case of the predetermined voltage being increased, and thereby the same predetermined voltage values are applied both in the cases of the voltage being increased and in the case of the voltage being decreased. At step m8, a predetermined voltage is applied to the liquid crystal cell. At step m9, a capacitance change is measured and stored in the table 240. At step m10, it is determined whether the measurement period W3 at the predetermined voltage has elapsed or not, and if not, the processing loops back to step m9. If the period W3 has elapsed, the processing proceeds to step m11. At step m11, it is determined whether the predetermined voltage is 0 V or not, and when the voltage has not reached 0 V, the processing loops back to step 7, and at step 7, the predetermined voltage is decreased and the predetermined voltage is applied to the liquid crystal cell.

Thus, while the predetermined voltage being increased, the capacitance changes of the liquid crystal cell are monitored, and also while the predetermined voltage being decreased, the capacitance changes of the liquid crystal cell are monitored. These results are stored in the table 240.

Subsequently, based on the data stored in the table 240, an evaluation index according to Example 3-2 is calculated. Specifically, at step m11, an average value of the capacitance changes during a certain period after the start of voltage application. The certain period should be such a period in which, after the start of voltage application, capacitance change has been completed and the capacitance is thereby stable except at specific voltage values (in the case of the voltage being increased, the specific voltage values are 2.6 V and 2.7 V, and in the case of the voltage being decreased, 1.8 V and 1.6 V). In this Example 3-2, the certain period was selected to be a duration between 595 seconds and 600 seconds. This duration was selected because the convenience in computing the capacitance-voltage curves (C-V curves) was taken into consideration. The computed average capacitance value Cm is stored in the table 240. Thereafter, the processing proceeds to step m13 and a size of hysteresis in the C-V curves is computed. More specifically, an area size S in the C-V curves shown in Fig. 42 or 43 is computed. Then, the processing proceeds to step m14, and the computed area size S is printed and/or displayed.

Thus, by such an evaluation apparatus, an evaluation index according to Example 3-2 is automatically measured, and displayed and/or printed.


**Example 3-3**

A method for evaluating a splay-to-bend transition time according to Example 3-3 is analogous to the evaluation method of Example 3-2 above. However, although a size of hysteresis is used as an evaluation index in Example 3-2 above, the present Example 3-3 employs as an evaluation index a time T3 required for a relaxation of alignment (hereinafter referred to as an "alignment relaxation time T3"), or a cell capacitance change rate E in which the alignment relaxation time T3 is normalized for the sake of convenience in measurement.

By employing such an evaluation method according to Example 3-3, a splay-to-bend transition time can be easily evaluated in a highly reliable manner. Now, the reasons will be discussed below, together with details of the evaluation method, based on the results of the experiments by the present inventors.


(1) In a case of an alignment relaxation time T3

The same experiment as in Example 3-2 above was performed using the test cells C and D having the same construction, and a graph of Fig. 40 was thereby obtained. Although the phenomenon of alignment relaxation has already been described briefly in Example 3-2, with reference to Fig. 40, further details will be given below. As for the transition from splay alignment to bend alignment, the following fact is known. When a voltage is applied to a cell in a state of splay alignment, the transition does not occur directly to bend alignment from the initial splay alignment, but occurs in such a manner that the degree of splay alignment becomes larger until a maximum splay deformation state is reached, and then, from the maximum splay deformation state, the alignment state suddenly transforms to bend alignment. Due to such an alignment transition, the capacitance results in an increase at the specific predetermined voltage values (2.6 V and 2.7V), as shown in Fig. 40. When a voltage is increased from a predetermined voltage of 1.0 V, liquid crystal molecules are raised immediately after the voltage switching, and normally, a certain capacitance value is reached within 2 or 3 seconds. Such a capacitance change occurs until a specific predetermined voltage is reached. It is considered that during this period of from the predetermined voltage of 1.0 V until the specific predetermined voltage, the maximum splay deformation state is spread over the entire electrode region.

When the voltage reaches the specific predetermined voltage, the capacitance value increases sharply to a certain capacitance value within 2 or 3 seconds, and thereafter increases at a constant inclination angle, taking a long time until reaching a saturation point. This is considered to be because of the occurrence of a relaxation from splay alignment to bend alignment, i.e., the occurrence of a sudden change phenomenon from a state of maximum splay alignment to bend alignment. Therefore, it is considered that the shorter the time the time required for the relaxation of alignment is, that is, the shorter the alignment relaxation time T3 is, the more easily the transition from splay alignment to bend alignment occurs. Hence, the alignment relaxation time T3 can be used as an evaluation index for transition time. It is to be noted that in cases where the predetermined voltage is larger than 2.7 V, the capacitance value reaches a constant capacitance value within 2 or 3 seconds, as in cases where the predetermined voltage is smaller. This is because in the liquid crystal cell, the liquid crystal molecules adjacent to the substrate interface are raised while the bend alignment state is being maintained.

Although in the example above, the explanation has been given with regard to a case of the predetermined voltage being increased, an alignment relaxation time T4 from bend alignment to splay alignment in a case of the predetermined voltage being decreased may be employed as the evaluation index. Note that in this case, the longer the alignment relaxation time T4 is, the more easily the splay-to-bend transition occurs. This is because, as has already been discussed in the explanation with regard to hysteresis, an easiness of a transition from bend alignment to splay alignment is in the opposite relationship to an easiness of a transition from splay alignment to bend alignment.

(2) In a case of a cell capacitance change rate E

In order to measure the alignment relaxation time T3, a long time is required. Therefore, for the convenience in measuring, a cell capacitance change rate E, a normalized value of the alignment relaxation value T3, is employed as an evaluation index.

A cell capacitance change rate E means a value obtained by dividing an essential capacitance change value resulting from an alignment relaxation during a measurement time by a difference between a maximum cell capacitance and a minimum capacitance in the range of the measurement. Specifically, a cell capacitance rate E is defined by the following expression:

Cell Capacitance Change Rate E = (Cell capacitance at a maximum measurement time in measuring an alignment relaxation time - Cell capacitance at 5 seconds after the start of voltage application) / (Cell capacitance at a time when a maximum voltage of predetermined voltages is applied - Cell capacitance at a time when no voltage is applied)

In the numerator of the above expression, a cell capacitance at 5 seconds after the start of voltage application is subtracted from a cell capacitance at a maximum measurement time in measuring an alignment relaxation time. The reason is that the cell capacitance at 5 seconds after the start of voltage application is not a capacitance change resulting from an alignment relaxation. Note that the larger the cell capacitance change rate is, the more easily the splay-to-bend transition occurs.

In the experiment of Fig. 40, the cell capacitance change rate E was defined by the following expression:

Cell Capacitance Change Rate = (Cell capacitance at 10 minutes after the start of voltage application - Cell capacitance at 5 seconds after the start of voltage application) / (Cell capacitance when a voltage of 20 V is applied - Cell capacitance when no voltage is applied)

Using the cell C and the cell D, the cell capacitance change rates were obtained. They were 0.00299 and 0.00588, respectively. From the results, it can be concluded that the cell D can exhibit a faster splay-to-bend transition than the cell C, and this is in agreement with the result in Example 3-2 above.

Although in the example above, the explanation has been given with regard to a case of the predetermined voltage being increased, a cell capacitance change rate in a case of the predetermined voltage being decreased may be employed as the evaluation index. Note that in this case of a cell capacitance change rate in bend-to-splay, the smaller the capacitance change rate is, the more easier the transition from splay alignment to bend alignment occurs, contrary to the case of a cell capacitance change rate in splay-to-bend.

(3) In cases of other normalized values

It is also possible to employ, as an evaluation index, a value obtained by dividing the above-described cell capacitance change rate by a cell gap.

Now, described below is an evaluation apparatus that automatically measures the evaluation indices (alignment relaxation times T3 and T4, and a cell capacitance change rate E) according to Example 3-3. The apparatus according to Example 3-3 is configured so that using the evaluation apparatus 230 according to Example 3-1, the evaluation indices are automatically measured when mode 3, mode 4, mode 5 or mode 6 is selected. Mode 3 is for obtaining an alignment relaxation time T3 in the case of the predetermined voltage being increased, and mode 4 is for obtaining an alignment relaxation time T4 in the case of the predetermined voltage being decreased. Mode 5 is for obtaining a cell capacitance change rate E in the case of the predetermined voltage being increased, and mode 6 is for obtaining a cell capacitance change rate E in the case of the predetermined voltage being decreased.

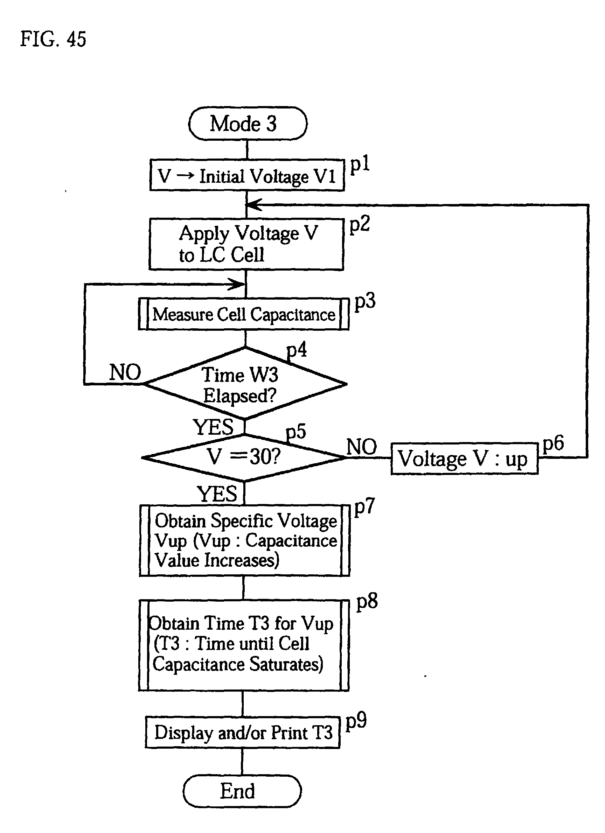

First, referring to Fig. 45, a processing operation in the case where mode 3 is selected is detailed below.

The processing of mode 3 is basically analogous to that of mode 2. The processing in stop p1 to step p6 is essentially the same as the processing in step m1 to step m6 described above, and by this processing, the capacitance changes of a liquid crystal cell at a plurality of predetermined voltages are measured regarding the case of the voltage being increased.

Next, at step p7, a specific voltage $V_{up}$ is obtained, the voltage at which a capacitance value increases. The capacitance change between the start of voltage application and approximately 5 seconds after the start of voltage application is ignored, and a capacitance increase at a measurement time of, for example, 10 seconds after the start of voltage application is measured. Specifically, for each of the predetermined applied voltages V1, V2, V3..., a capacitance value c at a certain time, for example, at 10 seconds, is obtained and compared with a capacitance value at the next measurement time, and thereby it is determined whether the capacitance shows an increase or not. Thus, a specific voltage $V_{up}$ at which a capacitance value increases is obtained.

Next, at step p8, a cell capacitance saturation time T at the specific voltage $V_{up}$ (which corresponds to the alignment relaxation time T3) is obtained. Specifically, with regard to the specific voltage $V_{up}$ obtained in step p7 above, a capacitance value at which a capacitance value $c_i$ equals to a capacitance value $c_i +1$ is obtained, and by addressing the "i +1" in the table 240, an alignment relaxation time T3 can be obtained. The alignment relaxation time T3 is then stored in the RAM 39.

Next, the alignment relaxation time T3 thus obtained is displayed and/or printed by a print and/or display input operation (step p9). Thus, by the evaluation apparatus, an alignment relaxation time T3 can be automatically measured.

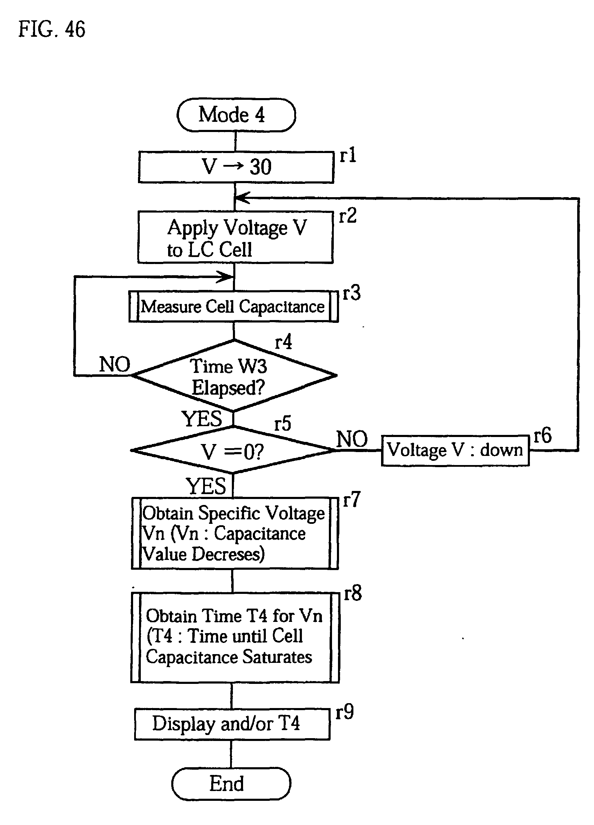

Now, referring to Fig. 46, a processing operation in the case where mode 4 is selected is detailed below.

The processing of mode 4 is basically analogous to that of mode 3. The processing in step r1 to step r6 is essentially the same as the processing in step m1 to step m6 described above, and by this processing, the capacitance changes of a liquid crystal cell at a plurality of predetermined voltages are measured regarding the case of the voltage being decreased.

Next, at step p7, a specific voltage $V_{down}$ is obtained, the voltage at which a capacitance value decreases. The capacitance change between the start of voltage application and approximately 5 seconds after the start of voltage application is ignored, and a capacitance increase at a measurement time of, for example, after 10 seconds is measured. Specifically, for each of the predetermined applied voltages Vr (Vr = 30), Vr—1, Vr—2..., a capacitance value c at a certain time, for example, at 10 seconds, is obtained and compared with a capacitance value c+1 at the next measurement time, and thereby it is determined whether the capacitance shows a decrease or not. Thus, a specific voltage $V_{down}$ at which a capacitance value decreases is obtained.

Next, at step p8, a cell capacitance saturation time T at the specific voltage $V_{down}$ (which corresponds to the alignment relaxation time T4) is obtained. Specifically, with regard to the specific voltage $V_{down}$ obtained in step r7 above, a capacitance value at which a capacitance value $c_i$ equals to a capacitance value $c_i +1$ is obtained, and by addressing the "i +1" in the table 240, an alignment relaxation time T4 can be obtained. The alignment relaxation time T4 is then stored in the RAM 239.

Next, the alignment relaxation time T4 thus obtained is displayed and/or printed by a print and/or display input operation (step p9). Thus, by the evaluation apparatus, an alignment relaxation time T4 can be automatically measured.

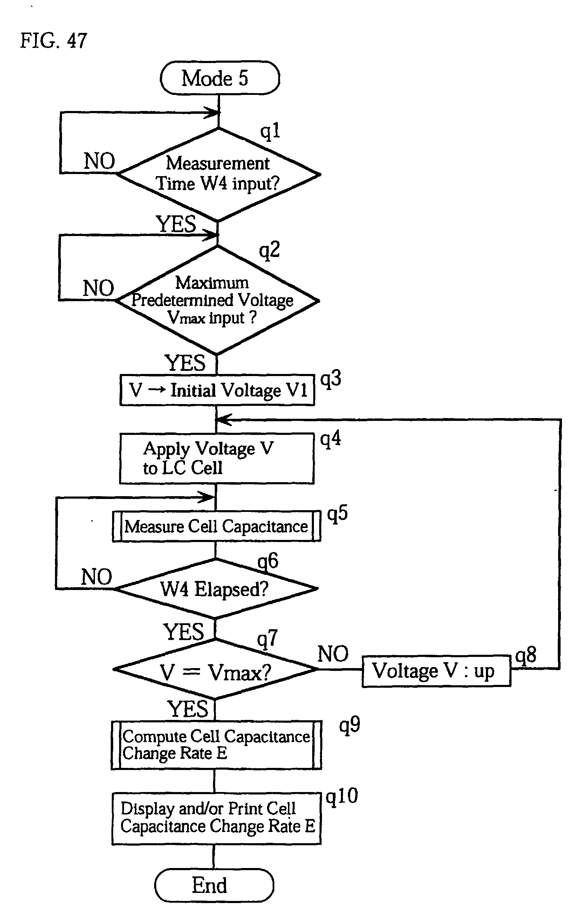

Now, referring to Fig. 47, a processing operation in the case where mode 5 is selected is detailed below. The processing of mode 5 is basically analogous to the processing of mode 3. In mode 3, however, a cell capacitance change is measured during a predetermined measurement time W3 (which is sufficiently longer than a saturation time T2), whereas in mode 5, an arbitrary time W4 can be set. This permits a reduction in a time required for the measurement. In addition, a maximum predetermined voltage $V_{max}$ can be set at an arbitrary value in mode 5. This also serves to reduce a time for the measurement.

First, an operator inputs a measurement time W4 and a maximum predetermined voltage $V_{max}$. Thereby, the processing proceeds to step q1, then step q2, and then step q3. Subsequently, by a closed loop processing of step q4 - step q5 - step q6 - step q7 - step q8 - step q4, the cell capacitance changes at a plurality of predetermined voltages from 0 V to a maximum predetermined voltage $V_{max}$ are measured regarding the case of the voltage being increased. It is noted that the closed loop processing of steps q3 to q8 is basically the same as the steps p1 to p6, except the processing regarding the measurement time and the processing regarding the maximum predetermined voltage.

Next, at step q9, a cell capacitance change rate E is computed. Note that at step q9, prior to computing the cell capacitance change rate E, a specific voltage $V_{up}$ at which capacitance increases has been obtained by the same processing as in step p7. Then, the data stored in the table 240 is read out, and a computing operation of the expression 1 above is executed. Then, the cell capacitance change rate E thus computed is printed and/or displayed (step q10). Thus, by the evaluation apparatus, a cell capacitance change rate E in the case of the predetermined voltage being increased can be automatically measured.

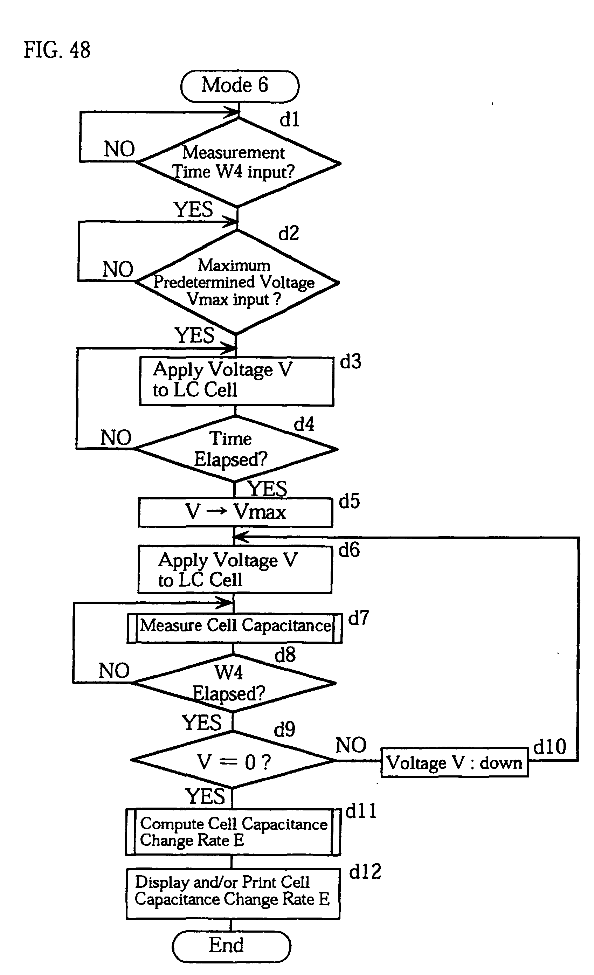

Now, referring to Fig. 48, a processing operation of mode 6 is detailed below. While in mode 3, a cell capacitance change is measured during a predetermined measurement time W3 (which is sufficiently longer than a saturation time T2), in mode 6, an arbitrary time W4 can be set. This permits a reduction in a time required for the measurement. In addition, a maximum predetermined voltage $V_{max}$ can be set at an arbitrary value in mode 6. This also serves to reduce a time for the measurement.

First, an operator inputs a measurement time W4 and a maximum predetermined voltage $V_{max}$. Thereby, the processing proceeds to step d1, and then to step d2, and in the following step d3 and d4, a voltage of 30 V is applied to the liquid crystal cell for a predetermined time. Thereby, the entire region of the liquid crystal cell is transformed to a bend alignment state.

Next, at step d5, the voltage is set to be a maximum predetermined voltage $V_{max}$. Then, by a closed loop processing of step d6 to d10, the cell capacitance changes at a plurality of predetermined voltages from a maximum predetermined voltage $V_{max}$ to 0 V are measured regarding the case of the voltage being decreased. The closed loop processing of step d6 - step d7 - step d8 - step d9 step d10 - step d6 is basically the same as the above-described step r2 - step r3 - step r4 - step r5 - step r6 - step r2, except the processing regarding the measurement time and the processing regarding the maximum predetermined voltage.

Next, at step d11, a cell capacitance change rate E is computed. Note that at step d11, prior to computing the cell capacitance change rate E, a specific voltage $V_{down}$ at which capacitance decreases has been obtained by the same processing as in step r7. Then, the data stored in the table 40 is read out, and a computing operation of the expression 1 above is executed. Then, the cell capacitance change rate E thus computed is printed and/or displayed (step d12). Thus, by the evaluation apparatus, a cell capacitance change rate E in the case of the predetermined voltage being decreased can be automatically measured.

In the evaluation apparatus described above, a cell capacitance change rate is calculated as a normalized value of an alignment relaxation time. It is to be understood, however, that the evaluation apparatus may be such that a cell gap is input in advance, and a value obtained by dividing a cell capacitance change rate by the cell gap is computed.

Thus, by using an evaluation apparatus having a configuration as described above, evaluation indices according to Example 3-3 (alignment relaxation times T3 and T4, and a cell capacitance change rate E) can be automatically measured.

**Example 3-4**

A method for evaluating a splay-to-bend transition time according to Example 3-4 involves the following steps (1) to (4). (1) Apply a voltage to a homogeneous cell showing splay alignment so as to form bend alignment. (2) Form splay alignment by reducing the applied voltage. (3) By visual observation, confirm a transition from bend alignment to splay alignment, and thereby obtain a time T4 required for the transition. (4) Using the time T4 as an index for evaluation, evaluate a splay-to-bend transition time.

By such an evaluation method according to Example 3-4, a splay-to-bend transition time can be easily evaluated in a highly reliable manner. Now, the reasons will be discussed below, together with details of the evaluation method, based on the results of the experiments by the present inventors.

Four liquid crystal cells having the same construction as that of Example 3-1 were prepared except that the gap between the substrates was 5.5 μm. Then, the liquid crystal materials LC4, LC3, LC2, and LC1 were filled into the cells to complete test cells E, F, G, and H, respectively.

Thereafter, a rectangular wave voltage of 20 V was applied to each of the cells for 2 minutes so as to entirely form bend alignment, and a time required for the entire electrode region to be transformed to splay alignment. The results were 20 seconds, 30 seconds, 43 seconds and 65 seconds respectively.

As has been described in Example 2, in a system in which the transition from splay alignment to bend alignment is easy (high speed), since an energy difference therebetween is small, a time required for the transition from bend alignment to splay alignment becomes conversely longer. Therefore, by using a transition time to splay alignment as an evaluation index, an easiness of a transition to bend alignment can be evaluated. In the case of the four cells in the experiment above, the cell in which the transition to bend alignment is easiest is the cell H, followed by the cell G, then the cell F, and finally the cell E.

The evaluation method according to Example 3-4 is advantageous in that the evaluation is easily performed. When a transition from splay alignment to bend alignment is visually observed, it is difficult to confirm the transition because a color change is very small under crossed Nicols. On the contrary, when a transition from bend alignment to splay alignment is visually observed, a color change under crossed Nicols (for example, chromatic color changes such as in blue or in yellow) is large, which makes the measurement very easy.

The reason for applying a voltage of 20 mV as above is as follows. Normally, a transition from bend alignment to splay alignment can be obtained by stopping a voltage application. However, by merely stopping a voltage application, the transition to splay alignment does not occur immediately. Because in the bend alignment state, the liquid crystal layer has been in a charged state, a considerable time is required for the liquid crystal layer to transform into splay alignment. This is undesirable for the experiment. For this reason, by applying a very small voltage of about several millivolts, such a state is created that the charge amount can be regarded as approximately 0.

In another measurement, the transition times required for the cells E, F, G, and H to transform from splay alignment to bend alignment were measured. The results are 70 seconds, 20 seconds, 3 seconds, and 1 second, respectively. Therefore, the results obtained by the evaluation method according to Example 3-4 are in agreement with the results obtained by the visual observation regarding a transition to bend alignment, and thus the validity of the present invention is evident.

In the evaluation method according to Example 3-4, unlike the splay to-bend transition, the speed greatly depends on a surface state of alignment layers. Therefore, when a uniform layer surface is ensured, the evaluation method according to example 3-4 can be a remarkably effective method for evaluating an easiness of the transition from splay alignment to bend alignment.

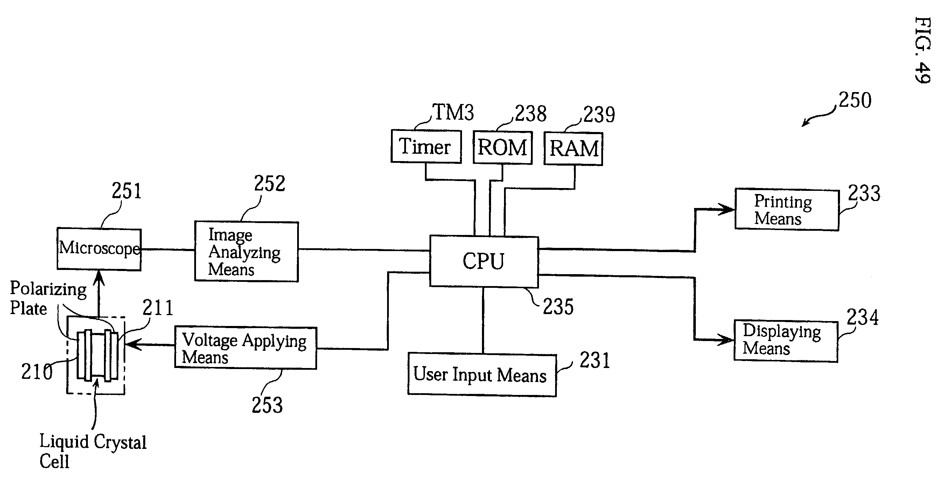

Now, described below is an apparatus that automatically measures the evaluation indices according to Example 3-4. Fig. 49 shows a block diagram showing a configuration of an evaluation apparatus according to the present example. This evaluation apparatus 250 is analogous to the foregoing evaluation apparatus 230, and like reference numerals refer to like parts. This evaluation apparatus 250 employs a microscope 251 and an image analyzing device 252 in place of the capacitance measuring unit 232 in the foregoing evaluation apparatus 230. A voltage applying means 253 is connected to a CPU 235, and by the voltage applying means 253, a voltage is applied to a liquid crystal cell. Additionally, in the evaluation apparatus 250, polarizing plates 210 and 211 are disposed on both outward surfaces of the liquid crystal cell to have a crossed Nicols relation. In the measurement, a light is projected by a light source (not shown) from the side of the polarizing plate 210, and a transition state is observed with the microscope 251 provided on the side of the other polarizer 211. Then, the observed image is analyzed by the image analyzing device 252, and the analyzed data is sent to the CPU 235.

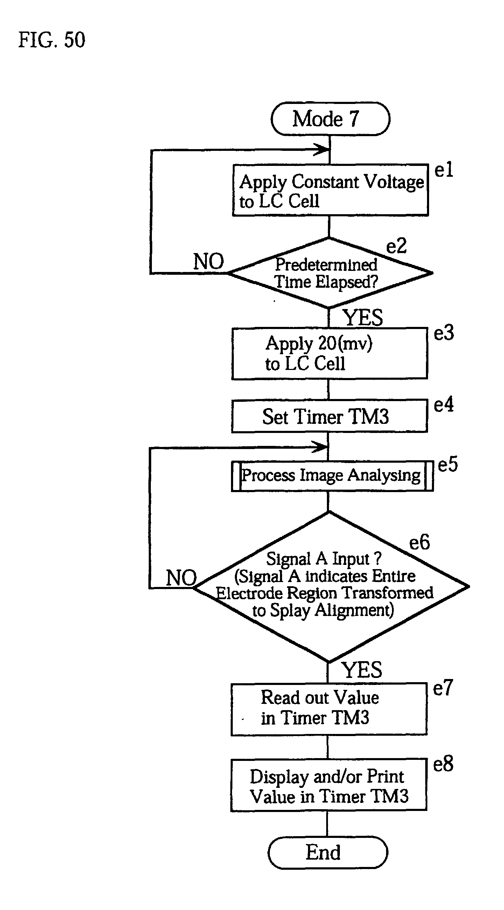

Fig. 50 shows a flow chart illustrating a processing operation of the evaluation apparatus 250. First, a voltage of, for example, 30 V is applied to the liquid crystal cell for a certain period so that the entire region of the liquid crystal cell is transformed to a bend alignment state (step e1 and step e2). Then, at step e3, a very small voltage of, for example, 20 mV is applied to the liquid crystal cell (step e3), and simultaneously a timer TM3 is set (step e4). Subsequently, at step e5, an image from the microscope 251 is taken into the image analyzing device 252 to analyze an area of color change. When the area of color change is spread over the entire electrode region, the processing proceeds to step e7, in which a current time is read out from the timer TM3. Thus, a bend-to-splay transition time is measured. Subsequently, at step e8, the transition time is displayed and/or printed. Thus, by the evaluation apparatus 250, it is made possible to automatically measure a bend-to-splay transition time, used as an evaluation index according to Example 3-4.

While the present invention and its advantages have been described in detail in connection with preferred embodiments thereof, it should be understood that various changes, modifications, and alterations can be made herein without departing from the spirit and scope of the invention as defined by the appended claims.

## INDUSTRIAL APPLICABILITY

As has been described thus far, the foregoing and other objects of the present invention are achieved by the constitutions of the invention. More specifically, the following are achieved.

(1) An optically-compensated bend (OCB) mode liquid crystal display device according to the present invention achieves a remarkably fast transition from splay alignment to bend alignment, which transition caused by applying a voltage.

(2) In an OCB mode liquid crystal display device according to the present invention, relatively mobile liquid crystal molecules located in the center of the device are inclined towards one of the alignment layers before a voltage is applied, and therefore liquid crystal molecules are easily raised at a relatively low voltage. In addition, since liquid crystal molecules on a surface of one of the alignment layers easily become parallel to the alignment surface (substrate surface), a fast splay-to-bend transition can be achieved at a relatively low voltage. Further, wide viewing angle is also achieved.

(2) Evaluation of a splay-to-bend transition time is easily achieved in a highly reliable manner. In addition, it is made possible to automatically measure evaluation indices of splay-to-bend transition time.

**Claims**

1. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

   wherein the liquid crystal material has a splay elastic constant K11 of 10 pN or less.

2. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

   wherein the liquid crystal material has a ratio K11/K33 of 1.0 or less, where K11 is a splay elastic constant of the liquid crystal material and K33 is a bend elastic constant of the liquid crystal material.

3. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

   wherein the liquid crystal material has a ratio K11/$\Delta\varepsilon$ of 1.0 pN or less, where K11 is a splay elastic constant of the liquid crystal material and $\Delta\varepsilon$ is a dielectric anisotropy of the liquid crystal material.

4. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

   wherein the liquid crystal material has a value K11 • K33 of 130 pN$^2$ or less, where K11 • K33 is the product of a splay elastic constant of the liquid crystal material and a bend elastic constant of the liquid crystal material.

5. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an

**48**

initialization whereby the splay alignment is transformed into a bend alignment by applying a voltage is performed prior to a liquid crystal display driving operation, the display driving operation being performed in a state of the bend alignment;

wherein the liquid crystal material comprises at least one liquid crystal selected from the group consisting of pyrimidine liquid crystal, dioxane liquid crystal, and biphenyl liquid crystal.

6. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material is at least one liquid crystal material selected from the group consisting of a liquid crystal material in which a splay elastic constant thereof is 10 pN or less, a liquid crystal material in which a ratio K11/K33 thereof is 1.0 or less, where K11 is a splay elastic constant of the liquid crystal material and K33 is a bend elastic constant of the liquid crystal material, a liquid crystal material in which a ratio $K11/\Delta\varepsilon$ is 1.0 pN or less, where K11 is a splay elastic constant of the liquid crystal material and $\Delta\varepsilon$ is a dielectric anisotropy of the liquid crystal material, a liquid crystal material in which $K11 \cdot K33$ is 130 $pN^2$ or lower, where $K11 \cdot K33$ is the product of a splay elastic constant of the liquid crystal material and a bend elastic constant of the liquid crystal material, and a liquid crystal material comprising at least one liquid crystal selected from the group consisting of pyrimidine liquid crystal, dioxane liquid crystal, and biphenyl liquid crystal.

7. A parallel alignment liquid crystal display device, comprising a pair of substrates, a liquid crystal layer sandwiched between the pair of substrates, a retardation plate disposed on an outside of the substrates, and a liquid crystal material having a homogeneous alignment state and constituting the liquid crystal layer, the liquid crystal display device wherein the liquid crystal layer shows a splay alignment when no voltage is being applied thereto, and an initialization whereby the splay alignment is transformed into a bend alignment by applying a voltage is performed prior to a liquid crystal display driving operation, the display driving operation being performed in a state of the bend alignment;

wherein the liquid crystal material is such that a capacitance-voltage hysteresis S thereof is $1.0 \times 10^4$ V/m or less, the hysteresis S being observed by measuring a cell capacitance while an applied voltage is being increased and decreased, and defined by the following expression (1):

$$(1)$$

$$S = \frac{\int_a^b (C_{BS} - C_{SB})dv}{(C_{max} - C_{min}) \cdot L}$$

where a [V] is a lowermost voltage value at which the hysteresis is recognized, b [V] is an uppermost voltage value at which the hysteresis is recognized, $C_{BS}$ [pF] is a cell capacitance at which a transition from bend to splay occurs, $C_{SB}$ [pF] is a cell capacitance at which a transition from splay to bend occurs, $C_{max}$ [pF] is a maximum capacitance of the cell, $C_{min}$ [pF] is a minimum capacitance of the cell, and L [m] is a thickness of the liquid crystal layer.

8. A liquid crystal display device according to claim 1, wherein a pretilt angle of the liquid crystal material on a surface of at least one of the substrates is 2 degrees or more.

9. A parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein one of the alignment layers comprises a reversed alignment region in which, when a voltage is applied, a rising direction of liquid crystal molecules is opposite to a rising direction of liquid crystal molecules in a region surrounding the reversed alignment region.

10. A parallel alignment liquid crystal display device according to claim 9, wherein at least one of the reversed alignment region is provided in each pixel.

11. A parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, in at least one of the alignment layers, a region to be treated is divided into two regions, and the one of the alignment layers is provided with a positive alignment treating region and a negative alignment treating region such that directions of splay alignment in the two divided regions differ by 180 degrees.

12. A parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein a pretilt angle at an interface with one of the alignment layers has a positive sign and a pretilt angle at an interface with the other alignment layer has a negative sign, and the pretilt angles have a different absolute value from each other.

13. A parallel alignment liquid crystal display device according to claim 12, wherein:

one of the alignment layer has a pretilt angle of 2 degrees or less; and the other alignment layer has a pretilt angle having a different sign from that of the pretilt angle of the one of the alignment layer, and an absolute value thereof is 2 degrees or more.

14. A parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, on at least a surface of one of the alignment layers being in contact with a liquid crystal layer, a protruding object or a recess-like shape is provided, the object having an inclined plane with respect to the surface of the alignment layer.

15. A parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other;

wherein, on at least a surface of one of the alignment layers being in contact with a liquid crystal layer, a protruding object is provided such that, when a voltage is applied, a rising direction of liquid crystal molecules in a region where the object is provided is opposite to a rising direction of liquid crystal molecules surrounding the region.

16. A parallel alignment liquid crystal display device according to claim 9, further comprising at least one retardation plate composed of an optical medium having a negative birefringence, the optical medium in which a principal axis thereof is hybrid aligned.

17. A parallel alignment liquid crystal display device according to claim 9, further comprising at least one positive retardation plate.

18. A method of producing a parallel alignment liquid crystal display device, comprising opposed substrates, electrodes each formed on a inner surface of each of the opposed substrates, alignment layers each provided on the electrodes, and a liquid crystal region having a splay alignment formed by treating the alignment layers such that directions of treating the alignment layers are substantially parallel to each other, the method comprising:

on a surface of at least one of the alignment layers being in contact with liquid crystal, forming a protruding object or a recess-like shaped object having an inclined plane with respect to the surface of the alignment layer.

**19.** A method of producing a parallel alignment liquid crystal display device according to claim 18, further comprising at least one of the steps of:

providing on an outward surface of a substrate at least one retardation plate having a negative birefringence in which a principal axis thereof is hybrid aligned; and
providing on an outward surface of a substrate at least one positive retardation plate.

**20.** A method for evaluating a splay-to-bend transition time comprising the steps of:

applying a constant voltage to a homogeneous liquid crystal cell showing a splay alignment, the voltage being within a range in which a transition from the splay alignment to a bend alignment is possible; and
monitoring a cell capacitance change after the start of voltage application with respect to time;
wherein an easiness of alignment transition of the cell is evaluated by using an evaluation index for evaluating a transition time from splay alignment to bend alignment, the evaluation index being a time from the start of the voltage application to an inflexion point of the capacitance change or to a saturation point of the capacitance change.

**21.** An apparatus for evaluating a splay-to-bend transition time comprising:

means for applying a constant voltage to a homogeneous liquid crystal cell showing a splay alignment, the voltage being within a range in which a transition from the splay alignment to a bend alignment is possible;
means for monitoring a cell capacitance change after the start of voltage application with respect to time;
means for computing at least one of a time from the start of the voltage application to a flexion point of the capacitance change, and a time from the start of the voltage application to a saturation point of the capacitance change; and
means for displaying and/or printing the time computed by the means for computing.

**22.** A method for evaluating a splay-to-bend transition time comprising the steps of:

applying voltage to a homogeneous liquid crystal cell showing a splay alignment while increasing the voltage at predetermined voltage values in a stepwise manner;
applying voltage to the liquid crystal cell showing a bend alignment while decreasing the voltage at the same predetermined voltage values as in increasing the voltage in a stepwise manner; and
monitoring a capacitance change of the cell with respect to time at each predetermined voltage value while the increasing the voltage and the decreasing the voltage;
wherein an easiness of alignment transition of the cell is evaluated by using an evaluation index for evaluating a transition time from splay alignment to bend alignment, the evaluation index being a size of hysteresis in a voltage-capacitance curve obtained from a result of the monitoring.

**23.** An apparatus for evaluating a splay-to-bend transition time comprising:

means for applying voltage to a homogeneous liquid crystal cell showing a splay alignment while increasing the voltage at predetermined voltage values in a stepwise manner,
means for applying voltage to the liquid crystal cell showing a bend alignment while decreasing the voltage at the same predetermined voltage values as in increasing the voltage in a stepwise manner;
means for monitoring a capacitance change of the cell with respect to time at each predetermined voltage value while the increasing the voltage and the decreasing the voltage;
means for computing a size of hysteresis in a voltage-capacitance curve obtained from a result of the monitoring, and
means for displaying and/or printing the size of hysteresis computed by the means for computing.

**24.** A method for evaluating a splay-to-bend transition time comprising the steps of:

applying voltage to a homogeneous liquid crystal cell showing a splay alignment while increasing the voltage at predetermined voltage values in a stepwise manner; and
monitoring a capacitance change of the cell with respect to time at each predetermined voltage value while the increasing the voltage;
wherein, among the predetermined voltage values, a specific voltage value at which a capacitance value of the cell increases is obtained from a result of the monitoring, and an easiness of alignment transition of the cell is evaluated by using an evaluation index for evaluating a transition time from splay alignment to bend alignment, the evaluation index being a time from the start of applying the specific voltage to a point at which a cell capacitance value at the specific voltage value is saturated into a constant capacitance value.

**25.** An apparatus for evaluating a splay-to-bend transition time comprising:

means for applying voltage to a homogeneous liquid crystal cell showing a splay alignment while increasing the voltage at predetermined voltage values in a stepwise manner,
means for monitoring a capacitance change of the cell with respect to time at each predetermined voltage value while the increasing the voltage;
computing means in which, among the predetermined voltage values, a specific voltage value at which a capacitance value of the cell increases is obtained from a result of the monitoring by the means for monitoring, and a time from the start of applying the specific voltage to a point at which a cell capacitance value at the specific voltage value is saturated into a constant capacitance value is computed; and
means for displaying and/or printing the time computed by the computing means.

**26.** A method for evaluating a splay-to-bend transition time comprising the steps of:

applying voltage to a liquid crystal cell showing bend alignment while decreasing the voltage at predetermined voltage values in a stepwise manner; and
monitoring a capacitance change of the cell with respect to time at each predetermined voltage value while the decreasing the voltage;
wherein, among the predetermined voltage values, a specific voltage value at which a capacitance value of the cell decreases is obtained from a result of the monitoring, and an easiness of alignment transition of the cell is evaluated by using an evaluation index for evaluating a transition time from splay alignment to bend alignment, the evaluation index being a time from the start of applying the specific voltage to a point at which a cell capacitance value at the specific voltage value is saturated into a constant capacitance value.

**27.** An apparatus for evaluating a splay-to-bend transition time comprising:

means for applying voltage to a liquid crystal cell showing bend alignment while decreasing the voltage at predetermined voltage values in a stepwise manner;
means for monitoring a capacitance change of the cell with respect to time at each predetermined voltage value while the decreasing the voltage;
computing means in which, among the predetermined voltage values, a specific voltage value at which a capacitance value of the cell decreases is obtained from a result of the monitoring by the means for monitoring, and a time from the start of applying the specific voltage to a point at which a cell capacitance value at the specific voltage value is saturated into a constant capacitance value is computed; and
means for displaying and/or printing the time computed by the computing means.

**28.** A method for evaluating a splay-to-bend transition time comprising the steps of:

applying voltage to a homogeneous liquid crystal cell showing a splay alignment while increasing the voltage at predetermined voltage values in a stepwise manner;
monitoring a capacitance change of the cell with respect to time at each predetermined voltage value while the increasing the voltage;
wherein, among the predetermined voltage values, a specific voltage value at which a capacitance value of the cell increases is obtained from a result of the monitoring, and an easiness of alignment transition of the cell is evaluated by using an evaluation index for evaluating a transition time from splay alignment to bend alignment, the evaluation index being a cell capacitance change rate at the specific voltage value.

**29.** An apparatus for evaluating a splay-to-bend transition time comprising:

means for applying voltage to a homogeneous liquid crystal cell showing a splay alignment while increasing the voltage at predetermined voltage values in a stepwise manner;
means for monitoring a capacitance change of the cell with respect to time at each predetermined voltage value while the increasing the voltage;
computing means in which among the predetermined voltage values, a specific voltage value at which a capacitance value of the cell increases is obtained from a result of the monitoring, and a cell capacitance change rate at the specific voltage value is computed;
means for displaying and/or printing the cell capacitance change rate computed by the computing means.

**30.** A method for evaluating a splay-to-bend transition time comprising the steps of:

applying voltage to a homogeneous liquid crystal cell showing a splay alignment while decreasing the voltage at predetermined voltage values in a stepwise manner; and
monitoring a capacitance change of the cell with respect to time at each predetermined voltage value while the decreasing the voltage;
wherein, among the predetermined voltage values, a specific voltage value at which a capacitance value of the cell decreases is obtained from a result of the monitoring, and an easiness of alignment transition of the cell is evaluated by using an evaluation index for evaluating a transition time from splay alignment to bend alignment, the evaluation index being a cell capacitance change rate at the specific voltage value.

**31.** An apparatus for evaluating a splay-to-bend transition time comprising:

means for applying voltage to a homogeneous liquid crystal cell showing a splay alignment while decreasing the voltage at predetermined voltage values in a stepwise manner;
means for monitoring a capacitance change of the cell with respect to time at each predetermined voltage value while the decreasing the voltage;
computing means in which, among the predetermined voltage values, a specific voltage value at which a capacitance value of the cell decreases is obtained from a result of the monitoring, and a cell capacitance change rate at the specific voltage is computed;
means for displaying and/or printing the cell capacitance change rate computed by the computing means.

**32.** A method for evaluating a splay-to-bend transition time comprising the steps of:

applying voltage to a homogeneous liquid crystal cell showing a splay alignment so as to form a bend alignment; and
forming a splay alignment by reducing the voltage applied to the liquid crystal cell showing the bend alignment;
wherein an easiness of alignment transition of the cell is evaluated by using an evaluation index for evaluating a transition time from splay alignment to bend alignment, the evaluation index being a time required for a transition from the bend alignment to the splay alignment, the time measured by confirming the transition from the bend alignment to the splay alignment by visual observation.

**33.** An apparatus for evaluating a splay-to-bend transition time comprising:

means for applying voltage to a homogeneous liquid crystal cell showing a splay alignment so as to form a bend alignment;
means for forming a splay alignment by reducing the voltage applied to the liquid crystal cell showing the bend alignment;
a microscope for observing an alignment state of the liquid crystal cell;
image analyzing means for determining, by analyzing an image obtained by the microscope, whether a color change is spread over an entire region of the liquid crystal cell; and
means for displaying and/or printing a time required for a transition from bend alignment to splay alignment in response to a signal from the image analyzing means.

FIG. 1

FIG. 2

FIG. 3

(a)                    (b)                    (c)

FIG. 4

FIG. 5

EP 1 070 981 A1

FIG. 6

FIG. 7

FIG. 8

FIG. 9

FIG. 10

FIG. 11

(a)                    (b)                    (c)

Rubbing Directions for Alignment Layer 103

Rubbing Directions for Alignment Layer 106

FIG. 12

Rubbing Direction for Upper Substrate

Rubbing Direction for Lower Substrate

FIG. 13

101
102
103

106
107
108

S1        S        S2

FIG. 14

FIG. 15

Rubbing Directions
for Upper Substrate

Rubbing Directions
for Lower Substrate

FIG. 16

Alignment Dividing Position by Rubbing Treatment

101

102
103

106
107

108

Alignment Dividing Position by Rubbing Treatment

FIG. 17

| Splay Alignment Region | Boundary Region | Homogeneous Region | Boundary Region | Splay Alignment Region |
|:---:|:---:|:---:|:---:|:---:|
| S1 | S | S2 | S | S1 |

FIG. 18

FIG. 19

FIG. 20

813

107

108

FIG. 21

913

107
108

FIG. 22

FIG. 23

Principal Axis n$_z$ of Negative Uniaxial Retardation Plate

Axis of Polarization in Lower Polarizing Plate

Rubbing Direction for Upper Substrate

Rubbing Direction for Lower Substrate

Axis of Polarization in Upper Polarizing Plate

Principal Axis n$_x$ of Positive Uniaxial Retardation Plate

Orthogonal Projection of Principal Axis of Retardation Plate to Substrate Plane (Retardation Plate being composed of Optical Medium having a Negative Birefringence and which Principal Axis being Hybrid Aligned)

FIG. 24

FIG. 25

FIG. 26

(a)  V=0

(b)  V=V1

(c)  V=V2

(d)  V=V3

(e)  V=V4

(f)  V=V5

(g)  V=V5

FIG. 27

106

FIG. 28

913

106

FIG. 29

Light

Hybrid Alignment

104

152

FIG..30

FIG. 31

FIG. 32

FIG. 33

(a)

201

220

(b)

221

201

220

(c)

220

201

221

220

FIG. 34

FIG. 35

|  | Applied Voltage | Time ti | Capacitance Value ci |
|---|---|---|---|
| Address 「1」 | V1 | t 1 | c 1 |
| Address 「2」 | V2 | t 2 | c 2 |
| Address 「3」 | V3 | t 3 | c 3 |
| ⋮ | ⋮ | ⋮ | ⋮ |

FIG. 36

```
                    ┌─────────┐
                    │  Start  │
                    └─────────┘
                         │
      ┌──────────────────┤
      │  ┌───────────────┤
      │  │            ◇ S1
      │  │      NO  ╱ Mode Input ╲
      │  └────────  ╲  Provided? ╱
      │             ╲     ╱
      │              YES  S2
      │            ╱ Mode 1 ? ╲──YES──┌──────────┐
      │            ╲          ╱       │ Execute  │
      │             ╲   ╱             │ Mode 1   │
      │              NO  S3           └──────────┘
      │            ╱ Mode 2 ? ╲──YES──┌──────────┐
      │            ╲          ╱       │ Execute  │
      │             ╲   ╱             │ Mode 2   │
      │              NO  S4           └──────────┘
      │            ╱ Mode 3 ? ╲──YES──┌──────────┐
      │            ╲          ╱       │ Execute  │
      │             ╲   ╱             │ Mode 3   │
      │              NO  S5           └──────────┘
      │            ╱ Mode 4 ? ╲──YES──┌──────────┐
      │            ╲          ╱       │ Execute  │
      │             ╲   ╱             │ Mode 4   │
      │              NO  S6           └──────────┘
      │            ╱ Mode 5 ? ╲──YES──┌──────────┐
      │            ╲          ╱       │ Execute  │
      │             ╲   ╱             │ Mode 5   │
      │              NO  S7           └──────────┘
      │            ╱ Mode 6 ? ╲──YES──┌──────────┐
      │            ╲          ╱       │ Execute  │
      │             ╲   ╱             │ Mode 6   │
      │              NO               └──────────┘
      └───────────────┘
```

FIG. 37

```
                    ( Mode1 )
                        │
        ┌───────────────────────────────┐  n1
        │  Apply Voltage Va to          │
        │  LC Cell                      │
        └───────────────────────────────┘
                        │
        ┌───────────────────────────────┐  n2
        │  Set Timer TM1                │
        │  Set Timer TM2                │
        └───────────────────────────────┘
                        │
        ┌──────────────►│
        │  ┌───────────►│
        │  │            ▼                   n3
        │  │  NO   ◇ Time Period W1 ◇
        │  └──────◇ Elapsed ?       ◇
        │            ◇                ◇
        │                │ YES
        │        ┌───────────────────────────────┐  n4
        │        │  Read out Cell Capacitance ci │
        │        └───────────────────────────────┘
        │                │
        │        ┌───────────────────────────────┐  n5
        │        │  Read out Current Time ti     │
        │        │  from Timer TM2               │
        │        └───────────────────────────────┘
        │                │
        │        ┌───────────────────────────────┐  n6
        │        │  Store ci and ti              │
        │        └───────────────────────────────┘
        │                │
        │        ┌───────────────────────────────┐  n7
        │        │  Reset Timer TM1              │
        │        └───────────────────────────────┘
        │                │                        n8
        │       NO   ◇ Time Period W2 ◇
        └───────────◇ Elapsed ?       ◇
                        ◇             ◇
                        │ YES
        ┌───────────────────────────────┐
        │  Compute Evaluation Index     │
        └───────────────────────────────┘
```

FIG. 38

```
        ╭─────────────────────╮
        │  Evaluation Index   │
        │     Computing       │
        ╰─────────────────────╯
                  │
        ┌─────────────────────┐  n9
        │      k → 1          │
        └─────────────────────┘
                  │
                  │←──────────────────────────────────┐
        ┌─────────────────────┐  n10                  │
        │  Read out Ck and Ck+1│                       │
        │  from Table         │                       │
        └─────────────────────┘                       │
                  │                                    │
             n11  │                          n12       │
              ╱───────────╲     NO   ┌─────────────────┐
             ╱  Ck+1 > Ck  ╲─────────│   k → k + 1     │
             ╲             ╱         └─────────────────┘
              ╲───────────╱
                  │ YES
        ┌─────────────────────┐  n13
        │Read out tk (Time to Inflexion│
        │Point) from Table    │
        └─────────────────────┘
                  │
        ┌─────────────────────┐  n14
        │   Store tk in RAM   │
        └─────────────────────┘
                  │
        ┌─────────────────────┐  n15
        │       k → m         │
        └─────────────────────┘
                  │
                  │──→
        ┌─────────────────────┐  n16
        │      m → m + 1      │
        └─────────────────────┘
                  │
        ┌─────────────────────┐  n17
        │  Read out Cm and Cm+1│
        │  from Table         │
        └─────────────────────┘
                  │
             n18  │
        NO   ╱───────────╲
        ─────╱  Cm = Cm+1 ╲
             ╲             ╱
              ╲───────────╱
                  │ YES
        ┌─────────────────────┐  n19
        │Read out tk (Time to Saturation│
        │Point) from Table    │
        └─────────────────────┘
                  │
        ┌─────────────────────┐  n20
        │   Store tm in RAM   │
        └─────────────────────┘
```

```
                  │←──────────────────────────┐
             n21  │                            │
        NO   ╱───────────╲                     │
        ─────╱  Display    ╲                    │
        │    ╲  Command?    ╱                   │
        │     ╲───────────╱                    │
        │          │ YES                        │
        │  ┌─────────────────────┐  n22         │
        │  │   Display tk, tm    │              │
        │  └─────────────────────┘              │
        │          │                            │
        │     ╭──────────╮                      │
        │     │   End    │                      │
        │     ╰──────────╯                      │
        │                                       │
        │     n23                               │
        ╱───────────╲     NO                    │
       ╱   Print      ╲───────────────────────┘
       ╲   Command?    ╱
        ╲───────────╱
             │ YES
        ┌─────────────────────┐  n24
        │    Print tk, tm     │
        └─────────────────────┘
             │
        ╭──────────╮
        │   End    │
        ╰──────────╯
```

FIG. 39

FIG. 40

FIG. 41

FIG. 42

95

FIG. 43

FIG. 44

```
                    ( Mode 2 )
                        │
              ┌─────────────────────┐
              │ V →Initial Voltage V1 │ m1
              └─────────────────────┘
                        │            ◄──────────────────┐
              ┌─────────────────────┐                    │
              │ Apply Voltage V to LC Cell │ m2           │
              └─────────────────────┘                    │
                        │  ◄───┐                          │
              ┌─────────────────────┐                    │
         ┌──►│ Measure Cell Capacitance │ m3             │
         │    └─────────────────────┘                    │
         │              │        m4                       │
         │           ╱     ╲                              │
    NO   │         ╱  Time W3  ╲                          │
    ─────┘        ╱   Elapsed?   ╲                        │
                  ╲             ╱                          │
                    ╲        ╱                            │
                    YES │      m5                          │
                   ╱      ╲          NO   ┌──────────────┐│
                 ╱  V =30?  ╲ ─────────► │ Voltage V : up │ m6
                  ╲        ╱              └──────────────┘
                    ╲    ╱
                    YES │  ◄─────────────────┐
              ┌─────────────────────┐        │
              │ Voltage V : down │ m7         │
              └─────────────────────┘        │
                        │                     │
              ┌─────────────────────┐         │
              │ Apply Voltage V to  │ m8      │
              │ LC Cell             │         │
              └─────────────────────┘         │
                        │  ◄───┐              │
              ┌─────────────────────┐         │
         ┌──►│ Measure Cell Capacitance │ m9  │
         │    └─────────────────────┘         │
         │              │       m10           │
         │           ╱     ╲                  │
    NO   │         ╱  Time W3  ╲              │
    ─────┘        ╱   Elapsed?   ╲            │
                  ╲             ╱              │
                    ╲        ╱                │
                    YES │     m11             │
                   ╱      ╲       NO          │
                 ╱  V =0?   ╲ ────────────────┘
                  ╲        ╱
                    ╲    ╱
                    YES │
    ┌──────────────────────────────┐
    │ Compute Average Capacitance   │ m12
    │ Cm for 595-600 sec. from      │
    │ Start of Voltage Application  │
    └──────────────────────────────┘
```

```
    ┌─────────────────────┐
    │ Compute Hysteresis  │ m13
    │ H in C-V Curves     │
    └─────────────────────┘
              │
    ┌─────────────────────┐
    │ Display and/or Print │ m14
    │ Hysteresis H         │
    └─────────────────────┘
              │
          ( End )
```

FIG. 45

```
                    ┌──────────────────┐
                    │      Mode 3       │
                    └──────────────────┘
                             │
                  ┌──────────────────────┐  p1
                  │ V → Initial Voltage V1│
                  └──────────────────────┘
                             │  ◄──────────────────────────┐
                  ┌──────────────────────┐  p2             │
                  │   Apply Voltage V     │                │
                  │      to LC Cell       │                │
                  └──────────────────────┘                │
                             │                             │
              ┌─────► ┌──────────────────────┐  p3         │
              │       │ Measure Cell Capacitance│           │
              │       └──────────────────────┘             │
              │                  │                          │
              │            ◇ p4                             │
              │  NO      ╱  Time W3  ╲                       │
              └────────╱   Elapsed?   ╲                      │
                        ╲            ╱                       │
                          ╲        ╱                         │
                           YES│                              │
                        ◇  p5           NO  ┌────────────┐ p6│
                      ╱  V =30?  ╲──────────│Voltage V : up├──┘
                        ╲       ╱           └────────────┘
                          YES│
                  ┌──────────────────────┐  p7
                  │ Obtain Specific Voltage│
                  │ Vup (Vup : Capacitance │
                  │   Value Increases)     │
                  └──────────────────────┘
                             │
                  ┌──────────────────────┐  p8
                  │ Obtain Time T3 for Vup │
                  │ (T3 : Time until Cell  │
                  │  Capacitance Saturates)│
                  └──────────────────────┘
                             │
                  ┌──────────────────────┐  p9
                  │ Display and/or Print T3│
                  └──────────────────────┘
                             │
                    ┌──────────────────┐
                    │       End        │
                    └──────────────────┘
```

FIG. 46

```
                    ┌──────────────┐
                    │   Mode 4     │
                    └──────┬───────┘
                           │
              ┌────────────┴────────────┐  r1
              │        V → 30           │
              └────────────┬────────────┘
                           │◄─────────────────────────────────┐
              ┌────────────┴────────────┐  r2                  │
              │   Apply Voltage V       │                      │
              │      to LC Cell         │                      │
              └────────────┬────────────┘                      │
          ┌───────────────►│                                   │
          │   ┌────────────┴────────────┐  r3                  │
          │   │ Measure Cell Capacitance│                      │
          │   └────────────┬────────────┘                      │
          │                │        r4                         │
          │          ◇─────┴──────◇                            │
      NO  │        ◇   Time W3      ◇                          │
          └───────◇     Elapsed?     ◇                         │
                    ◇               ◇                          │
                      ◇───────┬───◇                            │
                       YES     │      r5                       │
                         ◇─────┴─────◇          ┌──────────────┴──┐  r6
                       ◇    V = 0?    ◇──── NO ──│ Voltage V : down│
                         ◇─────┬─────◇          └─────────────────┘
                          YES   │
              ┌────────────────┴────────┐  r7
              │ Obtain Specific Voltage │
              │ Vn (Vn : Capacitance    │
              │ Value Decreses)         │
              └────────────┬────────────┘
              ┌────────────┴────────────┐  r8
              │ Obtain Time T4 for Vn   │
              │ (T4 : Time until Cell   │
              │ Capacitance Saturates   │
              └────────────┬────────────┘
              ┌────────────┴────────────┐  r9
              │   Display and/or T4     │
              └────────────┬────────────┘
                    ┌───────┴──────┐
                    │     End      │
                    └──────────────┘
```

FIG. 47

Mode 5

q1 — Measurement Time W4 input?
NO (loop back)
YES

q2 — Maximum Predetermined Voltage Vmax input ?
NO (loop back)
YES

q3 — V → Initial Voltage V1

q4 — Apply Voltage V to LC Cell

q5 — Measure Cell Capacitance

q6 — W4 Elapsed?
NO (loop back)
YES

q7 — V = Vmax?
NO → q8 — Voltage V : up
YES

q9 — Compute Cell Capacitance Change Rate E

q10 — Display and/or Print Cell Capacitance Change Rate E

End

FIG. 48

Mode 6

d1 Measurement Time W4 input?
NO → (loop back)
YES ↓

d2 Maximum Predetermined Voltage Vmax input ?
NO → (loop back)
YES ↓

d3 Apply Voltage V to LC Cell

d4 Time Elapsed?
NO → (loop back)
YES ↓

d5 V → Vmax

d6 Apply Voltage V to LC Cell

d7 Measure Cell Capacitance

d8 W4 Elapsed?
NO → (loop back)
YES ↓

d9 V = 0 ?
NO → d10 Voltage V : down
YES ↓

d11 Compute Cell Capacitance Change Rate E

d12 Display and/or Print Cell Capacitance Change Rate E

End

FIG. 49

250

233 Printing Means

234 Displaying Means

239 RAM
238 ROM
TM3 Timer
235 CPU
231 User Input Means

252 Image Analyzing Means

251 Microscope

253 Voltage Applying Means

211 Polarizing Plate

210 Liquid Crystal Cell

FIG. 50

```
                    ┌────────────────┐
                    │     Mode 7     │
                    └────────────────┘
                             │
      ┌──────────────►┌──────────────────────┐  e1
      │               │ Apply Constant Voltage│
      │               │ to LC Cell            │
      │               └──────────────────────┘
      │                        │
      │          NO      ╱────────────╲  e2
      ├──────────────────  Predetermined  ────
      │                  ╲ Time Elapsed? ╱
      │                    ╲────────────╱
      │                        │ YES
      │               ┌──────────────────────┐  e3
      │               │ Apply 20(mv)          │
      │               │ to LC Cell            │
      │               └──────────────────────┘
      │                        │
      │               ┌──────────────────────┐  e4
      │               │ Set Timer TM3         │
      │               └──────────────────────┘
      │                        │
      │  ┌──────────►┌──────────────────────┐  e5
      │  │           │ Process Image Analysing│
      │  │           └──────────────────────┘
      │  │                     │
      │  │        ╱──────────────────────────╲  e6
      │  │       ╱   Signal A Input ?          ╲
      │  │  NO  ╱  (Signal A indicates Entire   ╲
      │  └──────  Electrode Region Transformed  
      │        ╲      to Splay Alignment)      ╱
      │         ╲──────────────────────────╱
      │                     │ YES
      │               ┌──────────────────────┐  e7
      │               │ Read out Value        │
      │               │ in Timer TM3          │
      │               └──────────────────────┘
      │                     │
      │               ┌──────────────────────┐  e8
      │               │ Display and/or Print  │
      │               │ Value in Timer TM3    │
      │               └──────────────────────┘
      │                     │
                    ┌────────────────┐
                    │      End       │
                    └────────────────┘
```

## INTERNATIONAL SEARCH REPORT

| International application No. |
|---|
| PCT/JP99/01863 |

**A. CLASSIFICATION OF SUBJECT MATTER**
Int.Cl⁶ G02F1/133, G02F1/1337

According to International Patent Classification (IPC) or to both national classification and IPC

**B. FIELDS SEARCHED**

Minimum documentation searched (classification system followed by classification symbols)
Int.Cl⁶ G02F1/133, G02F1/1337

Documentation searched other than minimum documentation to the extent that such documents are included in the fields searched
Jitsuyo Shinan Koho          1926-1999
Kokai Jitsuyo Shinan Koho    1971-1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 9-176645, A (Chisso Corp.),<br>8 July, 1997 (08. 07. 97),<br>Page 7, left column, lines 25 to 27, right column,<br>line 20 to page 8, right column, line 3 ; page 9, right<br>column, lines 2 to 40 ; page 12, 13th line from the<br>bottom to page 13, right column, line 24<br>(Family: none) | 1-6<br>5, 6 |
| Y<br>A | JP, 8-87013, A (Tatsuo Uchida),<br>2 April, 1996 (02. 04. 96),<br>Page 2, left column, lines 2 to 7, 35 to right column,<br>line 8 ; Figs. 1, 2 (Family: none) | 2, 6<br>7, 8, 20-23 |
| Y<br>A | JP, 9-146086, A (Toshiba Corp.),<br>6 June, 1997 (06. 06. 97),<br>Page 4, right column, line 30 to page 5, left column,<br>line 43 ; page 9, right column, line 50 to page 10,<br>left column, line 47 ; Figs. 1, 2(a), (b),<br>7(a) to (c) (Family: none) | 2, 6<br>7, 8, 20-23 |

| [X] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 27 May, 1999 (27. 05. 99) | 8 June, 1999 (08. 06. 99) |

| Name and mailing address of the ISA/<br>Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP99/01863

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 5-303099, A (Matsushita Electric Industrial Co., Ltd.), 16 November, 1993 (16. 11. 93), Page 4, right column, line 50 to page 5, left column, line 22 ; Figs. 1, 8 (Family: none) | 2, 6 |
| Y | JP, 63-41589, A (Hisato Sato), 22 February, 1988 (22. 02. 88), Page 2, upper right column, lines 10 to 13, lower left column, line 4 to lower right column, line 4 & EP, A, 255956 & KR, B, 9004708 | 5, 6 |
| A | JP, 9-90433, A (Toshiba Corp.), 4 April, 1997 (04. 04. 97), Page 2, right column, lines 10 to 34 (Family: none) | 7, 8, 20-33 |
| X | JP, 6-43462, A (Fujitsu Ltd.), 18 February, 1994 (18. 02. 94), Page 3, left column, line 41 to right column, line 30 ; Figs. 1(A), (B), 2 (Family: none) | 9, 10 |
| X | JP, 8-320490, A (Toshiba Corp.), 3 December, 1996 (03. 12. 96), Page 6, left column, lines 33 to 41 ; page 7, left column, line 16 to right column, line 2 ; Figs. 4(A), (B) (Family: none) | 9, 10 |
| X | JP, 8-179326, A (Matsushita Electric Industrial Co., Ltd.), 12 July, 1996 (12. 07. 96), Page 3, right column, lines 1 to 24 ; Fig. 7 (Family: none) | 9, 10 |
| P | JP, 10-232399, A (Sharp Corp.), 2 September, 1998 (02. 09. 98), Page 2, right column, lines 2 to 28 ; Fig. 7 (Family: none) | 11, 14, 15, 18 |

Form PCT/ISA/210 (continuation of second sheet) (July 1992)